# EUROPÄISCHE PATENTANMELDUNG

(11) **EP 4 699 959 A1**
(43) Veröffentlichungstag der Anmeldung: **25.02.2026**
(21) Anmeldenummer: 25195183.6
(22) Anmeldetag: 11.08.2025
(51) Int. Cl.: B65G 1/04

(54) **ÜBERGABESTATION, SOWIE WARENLAGERSYSTEM MIT EINER ÜBERGABESTATION**

(30) Priorität: 19.12.2024 EP 24221340; 10.06.2025 EP 25181858; 24.06.2025 WO PCT/EP2025/067802; 21.07.2025 EP 25190833; 24.07.2025 EP 25191703; 22.08.2024 EP 24195996
(71) Anmelder: FlexStore Systems UG, 83093 Bad Endorf (DE)
(72) Erfinder: HROH, Sascha, 83098 Brannenburg (DE); FORSTER, Florian, 83093 Bad Endorf (DE)

(57) **Zusammenfassung**

Die Erfindung betrifft ein Warenlagersystem (20) aufweisend: mehrere vertikale Schächte (32), wobei zumindest einer der Schächte (32) zumindest abschnittweise, dazu ausgebildet ist, gleichzeitig mehrere voneinander beabstandete Lagergutträger (12), inklusiver etwaiger auf den Lagergutträgern (12) vorhandener Lagergüter (14), übereinander nicht-gestapelt zu halten, mindestens ein Bedienfahrzeug (18), das dazu ausgebildet ist, Lagergutträger (12) in einen Schacht (32) einzulagern und/oder aus einem Schacht (32) auszulagern, und eine Übergabestation (10) mit einer Übergabeeinheit (34) zur Übergabe von mindestens einem Lagergutträger (12) an das mindestens eine Bedienfahrzeug (18) oder zur Aufnahme von mindestens einem Lagergutträger (12) von dem mindestens einen Bedienfahrzeug (18), wobei die Übergabeeinheit (34) dazu ausgebildet ist, gleichzeitig mehrere voneinander beabstandete Lagergutträger (12), inklusiver etwaiger auf den Lagergutträgern (12) vorhandener Lagergüter (14), übereinander nicht-gestapelt zu halten; wobei das mindestens eine Bedienfahrzeug (18) eine Aufnahmeeinheit (22) aufweist, die dazu ausgebildet ist, mindestens einen Lagergutträger (12), inklusive etwaiger auf den Lagergutträgern (12) vorhandener Lagergüter (14) an die Übergabestation (10) zu übergeben und/oder mindestens einen Lagergutträger (12), inklusive etwaiger auf den Lagergutträgern (12) vorhandener Lagergüter (14) von der Übergabestation (10) zu übernehmen.

## Beschreibung

### Technisches Gebiet der Erfindung

Die vorliegende Erfindung betrifft eine Übergabestation für ein Warenlagersystem (Lagerlogistiksystem), beispielsweise ein Blocklagersystem, mit mehreren vertikalen Schächten zur Übergabe von Lagergutträgern an ein Bedienfahrzeug oder zur Aufnahme von Lagergutträger von einem Bedienfahrzeugs des Warenlagersystems. Die vorliegende Erfindung betrifft ferner ein Warenlagersystem mit mehreren vertikalen Schächten und einer Übergabestation.

### Hintergrund

In Warenlagersystemen wie automatisierte Lagerlogistiksysteme oder Blocklagersysteme, beispielsweise mit variabler Stellplatzhöhe, besteht eine Herausforderung darin, dass mit Lagergütern beladene Lagergutträger (z. B. Trays) effizient an ein Bedienfahrzeug übergeben werden müssen oder von einem Bedienfahrzeug aufgenommen werden müssen.

In konventionellen Übergabestationen werden die Lagergutträger mit ihren Lagergütern in der Regel einzeln bereitgestellt und aufgenommen. Dies führt dazu, dass die Weiterverarbeitung durch ein Bedienfahrzeug erschwert ist und/oder ineffizient ist.

Aufgabe der Erfindung ist es daher, eine Übergabestation bereitzustellen, die die im Stand der Technik bekannten Nachteile zumindest teilweise überwindet. Weiter ist es eine Aufgabe der vorliegenden Erfindung ein Warenlagersystem mit einer Übergabestation bereitzustellen, die die im Stand der Technik bekannten Nachteile zumindest teilweise überwindet.

### Lösung des Problems

Diese und andere Aufgaben, die durch Lesen der vorliegenden Beschreibung offensichtlich werden, werden durch die Gegenstände der unabhängigen Ansprüche gelöst. Bevorzugte Ausgestaltungen sind in den abhängigen Ansprüchen angegeben.

Ein erster Aspekt der vorliegenden Erfindung betrifft eine Übergabestation für ein Warenlagersystem mit mehreren vertikalen Schächten, wobei zumindest einer der Schächte zumindest abschnittsweise dazu ausgebildet ist, gleichzeitig mehrere voneinander beabstandete Lagergutträger, inklusiver etwaiger auf den Lagergutträgern vorhandener Lagergüter, übereinander nicht-gestapelt zu halten. Die Übergabestation weist auf: eine Übergabeeinheit zur Übergabe von Lagergutträgern an ein Bedienfahrzeug (Bediengerät) oder zur Aufnahme von Lagergutträgern von einem Bedienfahrzeug des Warenlagersystems, wobei die Übergabeeinheit dazu ausgebildet ist, gleichzeitig mehrere in der Übergabeeinheit aufgenommene Lagergutträger, inklusive etwaiger auf den Lagergutträgern vorhandener Lagergüter, voneinander beabstandet und übereinander nicht-gestapelt zu halten.

Mit der Bezeichnung nicht-gestapelt ist gemeint, dass die in dem Schacht und/oder in der Übergabeeinheit und/oder der Aufnahmeeinheit eines (Mehrfach-)Bedienfahrzeugs angeordneten Lagergutträger untereinander nicht abgestützt sind. Mit anderen Worten stützen sich die aufgenommenen Lagergutträger nicht aufeinander ab, wie es bei einem Stapel der Fall ist, und/oder berühren die auf einem Lagergutträger befindlichen Lagergüter nicht den darüber oder darunter befindlichen Lagergutträger.

Mit nochmals anderen Worten ist mit dem Begriff nicht-gestapelt vorzugsweise gemeint, dass in dem Schacht und/oder in der Übergabeeinheit und/oder in der Aufnahmeeinheit eines Bedienfahrzeugs (z.B. Mehrfachfahrzeugs) Lagergutträger angeordnet sind, auf denen jeweils ein oder mehrere Lagergüter angeordnet sind und/oder sein können. Jeder der Lagergutträger hat eine Gesamthöhe, die inklusive etwaiger auf dem Lagergutträger aufgenommener Lagergüter bestimmt wird, wobei die Gesamthöhen der Lagergutträger gleich oder unterschiedlich sein können. Die Lagergutträger sind nicht aufeinander abgestützt und/oder berühren einander nicht, auch nicht über etwaig auf den Lagergutträgern angeordneten Lagergüter.

Die Begriffe "vertikal" bzw. "horizontal" bezeichnen im Rahmen der vorliegenden Erfindung Richtungen, die in Bezug auf das Warenlagersystem hauptsächlich und/oder in etwa vertikal bzw. horizontal sind. Insbesondere sind damit auch Richtungen umfasst, die eine Abweichung von maximal 15°, bevorzugt maximal 10°, weiter bevorzugt maximal 5°, weiter bevorzugt maximal 2° zur Vertikalen bzw. Horizontalen aufweisen.

Ein Schacht bezeichnet im Rahmen der vorliegenden Erfindung eine Konstruktion, insbesondere einen begrenzenden Raum, in den Lagergutträger eingelagert und/oder in dem Lagergutträger vertikal bewegt werden können. Insbesondere kann ein Schacht bevorzugt von einer oder mehreren Seitenpfeilern bzw. Seitenwänden und/oder einer oder mehreren Eckpfeilern begrenzt sein. Anders ausgedrückt kann ein Schacht vorzugsweise als dreidimensionaler, sich bevorzugt vertikal erstreckender, Raum definiert werden, der von mindestens zwei Pfeilern, und/oder von mindestens einer Seitenwand und mindestens einem Pfeiler, und/oder von mindestens zwei Seitenwänden begrenzt wird. Eine Seitenwand kann bevorzugt eine Platte oder ein Pfeiler sein. Ein Pfeiler kann bevorzugt einen rechteckigen, runden, L-förmigen, C-förmigen, U-förmigen, Z-förmigen oder kreuzförmigen Querschnitt aufweisen und sich weiter bevorzugt säulenartig in die Höhe erstrecken. Ein Pfeiler kann entweder als Eckpfeiler ausgebildet sein oder als Seitenpfeiler und vorzugsweise zur Begrenzung von mindestens einem Schacht oder von zwei bis vier benachbarten Schächten beitragen. Bevorzugt ist jeder Schacht definiert durch mindestens zwei, weiter bevorzugt vier, Eckpfeiler und/oder durch mindestens zwei, weiter bevorzugt vier, Seitenwände bzw. Seitenpfeiler, insbesondere durch einen Freiraum zwischen den Eckpfeilern und/oder Seitenwänden, in welchem ein Lagergutträger vertikal verfahrbar ist und welcher eine annährend gleich große Grundfläche wie der Lagergutträger aufweist.

Der Schacht kann (bzw. die Schächte können) bevorzugt eine vieleckige, insbesondere eine rechteckige, bevorzugt quadratische, eine kreisförmige und/oder eine ovale Grundfläche aufweisen, wobei die Grundfläche bevorzugt in einer Draufsicht auf den Schacht definierbar ist. Der Schacht kann entsprechend einen korrespondierenden dreidimensionalen Freiraum bilden, beispielsweise also quaderförmig und/oder zylindrisch ausgebildet sein. Der Schacht kann insbesondere von oben und/oder von unten zugänglich sein. Anders ausgedrückt kann der Schacht derart ausgebildet sein, sodass Lagergutträger von unten und/oder von oben in den Schacht eingebracht bzw. aus dem Schacht entnommen werden können.

Die Mehrzahl von Schächten ist vorzugsweise direkt aneinander angrenzend angeordnet. Insbesondere kann bevorzugt sein, dass keine Gassen für ein Bediengerät zwischen einzelnen Schächten aus der Mehrzahl von Schächten vorgesehen sind. Die Mehrzahl vertikaler Schächte können beispielsweise eine Blocklageranordnung bilden. Dies kann bevorzugt zu hoher Lagerdichte im Warenlagersystem beitragen. Bevorzugt kann in einem Bereich unter oder über der Mehrzahl von Schächten ein Verfahrbereich für Bediengeräte vorgesehen sein.

Die erfindungsgemäße Übergabestation beruht zumindest teilweise auf der Erkenntnis, dass durch die übereinander nicht-gestapelte Anordnung der Lagergutträger in der Übergabestation Bedienfahrzeuge eines Warenlagersystem einfacher und dadurch effizienter auf die Lagergutträger und die darauf befindlichen Lagergüter zugreifen können. Die Bedienfahrzeuge können dabei ein oder mehrere der Lagergutträger an die Übergabestation übergeben oder von der Übergabestation übernehmen.

Bevorzugt ist die Übergabeeinheit ferner dazu ausgebildet, mehrere übereinander nicht-gestapelt gehaltene Lagergutträger dem Bedienfahrzeug gleichzeitig zu übergeben und/oder mehrere Lagergutträger vom Bedienfahrzeug übereinander nicht-gestapelt gleichzeitig zu übernehmen.

Diese bevorzugte Ausgestaltung beruht auf der Erkenntnis, dass bekannte Übergabestationen in der Regel auf die Einzelübergabe oder auf immer gleiche Behälterhöhen (Lagergutthöhen) ausgelegt sind. Es wurde erkannt, dass derartige diese bekannten Übergabestationen nicht in der Lage sind, mehrere Lagergutträger gleichzeitig in individuellen, voneinander beabstandeten Höhenlagen so vorzuhalten, dass diese in einem einzigen Aufnahmezyklus durch ein dafür vorgesehenes Bedienfahrzeug übergeben werden können. Das Bedienfahrzeug kann hierfür ein sogenanntes Mehrfachfahrzeug sein, das dazu ausgebildet ist, gleichzeitig mehrere übereinander nicht-gestapelte Lagergutträger von der Übergabestation aufzunehmen und/oder dieser zu übergeben.

Bevorzugt weist die Übergabeeinheit mehrere Halteelemente auf, die derart angeordnet sind, dass die mehreren Lagergutträger voneinander beabstandet gehalten sind.

Bevorzugt sind die Halteelemente in vertikaler Richtung mit einem vorbestimmten Abstand und/oder mit einem vorbestimmten Rastmaß voneinander beabstandet, vorzugsweise wobei der Abstand und/oder das Rastmaß
- einem Abstand und/oder einem Rastmaß von Abstützelementen des Schachts, und/oder
- einem Abstand und/oder einem Rastmaß von Halteelementen des Bedienfahrzeugs entsprechen oder ein ganzzahliges Vielfaches davon ist. Bevorzugt sind die Abstände der Halteelemente der Übergabestation identisch, oder im Wesentlichen (Toleranzen angenommen) identisch, zu den Abständen der Abstützelemente des Schachts, in der die Lagergutträger inklusiver ihrer Lagergüter nicht gestapelt eingelagert werden können, und/oder zu den Aufnahmeeinheit-Halteelementen einer die Lagergüter haltenden oder aufnehmenden Aufnahmeeinheit des Bedienfahrzeugs.

Bevorzugt sind die Halteelemente in der Übergabeeinheit verfahrbar, vorzugsweise vertikal verfahrbar, vorzugsweise bidirektional nach oben und unten verfahrbar, weiter vorzugsweise schrittweise verfahrbar sind. Mit anderen Worten sind die Halteelement so verfahrbar, dass sie wie bei einem Aufzug oder einem Paternoster innerhalb der Übergabeeinheit vertikal nach oben oder unten verfahren werden können (wobei sie die aufgenommenen Lagergutträger bei der vertikalen Bewegung nach oben oder unten übereinander nicht-gestapelt und voneinander beabstandet halten).

Bevorzugt weist die Übergabeeinheit ein umlaufendes Zugmittel auf, an dem die Halteelemente in vertikal voneinander beabstandeten Positionen angebracht sind, vorzugsweise wobei das umlaufende Zugmittel als umlaufender Zahnriemen, umlaufendes Seil oder umlaufende Kette oder umlaufendes Band ausgebildet ist und/oder derart antreibbar ist, dass die Halteelemente in vertikaler Richtung, vorzugsweise schrittweise, nach oben oder unten innerhalb der Übergabeeinheit verfahrbar sind.

Bevorzugt weist die Übergabeeinheit mindestens zwei, vorzugsweise vier, umlaufende Zugmittel auf, die an gegenüberliegenden Seiten und/oder Ecken der Lagergutträger angeordnet sind.

Bevorzugt sind an einem jeweiligen Zugmittel mindestens zwei, vorzugsweise mindestens fünf, weiter vorzugsweise mindestens 10, weiter vorzugsweise mindestens 100, derartiger Halteelemente angebracht. Die Anzahl der Halteelemente hängt von der Höhe der Übergabeeinheit und von der Anzahl an gleichzeitig aufzunehmender Lagergutträger (inklusiver ihrer Lagergüter) ab.

Alternativ kann die Übergabeeinheit mindestens zwei, vorzugsweise vier, vorzugsweise sich vertikal erstreckende, Stangen oder Balken aufweisen, an denen jeweils die Halteelemente in vertikal voneinander beabstandeten Positionen angebracht sind, wobei die Stangen oder Balken derart verfahrbar, vorzugsweise vertikal verfahrbar, sind, dass die Halteelemente in vertikaler Richtung, vorzugsweise schrittweise, nach oben oder unten innerhalb der Übergabeeinheit verfahrbar sind.

Halteelemente, die gemeinsam einen Lagergutträger halten, sind vorzugsweise in einer gemeinsamen Ebene, weiter vorzugsweise in einer gemeinsamen horizontalen Ebene angeordnet, sodass der jeweilige Lagergutträger im Wesentlichen horizontal angeordnet ist.

Bevorzugt weist die Übergabestation einen Motor auf, der zum Antrieb des bzw. der Zugmittel und/oder der Stangen/Balken ausgebildet ist, um die Haltelemente entsprechend innerhalb der Übergabeeinheit nach oben oder unten zu verfahren.

Bevorzugt sind die Halteelemente derart verfahrbar, dass die von den Halteelementen gehaltenen Lagergutträger schrittweise nacheinander auf ein Übergabeniveau von beispielsweise einer der Übergabestation nachgelagerten Weiterverarbeitungseinheit verfahrbar sind. Die Weiterverarbeitungseinheit kann eine manuelle Einheit sein, bei der bspw. eine Person die Lagergutträger weiterverarbeitet (oder aus der Übergabeeinheit entnimmt). Die Weiterverarbeitungseinheit kann ein Fördersystem sein, mit der die Lagergutträger aus der Übergabeeinheit entnommen werden können. Das Fördersystem kann ein Förderband, ein Linearschlitten, oder eine automatische Ladeeinrichtung (z.B. Roboter) sein.

Das Verfahren der Halteelemente kann derart erfolgen, dass jeweils einer der mehreren Lagergutträger (inklusive dessen Lagergüter) sukzessive nach einem anderen der mehreren Lagergutträger (inklusive dessen Lagergüter) abgegeben wird. Mit anderen Worten, wird jeweils ein einzelner Lagergutträger (inklusive dessen Lagergüter) sukzessive abgegeben. Mit nochmals anderen Worten: Ein erster in der Übergabestation aufgenommener Lagergutträger wird von der Übergabeeinheit auf dem Übergabeniveau an die Weiterverarbeitungseinheit übergeben, die Halteelemente werden in eine vertikale erste Richtung (vorzugsweise nach unten) gefahren, bis sich ein zweiter in der Übergabestation aufgenommener Lagergutträger auf dem Übergabeniveau befindet. Der zweite Lagergutträger wird von der Übergabeeinheit auf dem Übergabenniveau an die Weiterverarbeitungseinheit übergeben. Optional werden die Halteelement weiter in die erste Richtung gefahren, bis sich ein dritter Lagergutträger, der entnommen werden soll, auf dem Übergabeniveau befindet. Vorzugsweise wird der Verfahrweg der Halteelemente jeweils abhängig von Höhe der Lagergutträger inklusive der darauf befindlichen Lagergüter gewählt. Insbesondere kann der Verfahrweg vorzugsweise jeweils entsprechend der Höhe des zuletzt ausgelagerten Lagergutträgers inklusive der darauf befindlichen Lagergüter gewählt und/oder in Abhängigkeit von einer Gesamthöhe eines zuletzt aufgenommenen Lagergutträger inklusive etwaiger Lagergüter, und/oder in Abhängigkeit von einer Position einer Unterkante eines zuletzt aufgenommenen Lagergutträgers werden.

Es ist jedoch auch denkbar, dass die Lagergutträger in der Übergabeeinheit verbleiben und nur die darauf befindlichen Lagergüter übergeben werden. Dies kann beispielsweise durch ein Zusammenspiel der Übergabestation mit einer Entladestation erfolgen. Die Entladestation kann eine Anhebeeinheit aufweisen, die es ermöglicht, dass die Lagergüter über einen Rand oder Rahmen der Lagergutträger angehoben werden, vorzugsweise durch Hochdrücken der Lagergüter von unten. Der Lagergutträger kann hierfür einen doppelten Boden aufweisen und/oder Schlitze aufweisen, sodass die Anhebeeinheit die Lagergüter von unten anheben kann (bspw. mittels ausfahrbarer Vorsprünge). Eine Ausschiebeeinheit (Pusher oder Schieber) kann dann die angehobenen Lagergüter seitlich in Auslaufrichtung ausschieben zur Übergabe der Lagergüter (aber nicht der Lagergutträger) an die Weiterverarbeitungseinheit wie bspw. an ein Fördersystem. Für den Fall, dass lediglich die Lagergüter übergeben werden sollen, kann das Übergabeniveau der Lagergutträger um ein vorbestimmtes Maß, bspw. um eine Höhe des Rands oder Rahmens der Lagergutträger oder mehr, abweichen, sodass die angehobenen Lagergüter auf Übergabeniveau der Weiterverarbeitungseinheit übergeben werden können.

Die Übergabestation kann so ausgestaltet sein, dass sie als Puffer innerhalb eines Gesamtsystems fungieren kann. Dabei können eine bestimmte Anzahl oder sämtliche mit Lagergütern bestückte Lagergutträger für eine Zielpalette in der Übergabeeinheit zwischengespeichert werden. Die Vorpufferung kann optional bereits in der für die Zielpalette vorgesehenen Sequenz erfolgen, ist jedoch nicht zwingend sequenzgebunden. In diesem Zusammenhang werden die Lagergutträger vom zugehörigen Bediengerät in die Übergabestation eingebracht und anschließend von der Übergabestation auf eine nachgelagerte Weiterverarbeitungseinheit wie bspw. ein Fördersystem abgegeben.

Bevorzug sind die Halteelemente derart verfahrbar, dass die von den Halteelementen aufzunehmenden Lagergutträger schrittweise nacheinander von einem Übergabeniveau von beispielsweise einem der Übergabestation vorgelagerten Fördersystem oder einer Verarbeitungseinheit in die Übergabeeinheit aufgenommen werden. Die Aufnahme der Lagergutträger erfolgt derart, dass jeweils einer der mehreren Lagergutträger sukzessive nach einem anderen der mehreren Lagergutträger aufgenommen wird. Mit anderen Worten wird jeweils ein einzelner Lagergutträger sukzessive in die Übergabeeinheit übergeben. Mit nochmals anderen Worten: Ein erster Lagergutträger wird von der Verarbeitungseinheit wie bspw. einem Fördersystem auf dem Übergabenniveau an die Übergabestation übergeben und in der Übergabeeinheit aufgenommen. Die Halteelemente werden in eine vertikale zweite Richtung (vorzugsweise nach oben) verfahren, bis der erste Lagergutträger ausreichend weit in die zweite Richtung befördert wurde, um den zweiten Lagergutträger aufzunehmen. Ein zweiter Lagergutträger wird auf dem Übergabenniveau der Verarbeitungseinheit bzw. auf Übergabeniveau des Fördersystems an die Übergabestation übergeben und in die Übergabeeinheit aufgenommen. Optional werden die Halteelemente weiter in die zweite Richtung verfahren, bis der zweite Lagergutträger ausreichend weit in die zweite Richtung befördert wurde und ein weiterer Lagergutträger genommen werden kann. Vorzugsweise wird der Verfahrweg der Halteelemente abhängig von Höhe des jeweils als nächstes aufzunehmenden Lagergutträgers inklusive der darauf befindlichen Lagergüter gewählt, und/oder in Abhängigkeit von einer Position einer Unterkante eines zuletzt aufgenommenen Lagergutträgers gewählt.

Bevorzugt kann die Übergabestation bidirektional betrieben werden, also sowohl für Einlagerungs- als auch für Auslagerungsvorgänge geeignet bewegt werden (bspw. vertikal nach oben oder unten bewegt werden). In einem ersten Betriebsmodus übergibt das Bedienfahrzeug bspw. ein Mehrfachbedienfahrzeug, den oder die Lagergutträger, vorzugsweise gleichzeitig, in die Übergabestation und diese übergibt die Lagergutträger einzeln an eine Weiterverarbeitungseinheit. In einem zweiten Betriebsmodus werden die Lagergutträger einzeln von einem vorgelagerten System in die Übergabestation übergeben und das Bedienfahrzeug, bspw. ein Mehrfachbedienfahrzeug, entnimmt einzeln oder gleichzeitig mehrere Lagergutträger inklusive Lagergut aus der Übergabestation.

Bevorzugt weist die Übergabestation eine Sensorik (Vermessungseinrichtung) auf, welche dazu ausgebildet ist, eine Gesamthöhe des zu übergebenden Lagergutträgers inklusive etwaiger darauf befindlicher Lagergüter und/oder eines zuletzt übernommenen Lagergutträgers inklusive etwaiger darauf befindlicher Lagergüter zu erfassen, und/oder weist die Übergabestation eine Kommunikationsverbindung zu einem Datenspeicher auf, in dem eine Gesamthöhe der Lagergutträger inklusive etwaiger darauf befindlicher Lagergüter gespeichert ist (bspw. beim Scannen eines Lagergutträgerkennzeichens, bspw. durch eine weitere Sensorik)

Die Gesamthöhe wird vorzugsweise vor der Aufnahme eines jeweiligen Lagergutträgers in die Übergabeeinheit ermittelt.

Bevorzugt weist die Übergabestation eine Steuerung auf, die dazu ausgebildet ist, die Halteelemente in Abhängigkeit der ermittelten und/oder gespeicherten Gesamthöhe vertikal zu verfahren, vorzugsweise derart, dass mehrere Lagergutträger inklusive ihrer Lagergüter sukzessive von einer Verarbeitungseinheit aufgenommen und anschließend gleichzeitig gehalten werden können, ohne dass sich die Lagergutträger inklusive ihrer Lagergüter aufeinander abstützen und/oder einander berühren; und/oder mehrere Lagergutträger inklusive ihrer Lagergüter gleichzeitig gehalten und anschließend sukzessive einer Weiterverarbeitungseinheit abgegeben werden können, ohne dass sich die Lagergutträger inklusive ihrer Lagergüter aufeinander abstützen und/oder einander berühren.

Bevorzugt ist die Sensorik dazu ausgebildet ist, eine Lage und/oder Orientierung der Lagergutträger inklusive deren Lagergüter zu erfassen, vorzugsweise in Echtzeit oder zumindest in einer Taktzeit, die an eine Fördergeschwindigkeit eines der Übergabestation vorgelagerten oder nachgelagerten Fördersystems angepasst ist, vorzugsweise wobei die Sensorik Positionssensoren, ein optoelektronisches System und/oder ein Kamerasystem zur Ermittlung der Höhe, Lage und/oder Orientierung aufweist.

Bevorzugt ist die Übergabeeinheit so ausgebildet ist, dass eine Aufnahmeeinheit eines Bedienfahrzeugs des Warenlagersystems, vorzugsweise eines Mehrfachfahrzeugs zur Handhabung mehrere Lagergutträger mit einer Aufnahmeeinheit, die ausgebildet ist, mehrere Lagergutträger gleichzeitig übereinander nicht-gestapelt zu halten, in die Übergabeeinheit einfahren kann, um in der Aufnahmeeinheit aufgenommene Lagergutträger an die Übergabeeinheit zu übergeben oder von der Übergabeeinheit aufgenommene Lagergutträger in die Aufnahmeeinheit aufzunehmen, vorzugsweise wobei das Bedienfahrzeug von oben oder unten oder seitlich in die Übergabeeinheit einfahrbar ist.

Die Aufnahmeeinheit kann ein Greifer sein. Die Übergabestation kann ein Gestell aufweisen, in das die Aufnahmeeinheit (der Greifer) des Bedienfahrzeugs einfahren kann. Die in der Übergabestation aufgenommenen Lagergutträger sind innerhalb des Gestells angeordnet und für die Aufnahmeeinheit zugänglich.

Bevorzugt ist die Übergabestation derart dimensioniert, dass die Übergabestation in einen Schacht des Warenlagersystems integrierbar ist, vorzugsweise wobei eine Grundfläche der Übergabestation an eine Grundfläche eines Schachts des Warenlagersystems angepasst ist bzw. die beiden Grundflächen einander im Wesentlichen entsprechen.

Bevorzugt ist die Übergabestation dazu ausgebildet, mindestens 2, vorzugsweise mindestens 3, stärker bevorzugt mindestens 5 Lagergutträger aufzunehmen.

Bevorzugt ist die Übergabestation dazu ausgebildet, höchstens 15 vorzugsweise höchstens 6 Lagergutträger aufzunehmen.

Die Übergabestation kann einen "Batch" an Lagergutträgern aufnehmen oder für eine Übergabe vorbereiten (vorhalten). Eine Anzahl an Lagergutträgern in der Übergabestation vorgehaltener Lagergüter kann größer als eine Anzahl an Lagergutträgern sein, die vom Bedienfahrzeug gleichzeitig aufgenommen werden können oder gleichzeitig abgegeben werden können.

Bevorzugt ist die Übergabestation dazu ausgebildet, mindestens 15, vorzugsweise mindestens 30, stärker bevorzugt mindestens 50 Lagergutträger aufzunehmen.

Die Übergabestation kann als vertikaler Pufferspeicher dienen und sich über die Hälfte oder die gesamte Schachthöhe erstrecken (die auch als "System-Gridhöhe" bezeichnet werden kann). Die Übergabe der in der Übergabestation aufgenommenen Lagergutträger an das Bedienfahrzeug kann auf Höhe einer Fahrebene des Bedienfahrzeugs über den Schächten erfolgen oder knapp darunter (z.B. auf mindestens 80% der Schachthöhe).

Bevorzugt weist die Übergabestation ferner eine Waage auf.

Bevorzugt weist die Übergabestation ferner eine Erfassungsvorrichtung zur Erfassung von Warenkennzeichnungen, und/oder Artikelnummern, und/oder Lagergutträgerkennzeichnungen auf, vorzugsweise wobei die Erfassungsvorrichtung zum Scannen von Barcodes oder QR-Codes, wie beispielsweise eines EAN-Codes und/oder eines GTIN-Codes, und/oder zum Auslesen eines RFID-Tags oder eines anderen eindeutigen die Lagergüter kennzeichnenden Kennzeichens, ausgebildet ist.

Bevorzugt weist die Übergabestation ferner eine Kontrolleinheit zur Kontrolle der aufgenommenen oder zu übergebenden Lagergüter bzw. Lagergutträger auf. Die Kontrolleinheit dient zur Konturen- und/oder Gewichtskontrolle der Lagergüter bzw. der Lagergutträger inklusive etwaiger darauf befindlicher Lagergüter. Bevorzugt ist die Kontrolleinheit dazu ausgebildet, Abmessungen wie Maximalmaße und/oder ein Gewicht wie ein Maximalgewicht der zu verarbeitenden Lagergutträger inklusive etwaiger Lagergüter zu erfasst und/oder zu überprüfen, vorzugsweise vor Übergabe an die Übergabeeinheit.

Bevorzugt weist die Übergabestation ferner eine Ausrichteinheit zur Ausrichtung der Lagergutträger in der Übergabeeinheit auf, vorzugsweise wobei die Ausrichteinheit dazu ausgebildet ist, die Lagergutträger in ihrer Position relativ zu Haltelementen der Übergabeeinheit auszurichten.

Bevorzugt weist die Übergabestation ferner einen Antrieb zum Verfahren der Halteelemente auf, wobei der Antrieb ein umlaufendes Zugmittel und/oder vertikale Stangen oder Balken antreibt, an dem/denen die Halteelemente angebracht sind.

Bevorzug weist die Übergabestation ferner eine Energieübertragungseinrichtung auf, die dazu ausgebildet ist, Energie zwischen der Übergabestation und anderen Komponenten des Warenlagersystems, wie beispielsweise eines Bedienfahrzeugs des Warenlagersystems, zu übertragen.

Bevorzugt weist die Übergabestation einen verfahrbaren Anschlag auf, der dazu ausgebildet ist, einen ankommenden Lagergutträger in einer Einlaufrichtung an einer definierten Übergabeposition zu stoppen und/oder in seiner Position relativ zur Übergabeeinheit auszurichten. Der Anschlag kann bevorzugt derart verfahrbar sein, dass ankommende Lagergutträger durch die Übergabestation durchführbar sind, ohne von der Übergabeeinheit aufgenommen zu werden.

Bevorzugt weisen die Halteelemente Sicherungsabschnitte auf, die dazu ausgebildet sind, die gehaltenen Lagergutträger gegen Verdrehen und/oder Verrutschen zu sichern, und/oder sind die Haltelemente dazu ausgebildet, mit einer am Lagergutträger ausgebildeten Haltekontur ineinander zu greifen, um den Lagergutträger zu sichern, vorzugsweise gegen Verschieben und/oder Verdrehen. Vorzugsweise ist die am Lagergutträger ausgebildete Haltekontur starr und/oder einstückig mit einem Seitenrahmen und/oder mit der Grundfläche des Lagergutträgers ausgebildet und/oder damit verbunden. Vorzugsweise wird die Sicherung ohne bewegliche Elemente am Lagergutträger und/oder der Übergabeeinheit erreicht.

Bevorzugt greifen die Halteelemente zur Sicherung mit einer ersten Haltekontur der Lagergutträger ein.

Allgemein können Konturen von Haltelement und Lagergutträger einander überschneiden (bspw. in Draufsicht auf die Lagergutträger), um eine Sicherung gegen Herausfallen, Verdrehen und/oder Verrutschen zu ermöglichen. Die sich überschneidenden Konturen können Vorsprünge und Hinterschnitte sein oder aufweisen.

Vorzugsweise ist die erste Haltekontur einstückig an dem jeweiligen Lagergutträger ausgebildet und/oder nicht beweglich.

Ein zweiter oder weiterer Aspekt der vorliegenden Erfindung, der ein unabhängiger Aspekt der vorliegenden Erfindung sein kann, betrifft ein Warenlagersystem. Das Warenlagersystem weist auf: mehrere vertikale Schächte, wobei zumindest einer der Schächte zumindest abschnittweise dazu ausgebildet ist, gleichzeitig mehrere voneinander beabstandete Lagergutträger, inklusiver etwaiger auf den Lagergutträgern vorhandener Lagergüter, übereinander nicht-gestapelt zu halten, mindestens ein Bedienfahrzeug, vorzugsweise ein Mehrfachbedienfahrzeug, das dazu ausgebildet ist, Lagergutträger in einen Schacht einzulagern und/oder aus einem Schacht auszulagern, vorzugsweise wobei das mindestens eine Bedienfahrzeug ein Mehrfachfahrzeug ist, das dazu ausgebildet ist, gleichzeitig mehrere Lagergutträger in einen Schacht einzulagern und/oder aus einem Schacht auszulagern, und eine Übergabestation, vorzugsweise eine Übergabestation nach dem ersten Aspekt und/oder Ausgestaltungen davon, mit einer Übergabeeinheit zur Übergabe von mindestens einem Lagergutträger an das mindestens eine Bedienfahrzeug oder zur Aufnahme von mindestens einem Lagergutträger von dem mindestens einen Bedienfahrzeug, wobei die Übergabeeinheit dazu ausgebildet ist, gleichzeitig mehrere voneinander beabstandete Lagergutträger, inklusiver etwaiger auf den Lagergutträgern vorhandener Lagergüter, übereinander nicht-gestapelt zu halten, wobei das mindestens eine Bedienfahrzeug, vorzugsweise eine Aufnahmeeinheit aufweist, die dazu ausgebildet ist, mindestens einen Lagergutträger, inklusiver etwaiger auf den Lagergutträgern vorhandener Lagergüter an die Übergabestation zu übergeben und/oder mindestens einen Lagergutträger, inklusiver etwaiger auf den Lagergutträgern vorhandener Lagergüter von der Übergabestation zu übernehmen.

Es wurde erkannt, dass ein derartiges Warenlagersystem besonders effizient Lagergutträger umschlagen kann.

Bevorzugt ist die Aufnahmeeinheit dazu ausgebildet, zur Übergabe des mindestens einen Lagergutträgers an die Übergabestation und/oder zur Aufnahme des mindestens einen Lagergutträgers von der Übergabestation in die Übergabestation einzufahren.

Bevorzugt ist die Aufnahmeeinheit dazu ausgebildet, von oben oder von unten in die Übergabestation einzufahren.

Bevorzugt ist die Aufnahmeeinheit dazu ausgebildet, zur Einlagerung der Lagergutträger in den einen der Schächte und/oder zur Auslagerung der Lagergutträger aus dem einen der Schächte vertikal in dem einen der Schächte zu verfahren.

Bevorzugt ist die Übergabeeinheit dazu ausgebildet ist, zur Übergabe des mindestens einen Lagergutträgers an die Aufnahmeeinheit des Bedienfahrzeugs und/oder zur Aufnahme des mindestens einen Lagergutträgers von der Aufnahmeeinheit des Bedienfahrzeugs in die Aufnahmeeinheit des Bedienfahrzeugs einzufahren.

Bevorzugt ist die Übergabeeinheit dazu ausgebildet, von oben oder unten in die Aufnahmeeinheit des Bedienfahrzeugs einzufahren.

Bevorzugt ist die Übergabestation dazu ausgebildet, gleichzeitig mehrere der Lagergutträger inklusiver etwaiger auf den Lagergutträgern vorhandener Lagergüter übereinander nicht-gestapelt an das mindestens eine Bedienfahrzeug zu übergeben oder von dem mindestens einen Bedienfahrzeug zu übernehmen.

Bevorzug ist die Übergabestation außerhalb der Schächte und/oder separat von den Schächten angeordnet.

Bevorzugt beträgt eine Höhe der Übergabestation maximal 40 %, vorzugsweise maximal 30 %, weiter vorzugsweise maximal 20 %, der Schachthöhe.

Bevorzugt ist die Übergabestation in einen Schacht integriert und/oder in einem Abschnitt eines Schachts angeordnet bzw. in den Abschnitt integriert.

Die Übergabestation kann an beliebiger Höhe in den Schacht integriert werden, z.B. an einer Position über einem Drittel oder über der Hälfte der Schachthöhe. Das Bedienfahrzeug kann so gestaltet sein, dass die Aufnahmeeinheit durch die Übergabeeinheit hindurchfahren kann und somit Lagergutträger aus der Übergabestation in dem Schacht, in dem die Übergabestation angeordnet ist, nach oben und unten transportieren kann.

Bevorzugt beträgt eine Höhe der Übergabestation mindestens 50 %, vorzugsweise mindestens 80 % der Schachthöhe.

Bevorzugt verläuft ein Schienensystem des Warenlagersystems derart, dass die Übergabestation, die ggf. außerhalb der Schächte angeordnet ist, durch ein Bedienfahrzeug des Warenlagersystems erreichbar ist. Bspw. kann das Schienensystem Fahrschienen aufweisen, in denen das Bedienfahrzeug verfahren kann. Die Fahrschienen können in Form einer 2D Matrix auf oder unter den Schächten angeordnet sein. Das Schienensystem verläuft vorzugsweise so, dass das Bedienfahrzeug eine Position über und/oder unter der Übergabestation einnehmen kann und eine Aufnahmeeinheit (ein Greifer) des Bedienfahrzeugs von oben bzw. unten in die Übergabeeinheit einfahren kann.

Bevorzugt ist das Bedienfahrzeug in Fahrschienen verfahrbar ist, die in Form einer 2D Matrix auf oder unter den Schächten angeordnet sind.

Bevorzugt ist das Bedienfahrzeug ein Mehrfach(bedien)fahrzeug, das dazu ausgebildet ist, gleichzeitig mehrere voneinander beabstandete und übereinander nicht-gestapelte Lagergutträger der Übergabestation zu übergeben und/oder von der Übergabestation aufzunehmen.

Bevorzugt weist das Bedienfahrzeug (Einfach- oder Mehrfachfahrzeug) ein Gestell und eine Aufnahmeeinheit auf, die aus dem Gestell ausfahrbar und in den Schacht einfahrbar ist. Bei einem Mehrfachfahrzeug ist die Aufnahmeeinheit dazu ausgebildet, vorzugsweise mindestens zwei in der Übergabestation aufgenommene Lagergutträger gleichzeitig nicht-gestapelt übereinander zu halten, sodass diese gleichzeitig von oben oder unten der Übergabestation übergeben werden können (oder von dieser aufgenommen werden können).

Bevorzugt weist die Aufnahmeeinheit Aufnahmeeinheit-Halteelemente auf, die in einem Abstand angeordnet sind, der dem Abstand der Halteelemente der Übergabestation und/oder Abstützelement des Schachts entspricht oder ein ganzzahliges Vielfaches davon ist.

Bevorzugt weisen die Aufnahmeeinheit-Halteelemente Sicherungsabschnitte auf, die dazu ausgebildet sind, die gehaltenen Lagergutträger gegen Verdrehen und/oder Verrutschen zu sichern, und/oder sind die Aufnahmeeinheit-Haltelemente dazu ausgebildet, mit einer am Lagergutträger ausgebildeten Haltekontur ineinander zu greifen, um den Lagergutträger zu sichern, vorzugsweise gegen Verschieben und/oder Verdrehen. Vorzugsweise ist die am Lagergutträger ausgebildete Haltekontur starr und/oder einstückig mit einem Seitenrahmen und/oder mit der Grundfläche des Lagergutträgers ausgebildet und/oder damit verbunden. Vorzugsweise erfolgt die Sicherung ohne bewegliche Elemente am Lagergutträger und/oder der Aufnahmeeinheit.

Bevorzugt greifen die Aufnahmeeinheit-Halteelemente zur Sicherung mit einer zweiten Haltekontur der Lagergutträger ein.

Bevorzugt ist die zweite Haltekontur einstückig an dem jeweiligen Lagergutträger ausgebildet und/oder nicht beweglich.

Bevorzugt ist die Aufnahmeeinheit in die Übergabeeinheit einfahrbar, vorzugsweise von oberhalb und/oder unterhalb der Übergabeeinheit.

Bevorzugt weist der Schacht Schacht-Abstützelemente auf, wobei ein Abstand der Schacht-Abstützelemente dem Abstand der Halteelemente der Übergabestation und/oder einem Abstand der Aufnahmeeinheit-Halteelemente entspricht oder ein ganzzahliges Vielfaches davon ist. Es kann insofern auch von einem Raster gesprochen werden.

Bevorzugt weisen die Schacht-Abstützelemente Sicherungsabschnitte auf, die dazu ausgebildet sind, die gehaltenen Lagergutträger gegen Verdrehen und/oder Verrutschen zu sichern, und/oder sind die Schacht-Abstützelemente dazu ausgebildet, mit einer am Lagergutträger ausgebildeten Haltekontur ineinander zu greifen, um den Lagergutträger zu sichern, vorzugsweise gegen Verschieben und/oder Verdrehen. Vorzugsweise ist die am Lagergutträger ausgebildete Haltekontur starr und/oder einstückig mit einem Seitenrahmen und/oder mit der Grundfläche des Lagergutträgers ausgebildet und/oder damit verbunden. Vorzugsweise erfolgt die Sicherung ohne bewegliche Elemente am Lagergutträger und/oder Schacht.

Bevorzugt greifen die Schacht-Abstützelemente zur Sicherung mit der ersten Haltekontur der Lagergutträger oder einer dritten Haltekontur der Lagergutträger ein, vorzugsweise in die erste bzw. dritte Haltekontur.

Bevorzugt erfolgt zur gleichzeitigen Übergabe der mehreren Lagergutträger zwischen der Übergabestation und dem Mehrfachfahrzeug keine vertikale Bewegung von den Lagergutträger in der Übergabestation haltenden Halteelementen.

Bevorzugt erfolgt die Übergabe der Lagergutträger zwischen dem Bedienfahrzeug und der Übergabestation durch Verdrehen und/oder Verschieben der Lagergutträger.

Bevorzugt werden die Lagergutträger durch Verdrehen und/oder Verschieben in den Schächten eingelagert und/oder durch Verdrehen und/oder Verschieben aus den Schächten ausgelagert.

Bevorzugt erfolgt die Übergabe der Lagergutträger an das Bedienfahrzeug durch (i) Anheben der Lagergutträger, vorzugsweise gleichzeitiges Anheben der zur übergebenden Lagergutträger, (ii) Verdrehen und/oder Verschieben der Lagergutträger, vorzugsweise gleichzeitiges Verdrehen und/oder Verschieben der zu übergebenden Lagergutträger, und (iii) vertikales Ausheben oder Ablassen der Lagergutträger aus der Übergabeeinheit, vorzugsweise gleichzeitiges Ausheben oder Ablassen der zur übergebenden Lagergutträger und/oder erfolgt die Übergabe der Lagergutträger von dem Bedienfahrzeug durch (i) Einfahren der Lagergutträger in die Übergabeeinheit, vorzugsweise gleichzeitiges Einfahren der zur übergebenden Lagergutträger, (ii) Verdrehen und/oder Verschieben der Lagergutträger, vorzugsweise gleichzeitiges Verdrehen und/oder Verschieben der zu übergebenden Lagergutträger, und (iii) Absenken der Lagergutträger, vorzugsweise gleichzeitiges Absenken der zur übergebenden Lagergutträger.

Bevorzug sind der mindestens eine Schacht, die Aufnahmeeinheit des mindestens einen Bedienfahrzeugs und die Übergabeeinheit jeweils dazu ausgebildet, mehrere voneinander beabstandete und übereinander nicht-gestapelte Lagergutträger aufzunehmen, wobei eine Gesamthöhe eines jeweiligen Lagergutträgers inklusive etwaiger darauf beladener Lagergüter verschieden sein kann.

Vorteilhafte Ausführungsformen des ersten Aspekts sind vorteilhafte Ausführungsformen des zweiten Aspekts.

Vorteilhafte Ausführungsformen des zweiten Aspekts sind vorteilhafte Ausführungsformen des ersten Aspekts.

### Kurzbeschreibung der Figuren

**Figuren 1-3** zeigen schematische Ansichten von Ausführungsformen einer erfindungsgemäßen Übergabestation.
**Figur 4** zeigt eine schematische Ansicht eines Ausschnitts einer Ausführungsform eines erfindungsgemäßen Warenlagersystems.
**Figuren 5-14** zeigen schematische Ansichten eines Ausschnitts einer weiteren Ausführungsform eines erfindungsgemäßen Warenlagersystems.
**Figuren 15-26** zeigen schematische Ansichten eines Zusammenspiels zwischen einer erfindungsgemäßen Übergabestation und einer Entladestation zum Entladen von Lagergütern.
**Figuren 27-28** zeigen schematische Ansichten einer Ausführungsform eines erfindungsgemäßen Warenlagersystems, bei der eine erfindungsgemäße Übergabestation freistehend oder außerhalb von Schächten des Warenlagersystems angeordnet ist.
**Figur 29** zeigt eine schematische Ansicht einer weiteren Ausführungsform eines erfindungsgemäßen Warenlagersystems, bei der eine erfindungsgemäße Übergabestation in einen Schacht des Warenlagersystems integriert ist.
**Figur 30** zeigt eine schematische Ansicht einer Ausführungsform einer erfindungsgemäßen Übergabestation mit einem umlaufenden Zugmittel.
**Figur 31** zeigt eine schematische Ansicht einer weiteren Ausführungsform einer erfindungsgemäßen Übergabestation mit Stangen oder Balken.
**Figuren 32-36** zeigen schematische Ansichten, bei denen von einer vorgelagerten Verarbeitungseinheit bereitgestellte Lagergutträger inklusive ihrer Lagergüter schrittweise von der Übergabestation aufgenommen und in der Übergabestation übereinander nicht-gestapelt gehalten werden.
**Figuren 37-38** zeigen schematische Ansichten, bei denen ein Lagergutträger inklusive Lagergut durch die Übergabestation hindurch bewegt wird, ohne aufgenommen zu werden.
**Figur 39-46** zeigen schematische Detailansichten einer gleichzeitigen Übergabe von mehreren in der Übergabestation übereinander nicht-gestapelt gehaltenen Lagergutträgern an ein mehraufnahmetaugliches Bedienfahrzeug (Mehrfachfahrzeug) eines erfindungsgemäßen Warenlagersystems.
**Figuren 47-50** zeigen schematische Ansichten einer schrittweisen Übergabe von in der Übergabestation übereinander nicht-gestapelt gehaltenen Lagergutträgern inklusive ihrer Lagergüter an eine nachgelagerte Weiterverarbeitungseinheit.
**Figuren 51-57** zeigen schematische Ansichten einer schrittweisen Übernahme von einzelnen, durch eine vorgelagerte Verarbeitungsstation bereitgestellte, Lagergutträger inklusiver ihrer Lagergüter in der Übergabestation, wobei die Lagergutträger inklusiver ihrer Lagergüter in der Übergabestation übereinander nicht-gestapelt gehalten sind.
**Figuren 58-64** zeigen schematische Ansichten, wie die übereinander nicht-gestapelt gehaltenen Lagergutträger inklusive ihrer Lagergüter gleichzeitig an ein mehraufnahmetaugliches Bedienfahrzeug (Mehrfachfahrzeug) eines erfindungsgemäßen Warenlagersystems übergeben werden.
**Figuren 65-72** zeigen schematische Detailansichten einer gleichzeitigen Übergabe von mehreren in einem Bedienfahrzeug übereinander nicht-gestapelt gehaltenen Lagergutträger inklusiver ihrer Lagergüter an eine Übergabestation, wobei die Lagergutträger inklusiver ihrer Lagergüter in der Übergabestation übereinander nicht-gestapelt gehalten sind.
**Figuren 73-78** zeigen schematische Detailansichten einer Übergabe der von der Übergabestation übereinander nicht-gestapelt gehaltenen Lagergutträger inklusive ihrer Lagergüter an eine nachgelagerte Weiterverarbeitungseinheit.
**Figur 79** zeigt eine weitere Ausführungsform einer erfindungsgemäßen Übergabestation als Ausschnitt eines erfindungsgemäßen Warenlagersystems.
**Figur 80** zeigt eine Ausführungsform eines erfindungsgemäßen Warenlagersystems mit einer erfindungsgemäßen Übergabestation.

### Detaillierte Beschreibung

Innerhalb der Figuren bezeichnen gleiche Bezugszeichen gleiche Gegenstände oder Komponenten.

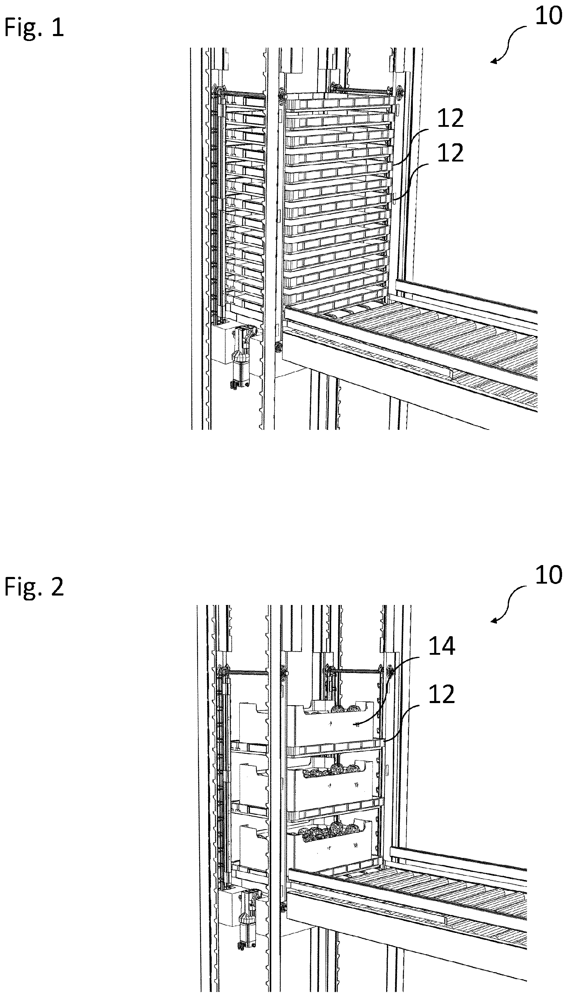

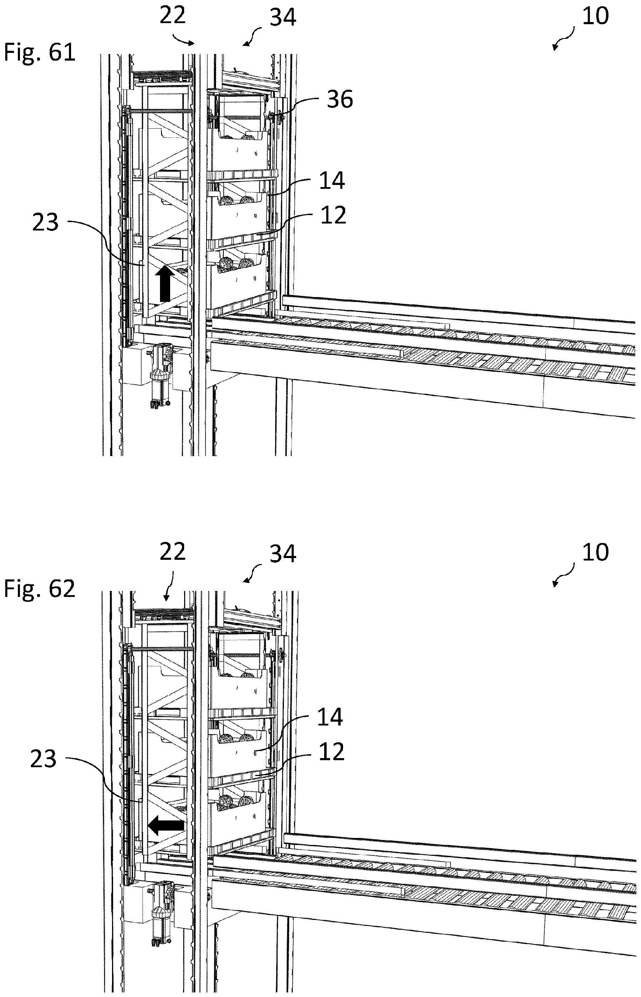

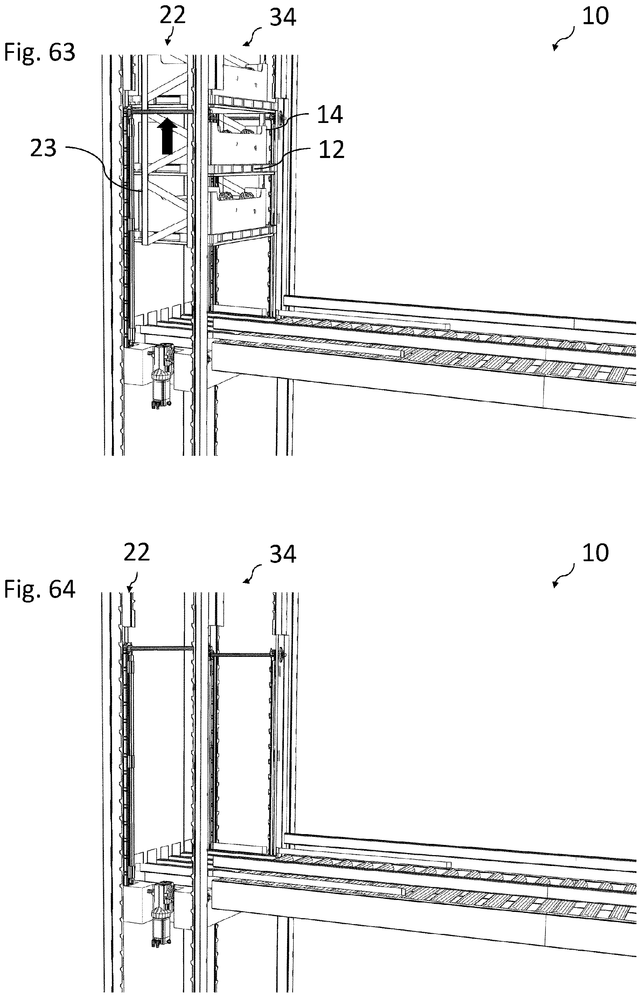

Die **Figuren 1-80** zeigen Ausführungsformen einer erfindungsgemäßen Übergabestation 10 sowie eines erfindungsgemäßen Warenlagersystems 20.

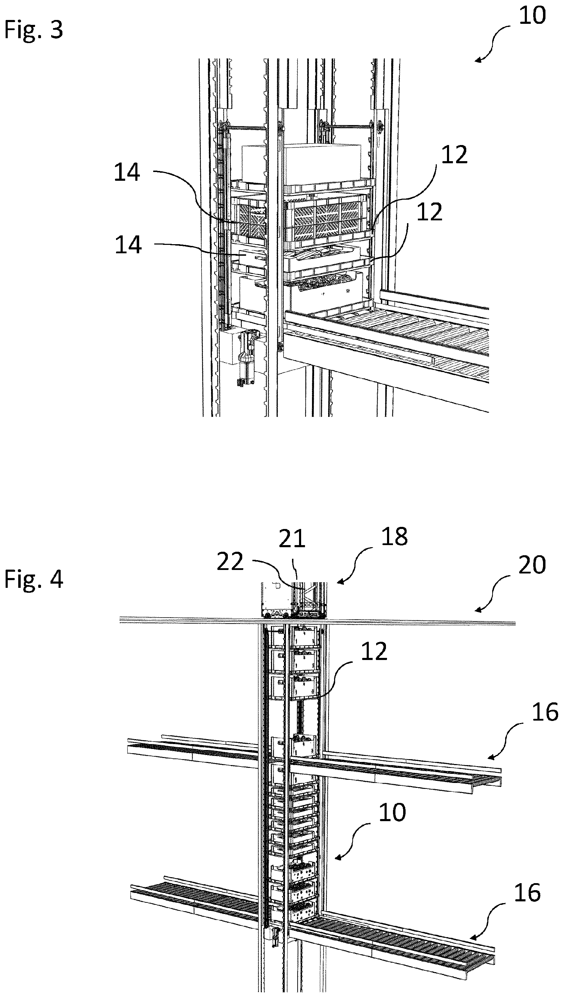

**Figuren 1-3** zeigen schematische Ansichten einer erfindungsgemäßen Übergabestation 10. **Figur 1** zeigt die Übergabestation 10 mit übereinander nicht-gestapelt gehaltenen unbeladenen Lagergutträgern 12. **Figur 2** zeigt die Übergabestation 10 mit übereinander nicht-gestapelt gehaltenen Lagergutträgern 12 inklusive ihrer Lagergüter 14. Im Beispiel von **Figur 2** sind alle Lagergutträger 12 mit demselben Lagergut 14 (Artikeltyp) beladen. **Figur 3** zeigt die Übergabestation 10, wobei die Lagergutträger 12 mit verschiedenen Lagergütern 14 (Artikeltypen) beladen sind.

Von "demselben oder gleichen Artikeltyp" kann im Rahmen der vorliegenden Erfindung z.B. dann gesprochen werden, wenn es sich z.B. um Artikel mit derselben, innerhalb des Warenlagersystems oder auch darüber hinaus (z.B. innerhalb eines bestimmten Händlerkreises oder auch global) eindeutigen, Warenkennzeichnung und/oder Artikelnummer handelt und/oder anderweitig eindeutig identifizierbar sind, beispielsweise mittels künstlicher Intelligenz oder durch eine Nutzereingabe. Ein bevorzugtes Beispiel für eine solche eindeutige Identifizierung beispielsweise mittels Warenkennzeichnung und/oder Artikelnummer ist, wenn die Artikel denselben "European Article Number" (EAN) und/oder "Global Trade Item" (GTIN) und/oder Stock Keeping Unit (SKU) Code haben. Es kann sich somit um Artikel mit derselben Handelsbezeichnung handeln, die aber ein unterschiedliches Mindesthaltbarkeitsdatum haben können.

Ein Beispiel wären Äpfel dergleichen Sorte, wobei im selben sortenreinen Schacht Ware eingelagert werden kann, die zu unterschiedlichen Terminen geliefert wurde.

Weitere Beispiele wären ein Gebinde, eine Sammelverpackung oder ein Sortimentkarton. Hierbei wäre das Gebinde, die Sammelverpackung oder der Sortimentkarton mit einer Warenkennzeichnung und/oder Artikelnummer (EAN oder GTIN) versehen, die diese Art von Gebinde, Sammelverpackung oder Sortimentkarton eindeutig identifiziert. In dem Gebinde, der Sammelverpackung oder dem Sortimentkarton können jedoch verschiedene Produkte enthalten sein (die auch jeweils eine eigene, unterschiedliche Warenkennzeichnung und/oder Artikelnummer tragen können; z.B. Joghurts unterschiedlicher Geschmackssorten in einer gemeinsamen Umverpackung).

Wie zu erkennen ist, sind in der **Figur 1** die Lagergutträger 12 und in den **Figuren 2** **und** **3** die Lagergutträger 12 inklusiver ihrer Lagergüter 14 übereinander nicht-gestapelt gehalten.

Mit der Bezeichnung nicht-gestapelt ist gemeint, dass die übereinander angeordneten Lagergutträger 12 untereinander nicht abgestützt sind. Mit anderen Worten stützen sich die aufgenommenen Lagergutträger 12 nicht aufeinander ab, wie es bei einem Stapel der Fall ist, und/oder berühren die auf einem Lagergutträger 12 befindlichen Lagergüter 14 nicht den darüber oder darunter befindlichen Lagergutträger 12.

Die genaue Ausgestaltung der Übergabestation 10 zum übereinander nicht-gestapelten Halten von Lagergutträgern 12 inklusive ihrer Lagergüter 14 wird später näher beschrieben.

Die Übergabestation 10 kann mindestens 2, vorzugsweise mindestens 3, stärker bevorzugt mindestens 5 Lagergutträger 12 vorzugsweise inklusive darauf befindlicher Lagergüter 14 nicht-gestapelt aufnehmen. Die Übergabestation 10 kann maximal 15, vorzugsweise maximal 6 Lagergutträger 12 vorzugsweise inklusive darauf befindlicher Lagergüter 14 aufnehmen.

In einer anderen Ausführungsform kann die Übergabestation 10 mindestens 15, vorzugsweise mindestens 30, stärker bevorzugt mindestens 50 Lagergutträger 12 vorzugsweise inklusive darauf befindlicher Lagergüter 14 nicht-gestapelt aufnehmen.

**Figur 4** zeigt eine schematische Ansicht einer Übergabestation 10, bei der Lagergutträger 12 inklusive darauf befindlicher Lagergüter 14 auf verschiedenen Übergabeniveaus 16 übernommen oder übergeben werden können. **Figur 4** zeigt zudem ein Bedienfahrzeug 18, das zur Übergabe von Lagergutträgern 12 inklusiver ihrer Lagergüter 14 an die Übergabestation 10 und/oder zur Übernahme der Lagergutträger 12 inklusive ihrer Lagergüter 14 von der Übergabestation 10 ausgebildet ist.

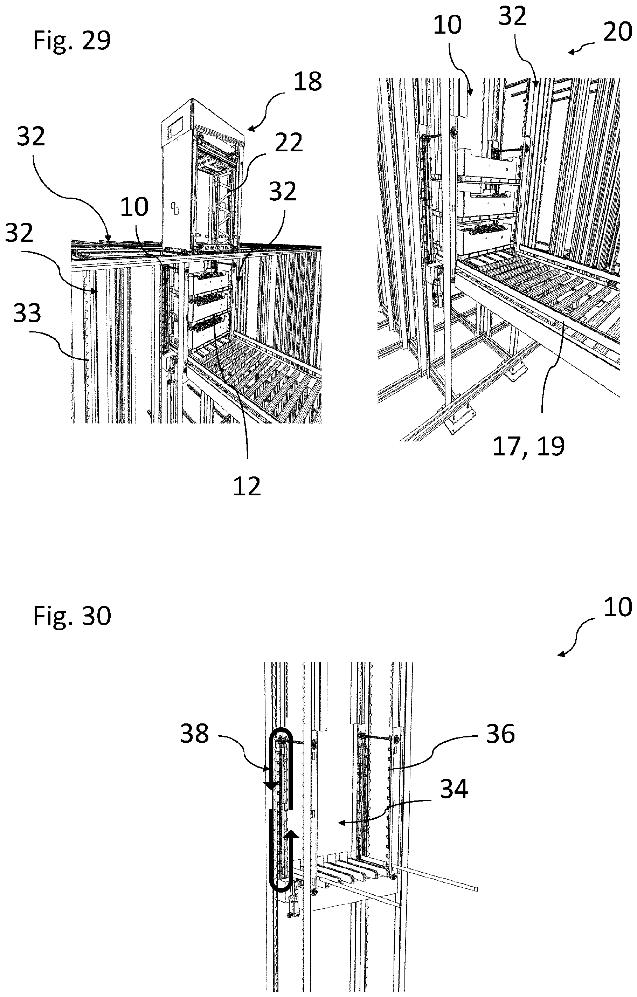

Das Bedienfahrzeug 18 kann ein Bedienfahrzeug sein, das jeweils gleichzeitig nur einen Lagergutträger 12 (inklusive ihrer Lagergüter 14) übergeben oder aufnehmen kann (Einfachfahrzeug). Das Bedienfahrzeug 18 kann ein Bedienfahrzeug sein, dass mehrere, vorzugsweise gleichzeitig mehrere, Lagergutträger 12 (inklusive ihrer Lagergüter 14) übergeben oder aufnehmen kann (mehraufnahmetaugliches Bedienfahrzeug, Mehrfachfahrzeug). In **Figur 4** ist ein Mehrfachfahrzeug gezeigt. Das Bedienfahrzeug 18 ist dazu ausgebildet, einen Lagergutträger 12 inklusive Lagergut 14 in einen Schacht des Warenlagersystems 20 einzulagern oder aus einem Schacht auszulagern. Wenn das Bedienfahrzeug 18 wie in **Figur 4** ein Mehrfachfahrzeug ist, kann dieses gleichzeitig mehrere Lagergutträger 12 inklusive Lagergüter 14 in einen Schacht einlagern oder aus einem Schacht auslagern. Der Schacht kann zumindest abschnittsweise so ausgebildet sein, dass er gleichzeitig mehrere voneinander beabstandete Lagergutträger 12, inklusiver etwaiger auf den Lagergutträgern vorhandener Lagergüter, übereinander nicht-gestapelt halten bzw. abstützen kann. Der Schacht wird bspw. näher in **Figur 29** gezeigt. Das Einlagern von Lagergutträgern 12 in einen Schacht, wie beispielsweise in Schacht 32, und das Auslagern aus einem Schacht, wie beispielsweise aus Schacht 32, mittels ein Bedienfahrzeugs, wie beispielsweise mittels Bedienfahrzeug 18, ist in PCT/EP2025/067802 gezeigt.

Die Übergabestation 10 und das Bedienfahrzeug 18 können Teil eines Warenlagersystems 20 sein.

Die Übergabestation 10 kann sich über einen Teil eines Schachts des Warenlagersystems 20 oder über eine gesamte Schachthöhe des Warenlagersystems 20 erstrecken.

Das Bedienfahrzeug 18 weist ein Gestell 21 und eine Aufnahmeeinheit 22 auf, die aus dem Gestell 21 ausfahrbar und in einen Schacht des Warenlagersystems 20 einfahrbar ist. Die Aufnahmeeinheit 22 dient zur Aufnahme der Lagergutträger 12 und kann von oben oder unten in die Übergabestation 10 einfahren oder aus ihr herausfahren. Es ist sogar denkbar, dass die Aufnahmeeinheit 22 durch Teile der Übergabestation 10 von oben oder unten hindurchfahren kann. In Figur 4 ist das Bedienfahrzeug 18 dazu ausgebildet, von oben in die Übergabestation 10 einzufahren.

Wenn die Übergabestation 10, wie im vorliegenden Beispiel, Lagergutträger 12 auf mehreren Übergabeniveaus 16 übergeben kann, dann kann sie so ausgebildet sein, dass Lagergutträger 12 auf dem jeweiligen Übergabeniveau 16 seitlich in die Übergabestation 10 einfahren, durchfahren oder herausfahren können.

Die Übergabe von Lagergutträgern 12 von der Übergabestation 10 an eine nachgelagerte Weiterverarbeitungseinheit, die Übernahme von Lagergutträgern 12 von einer vorgelagerten Verarbeitungseinheit und die Übergabe von Lagergutträgern 12 zwischen dem Bedienfahrzeug 18 und der Übergabestation 10 werden später näher erklärt.

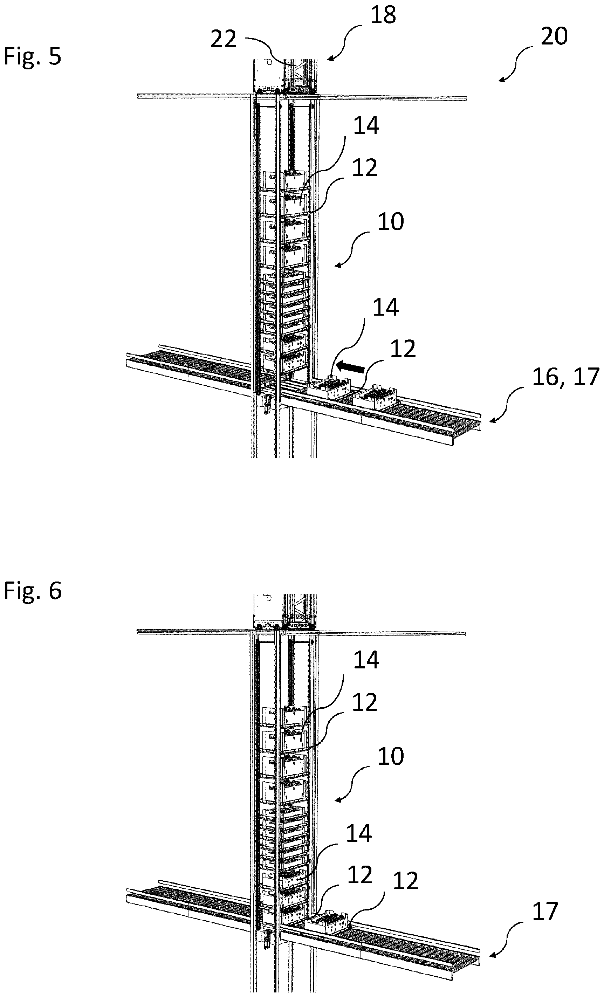

**Figuren 5-14** zeigen schematische Ansichten eines Warenlagersystems 20 mit einer Übergabestation 10 und einem Bedienfahrzeug 18.

In **Figuren 5-14** wird die Übergabe von Lagergutträgern 12 (inklusive ihrer Lagergüter 14) von einer Verarbeitungseinheit 17, die auf einem Übergabeniveau 16 arbeitet, zur Übergabestation 10 und die Übergabe der Lagergutträger 12 (inklusive ihrer Lagergüter 14) von der Übergabestation 10 zum Bedienfahrzeug 18 schematisch gezeigt. Details zur Übergabe werden später näher erklärt.

In **Figur 5** weist die Übergabestation 10 mehrere übereinander nicht-gestapelt gehaltene Lagergutträger 12 mit ihren Lagergütern 14 auf. Auf der Verarbeitungseinheit 17 befinden sich zwei Lagergutträger 12 mit ihren Lagergütern 14. Der Pfeil gibt die Vortriebsrichtung der Verarbeitungseinheit 17 an. Die Lagergutträger 12 werden in **Figur 5** zur Übergabestation 10 gefördert.

Die Verarbeitungseinheit 17 kann eine beliebig zweckmäßige Einheit sein. Im konkreten Beispiel ist sie ein Fördersystem (Förderband, Förderer oder dergleichen). In anderen Ausführungsformen kann die Verarbeitungseinheit eine Befülleinheit sein, mit der Lagergutträger 12 inklusive ihrer Lagergüter 14 manuell (bspw. durch Personen) oder maschinell oder automatisiert (bspw. Roboter gestützt) der Übergabestation 10 übergeben werden können.

**Figur 6** zeigt, wie der erste der zwei von der Verarbeitungseinheit 17 bereitgestellten Lagergutträger 12 (inklusive seiner Lagergüter 14) von der Übergabestation 10 aufgenommen wird. Die Übergabestation 10 hat ausreichend Platz bereitgestellt, damit der neu aufgenommene Lagergutträger 12 inklusive seiner Lagergüter 14 den darüberliegenden Lagergutträger 12 nicht berührt. Wie genau das erreicht wird, wird später näher erklärt.

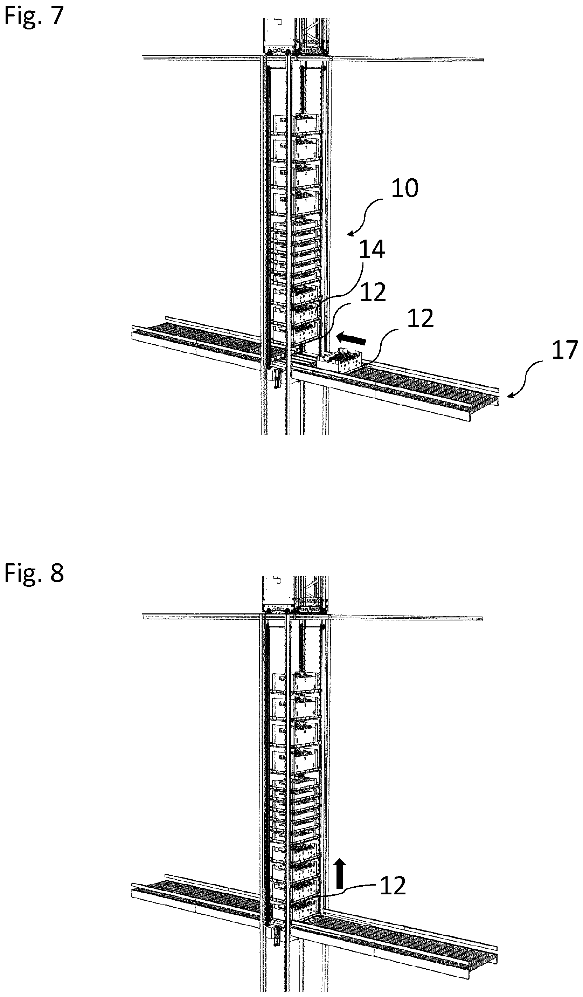

Die Übergabestation 10 funktioniert wie ein "Aufzug" oder "Paternoster", in dem die übereinander nicht-gestapelt gehaltenen Lagergutträger 12 inklusive ihrer Lagergüter 14 nach oben oder unten fahren können. In **Figur 7** wurden die Lagergutträger 12 der Übergabestation 10 weiter nach oben gefahren, um Platz für den zweiten Lagergutträger 12 (inklusive seiner Lagergüter 14) zu schaffen. **Figur 8** zeigt den aufgenommenen zweiten Lagergutträger 12. Der Pfeil deutet an, dass die aufgenommenen Lagergutträger 12 nunmehr nach oben gefahren werden. Dies ist jedoch nicht zwingend erforderlich.

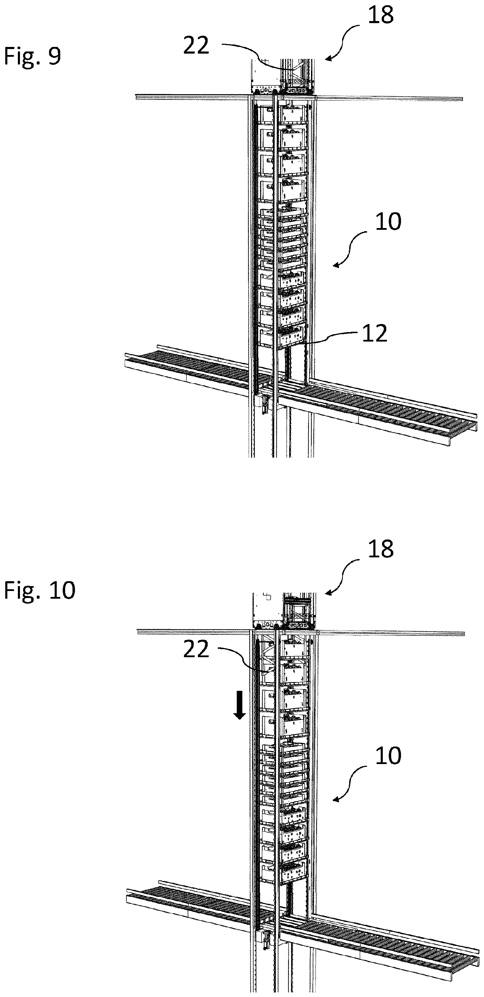

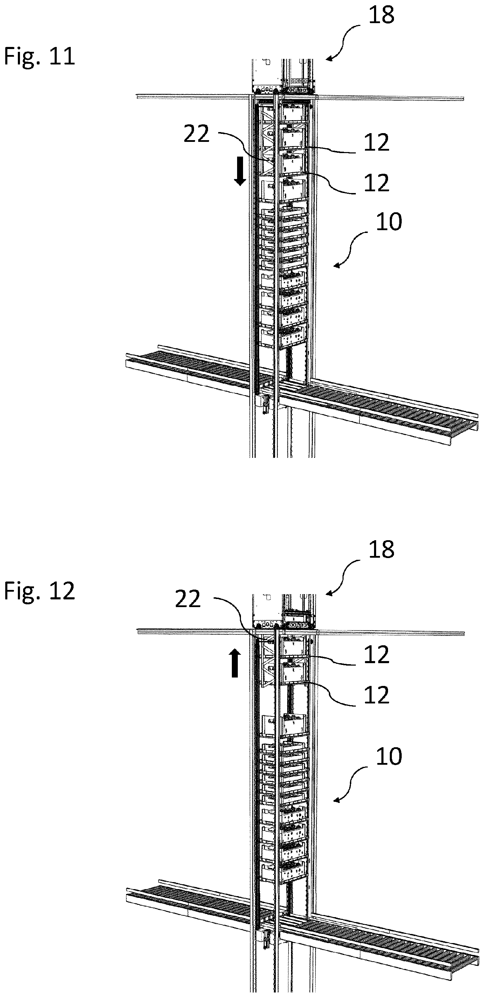

In **Figur 9** sind die Lagergutträger 12 nach oben gefahren. Das Bedienfahrzeug 18 kann in der Übergabestation 10 befindliche Lagergutträger 12 aufnehmen. Dazu weist es die eingangs erwähnte Aufnahmeeinheit 22 auf. **Figur 9** zeigt die Aufnahmeeinheit 22 in einem im Bedienfahrzeug 18 eingefahrenen Zustand. **Figur 10** **und** **11** zeigen, wie die Aufnahmeeinheit 22 aus dem Bedienfahrzeug 18 ausgefahren und von oben in die Übergabestation 10 eingefahren wird.

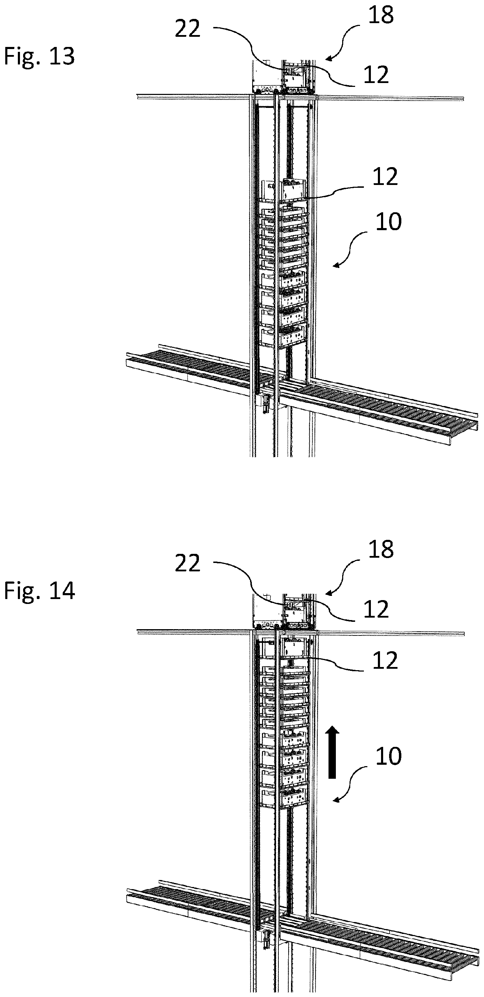

Im gezeigten Beispiel ist das Bedienfahrzeug 18 ein Mehrfachfahrzeug. In **Figuren 12** **und** **13** wurden bereits Lagergutträger 12 inklusive ihrer Lagergüter von der Aufnahmeeinheit 22 aufgenommen. Die Aufnahme der Lagergutträger 12 wird später näher erklärt. **Figuren 12** **und** **13** zeigen, wie das Bedienfahrzeug 18 die aufgenommenen und übereinander nicht-gestapelt gehaltene Lagergutträger 12 (inklusive ihrer Lagergüter) mit Hilfe der Aufnahmeeinheit 22 aus der Übergabestation 10 nach oben herausfahren kann (angedeutet durch den Pfeil in **Figur 12**).

In **Figur 14** werden die verbliebenen Lagergutträger 12 der Übergabestation weiter nach oben befördert (siehe Pfeil). Die Lagergutträger 12 können an ein weiteres Bedienfahrzeug 18 (Einzelfahrzeug oder Mehrfachfahrzeug) übergeben werden.

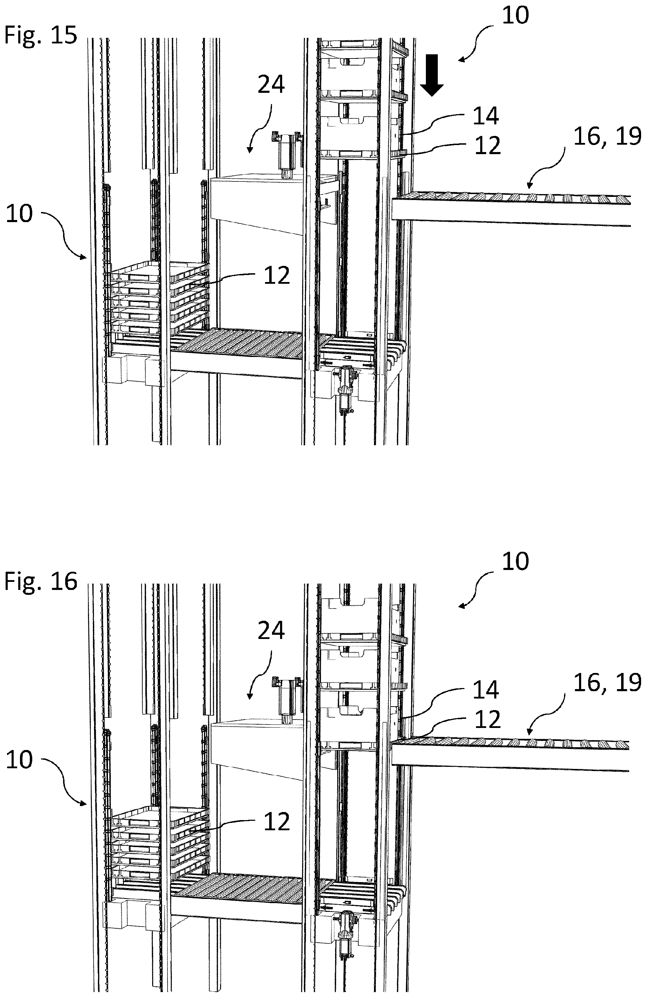

**Figuren 15-26** zeigen schematische Ansichten eines Zusammenspiels zwischen einer Übergabestation 10 und einer Entladestation 24. Die Entladestation 24 dient zum Entladen von Lagergütern 14 aus der Übergabestation 10, wobei die entladenen Lagergutträger 12 in der Übergabestation 10 verbleiben. In **Figuren 15-26** werden die entladenen Lagergutträger 12 anschließend einer weiteren Übergabestation 10 übergeben.

In **Figuren 15 und 16** werden die übereinander nicht-gestapelt gehaltenen Lagergutträger 12 inklusive ihrer Lagergüter 14 in einen Bereich eines Übergabeniveaus 16 einer Weiterverarbeitungseinheit 19 bewegt (angedeutet durch den Pfeil in **Figur 15**). Die Weiterverarbeitungseinheit 19 kann ein Fördersystem sein. Die Weiterverarbeitungseinheit 19 kann zur Vereinzelung der in der Übergabestation 10 befindlichen und übereinander nicht-gestapelt gehaltenen Lagergüter 14 dienen.

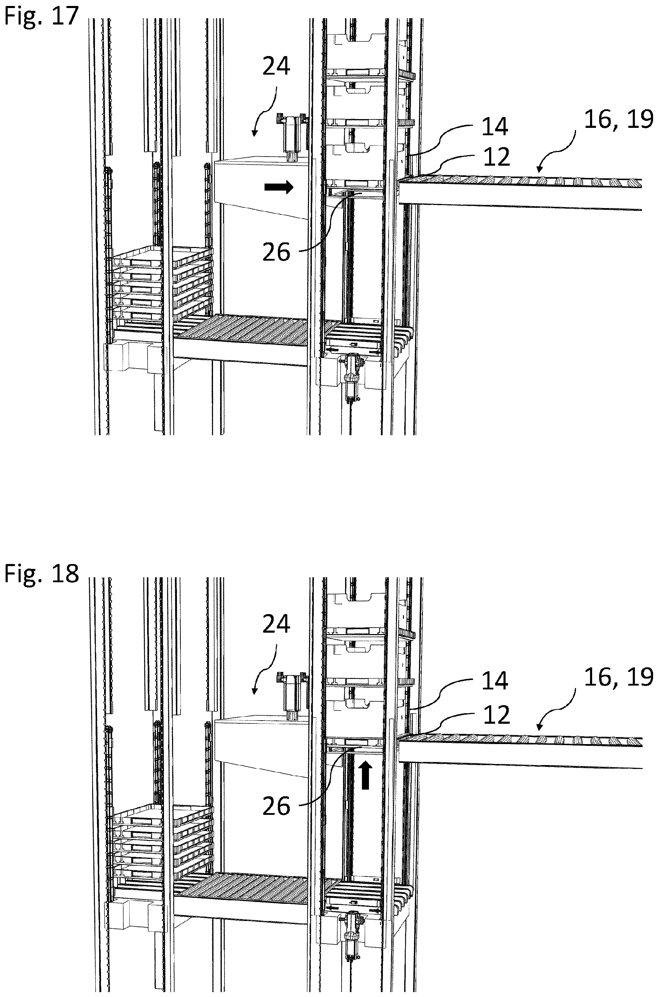

**Figur 17** zeigt die Entladestation 24 mit einer Anhebeeinheit 26, die beispielsweise seitlich aus der Entladestation 24 herausfahren kann (angedeutet durch den Pfeil). Die Anhebeeinheit 26 ermöglicht die Lagergüter 14 über einen Rand oder Rahmen der Lagergutträger 12 anzuheben. Vorzugsweise erfolgt das Anheben durch ein Hochdrücken der Lagergüter 14 relativ zum Lagergutträger 12 von unten, wie in **Figur 18** gezeigt ist. Der Lagergutträger 12 kann hierfür einen doppelten Boden und/oder Schlitze aufweisen, sodass die Anhebeeinheit 26 die Lagergüter 14 von unten anheben kann (bspw. mittels ausfahrbarer Vorsprünge).

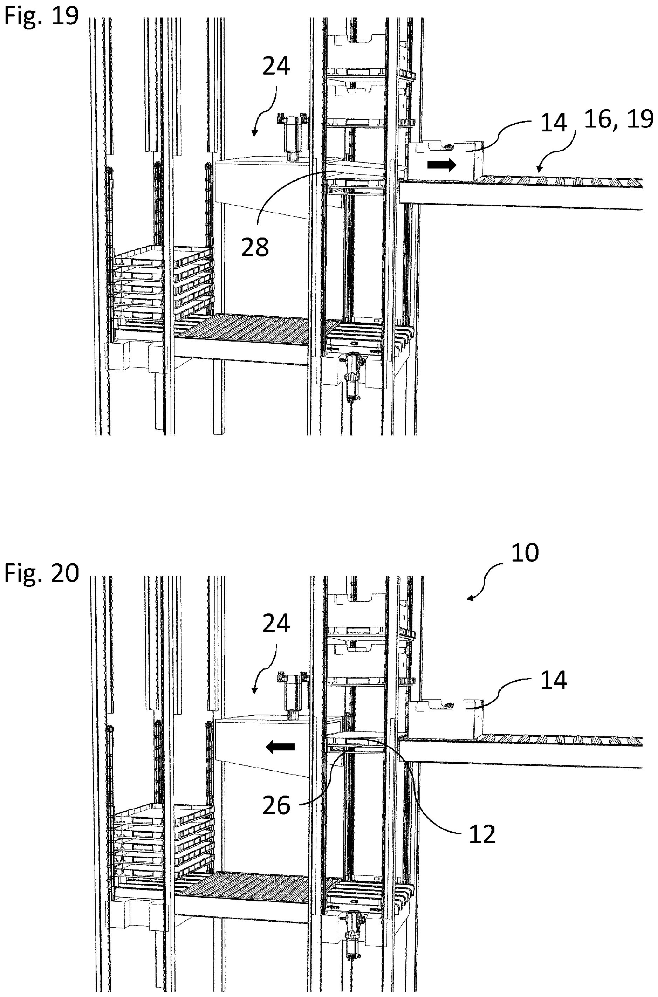

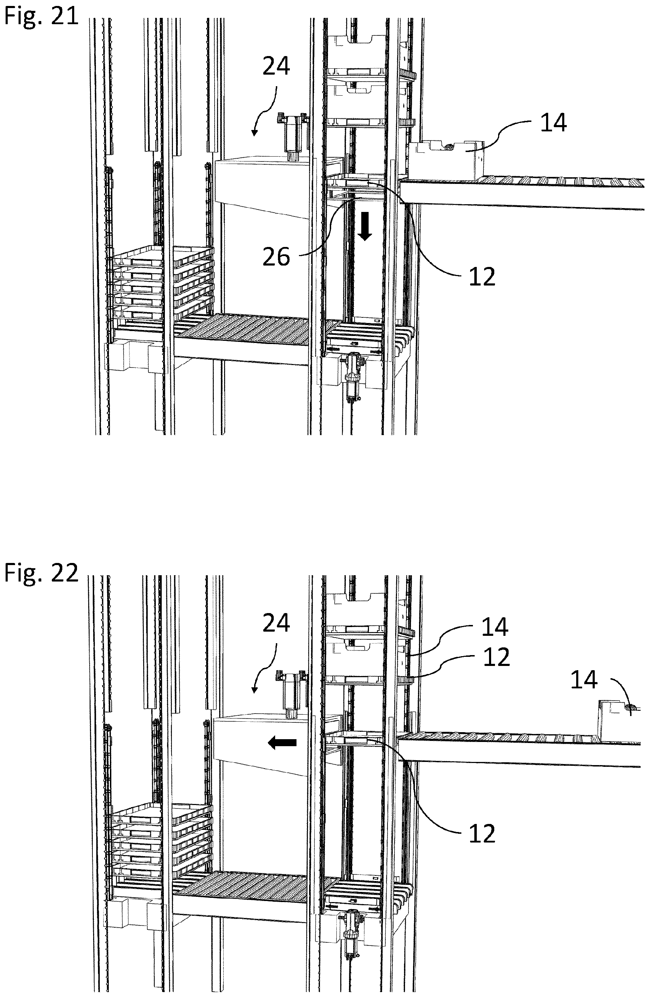

**Figur 19** zeigt eine Ausschiebeeinheit (Pusher oder Schieber) 28, die die angehobenen Lagergüter 14 auf die Weiterverarbeitungseinheit 19 schiebt. In **Figur 20** ist die Ausschiebeeinheit 28 seitlich in die Entladestation 24 eingefahren worden (angedeutet durch den Pfeil). In **Figur 21 und 22** wird die Anhebeeinheit 26 nach unten verfahren (angedeutet durch den Pfeil in **Figur 21**) und anschließend seitlich in die Entladestation 24 verfahren (angedeutet durch den Pfeil in **Figur 22**). In der Übergabestation 10 verbleibt der entladene Lagergutträger 12.

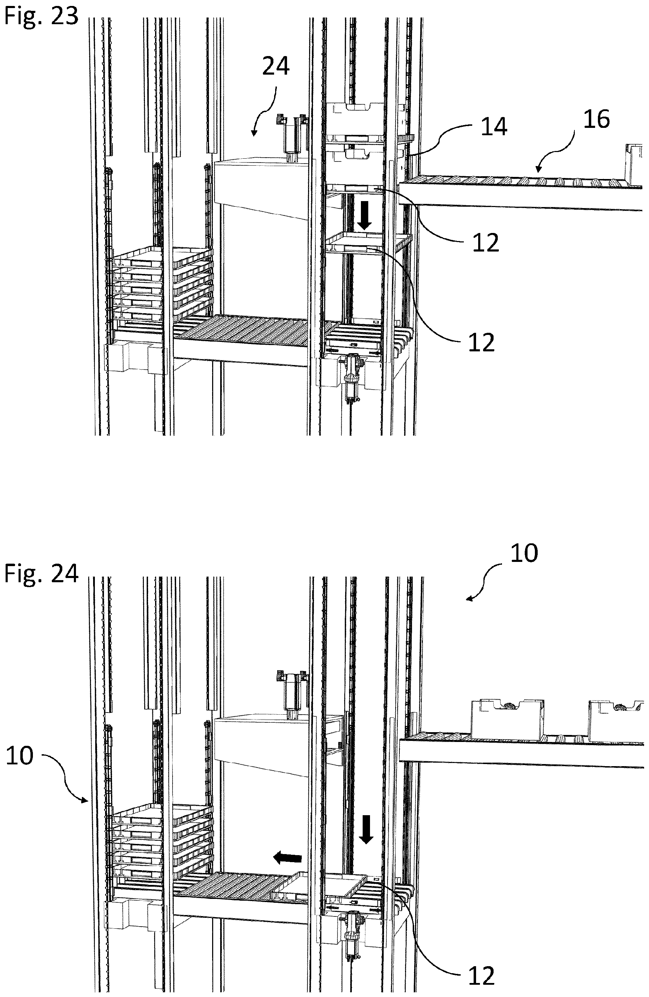

In **Figur 23** wurde der nächste zu entladene Lagergutträger 12 in den Bereich des Übergabeniveaus 16 bewegt. Der unterhalb befindliche und bereits entladene Lagergutträger 12 wurde aufgrund des Paternoster-Prinzips ebenfalls nach unten bewegt. Wie weit die Lagergutträger 12 nach unten bewegt werden, hängt von der tatsächlichen Höhe (Gesamthöhe) des Lagergutträgers 12 inklusive der darauf befindlichen Lagergüter 14 ab. Die jeweilige Gesamthöhe kann auf einem Datenspeicher von beispielsweise dem Warenlagersystem oder einer übergeordneten IT-Struktur hinterlegt sein. Die auf dem Datenspeicher gespeicherte Gesamthöhe kann der Übergabestation beispielsweise über eine Kommunikationsverbindung zugänglich sein. Eine Steuerung der Übergabestation 10 kann den Paternoster schrittweise derart verfahren, dass die Lagergutträger 12 im Bereich des Übergabeniveaus 16 angeordnet sind und die Entladestation 24 die Lagergüter 14 entladen kann. Das schrittweise Verfahren und auch das Ermitteln der Gesamthöhe wird später näher erklärt.

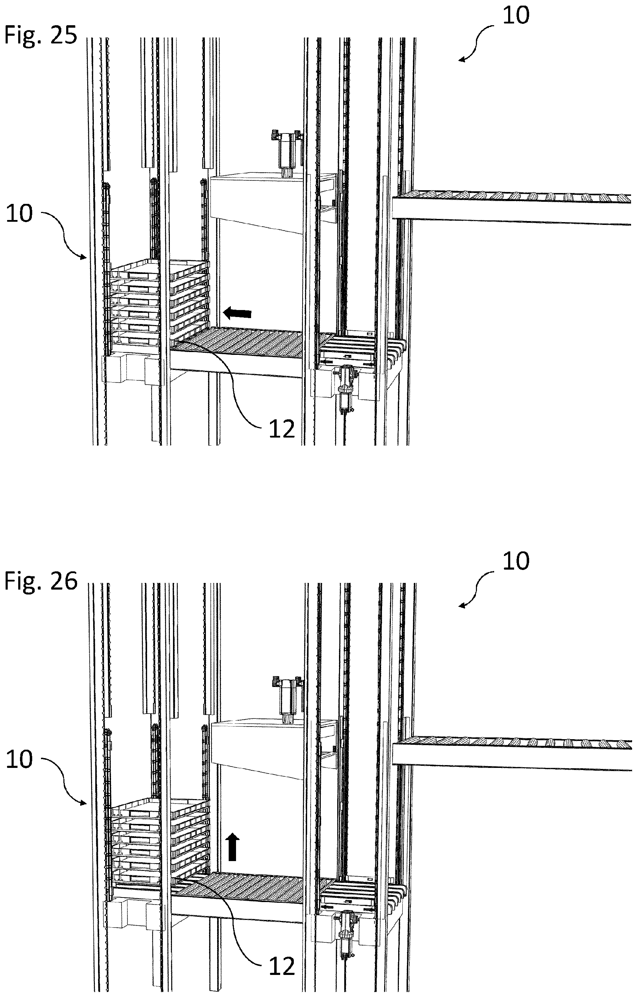

In **Figur 24** ist gezeigt, wie der unterste entladene Lagergutträger 12 so weit nach unten gefahren wurde, dass er über ein weiteres Fördersystem aus der ersten Übergabestation 10 entnommen werden kann. Eine zweite Übergabestation 10, die im vorliegenden Beispiel nur leere Lagergutträger 12 aufweist, kann die übereinander nicht-gestapelt gehaltenen Lagergutträger 12 derart verfahren, dass ausreichend Platz für die nicht-gestapelte Aufnahme des aus der ersten Übergabestation 10 entnommenen Lagergutträgers 12 besteht. **Figur 25** zeigt wie der von der ersten Übergabestation 10 entnommene Lagergutträger 12 in der zweiten Übergabestation 10 nicht-gestapelt aufgenommen wurde. In **Figur 26** ist gezeigt, wie übereinander nicht-gestapelt gehaltenen Lagergutträger 12 nach oben bewegt werden, beispielsweise um Platz für einen weiteren Lagergutträger 12 der ersten Übergabestation 10 zu schaffen.

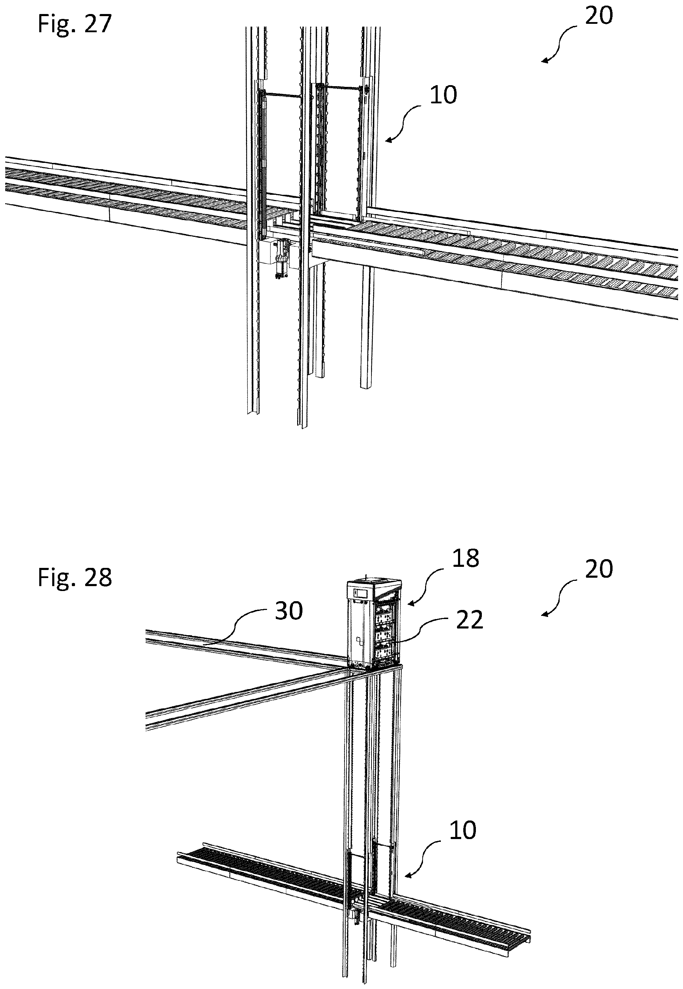

**Figuren 27-28** zeigen schematische Ansichten einer Übergabestation 10, die freistehend oder außerhalb von Schächten des Warenlagersystems 20 angeordnet ist. In **Figur 28** ist gezeigt, dass die Übergabestation 10 über ein Schienensystem 30 des Warenlagersystem 20 angebunden ist. Das Schienensystem 30 weist Fahrschienen auf, die in Form einer 2D Matrix auf oder unter den Schächten angeordnet sein können. Im konkreten Beispiel verläuft das Schienensystem 30 so, dass das Bedienfahrzeug 18 eine Position oberhalb der Übergabestation 10 einnehmen kann. Die Aufnahmeeinheit 22 des Bedienfahrzeugs 18 kann von oben in die Übergabestation 10 einfahren oder aus ihr herausfahren. Eine Höhe der Übergabestation 10 kann maximal 40%, vorzugsweise maximal 30%, weiter vorzugsweise maximal 20% einer Schachthöhe des Warenlagersystems 20 sein.

**Figur 29** zeigt Ansichten einer Variante, bei der die Übergabestation 10 in einen Schacht 32 oder einen Abschnitt eines Schachts 32 des Warenlagersystems 20 eingebaut, angeordnet oder integriert ist.

Der Schacht 32 ist zumindest abschnittsweise, vorzugsweise über die gesamte Schachthöhe, dazu ausgebildet Lagergutträger 12 inklusive ihrer Lagergüter 14 übereinander nicht-gestapelt zu halten bzw. abzustützen. Der Schacht 32 weist hierfür Schacht-Abstützelemente 33 auf, die voneinander beabstandet sind, um die Lagergutträger 12 übereinander nicht-gestapelt abzustützen. Die Schacht-Abstützelemente 33 können Sicherungsabschnitte aufweisen, die ein Verdrehen, Verrutschen oder Herausfallen der Lagergutträger 12 aus dem Schacht 32 verhindern. Konturen derSchacht-Abstützelemente 33 können mit einer Haltekontur am Lagergutträger 12 ineinandergreifen, um den Lagergutträger 12 zu sichern. Die Sicherung kann vorzugsweise ohne bewegliche Elemente am Lagergutträger 12 und/oder Schacht 32 erreicht werden. Die Schacht-Abstützelemente 33 können zur Sicherung mit einer Haltekontur (auch erste Haltekontur oder dritte Haltekontur) der Lagergutträger 12 eingreifen.

Die Übergabestation 10 kann an beliebiger Höhe in einen der Schächte 32 integriert sein, z.B. an einer Position über einem Drittel oder über der Hälfte der Schachthöhe des Schachts 32. Eine Grundfläche der Übergabestation 10 kann so ausgebildet sein, dass sie an eine Grundfläche des Schachts 32 angepasst ist, oder dieser entspricht. Eine Höhe der Übergabestation kann mindestens 50 %, vorzugsweise mindestens 80 % der Schachthöhe betragen. In Figur 29 ist zudem eine Verarbeitungseinheit 17 oder eine Weiterverarbeitungseinheit 19 angedeutet, die in Zusammenspiel mit der Übergabeeinheit 10 Lagergutträger 12 übernehmen oder übergeben kann. In einer anderen nicht gezeigten Ausführungsform kann das Bedienfahrzeug 18 auch so gestaltet sein, dass die Aufnahmeeinheit 22 durch die Übergabestation 10 hindurchfahren kann und somit Lagergutträger aus der Übergabestation 10 in dem Schacht 32, in dem die Übergabestation 10 angeordnet ist, nach oben und unten transportieren kann.

Die **Figur 30** zeigt eine Detailansicht der Übergabestation 10.

Die Übergabestation 10 weist eine Übergabeeinheit 34 auf, die Übergabeeinheit 34 ist der Teil der Übergabestation 10, der als "Aufzug" oder "Paternoster" dient.

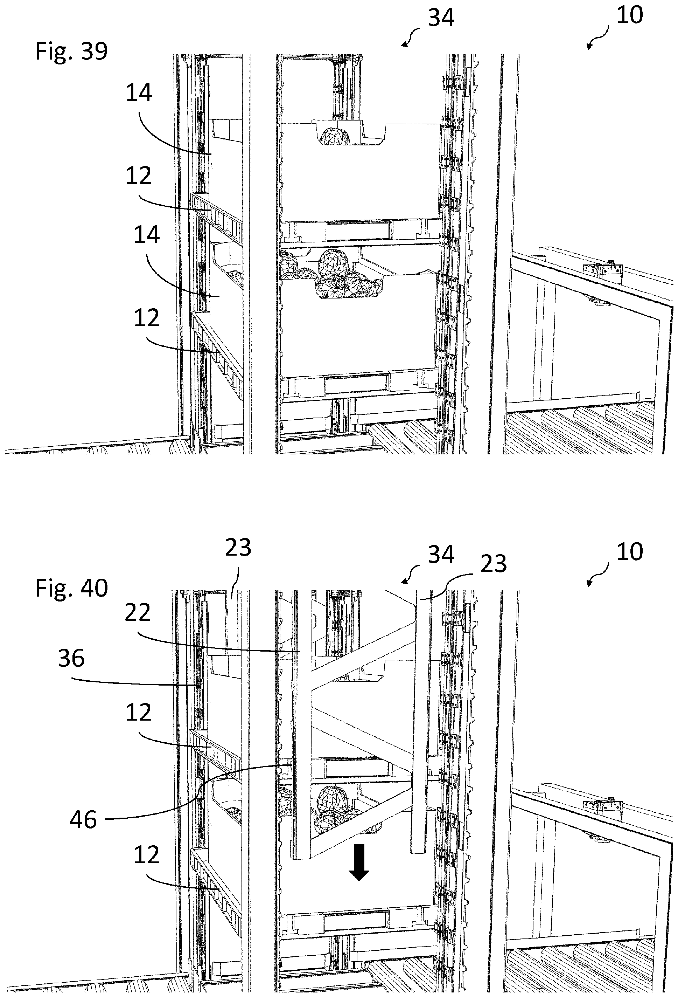

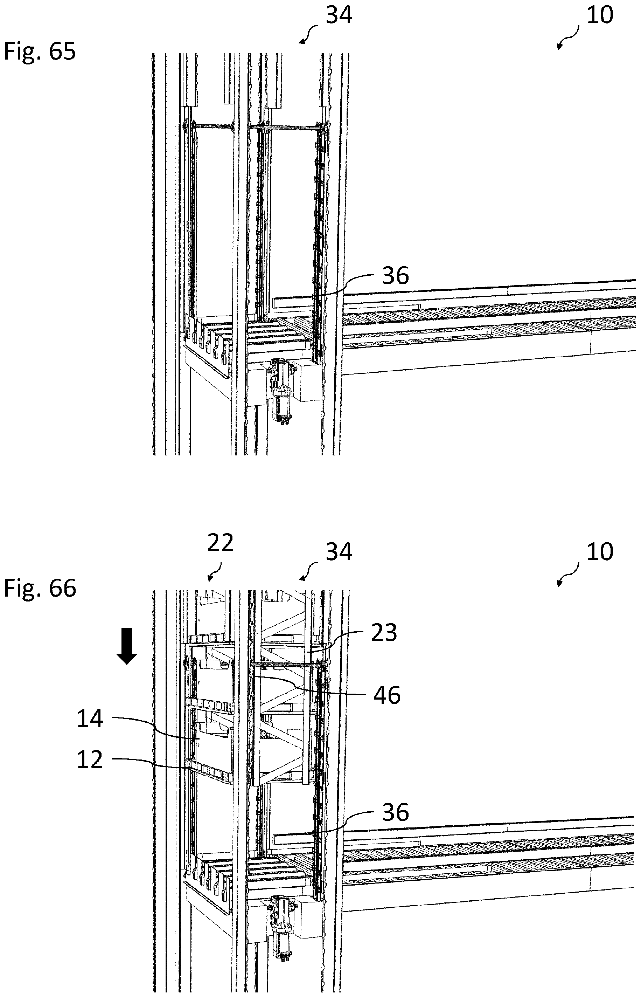

Die Übergabeeinheit 34 dient zur Übergabe der Lagergutträger 12 an das Bedienfahrzeug 18 (vergleiche hierzu beispielsweise **Figuren 39-46**) oder zur Aufnahme von Lagergutträgern 12 von einem Bedienfahrzeug 18 des Warenlagersystems 20 (vergleiche hierzu beispielsweise **Figuren 65-72**).

Die Übergabeeinheit 34 ist dazu ausgebildet, gleichzeitig mehrere in der Übergabeeinheit 34 aufgenommene Lagergutträger 12, inklusiver etwaiger auf den Lagergutträgern 12 vorhandener Lagergüter 14, voneinander beabstandet und übereinander nicht-gestapelt zu halten. Mittels der Übergabeeinheit 34 können mehrere übereinander nicht-gestapelt gehaltene Lagergutträger 12 dem Bedienfahrzeug 18 gleichzeitig übergeben werden und/oder mehrere Lagergutträger 12 vom Bedienfahrzeug 18 übereinander nicht-gestapelt gleichzeitig übernommen werden.

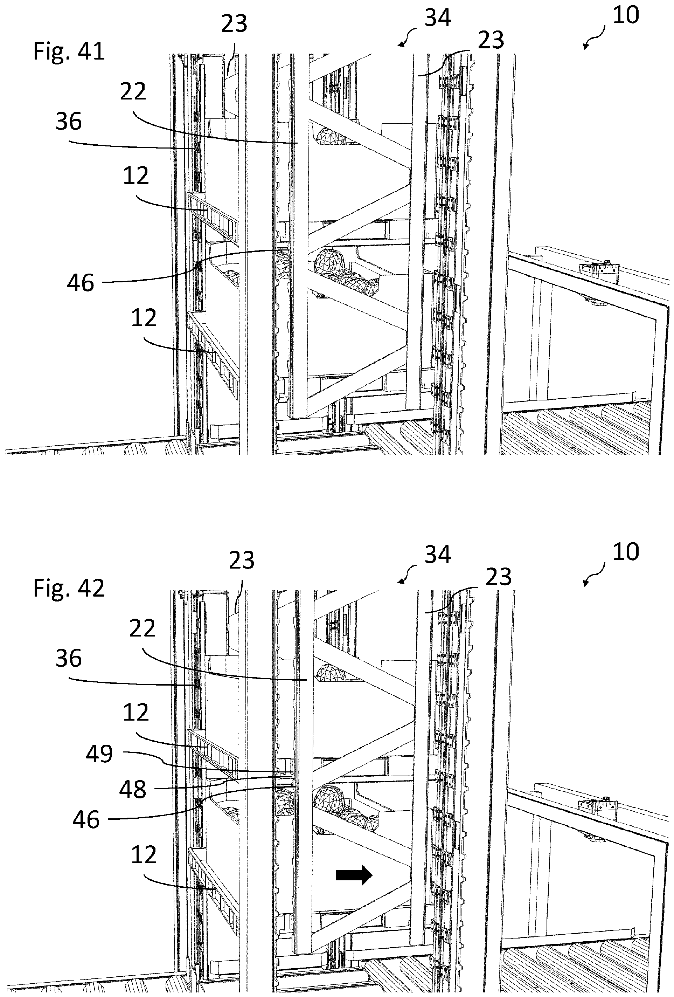

Die Übergabeeinheit 34 weist mehrere Halteelemente 36 auf, die derart angeordnet sind, dass die mehreren Lagergutträger 12 voneinander beabstandet gehalten sind. Die Halteelemente 36 sind in vertikaler Richtung mit einem vorbestimmten Abstand und/oder mit einem vorbestimmten Rastmaß voneinander beabstandet. Der Abstand und/oder das Rastmaß entspricht einem Abstand und/oder einem Rastmaß von Schacht-Abstützelementen 33 des Schachts 32 (siehe **Figur 29**), und/oder einem Abstand und/oder einem Rastmaß von Aufnahmeeinheit-Halteelementen 46 (siehe **Figuren 40****,** **41**) des Bedienfahrzeugs 18. Die Haltelemente 36 sind in der Übergabeeinheit 34 verfahrbar, vorzugsweise vertikal verfahrbar, vorzugsweise bidirektional nach oben und unten verfahrbar, weiter vorzugsweise schrittweise verfahrbar.

Im konkreten Beispiel von **Figur 30** weist die Übergabeeinheit 34 ein umlaufendes Zugmittel 38 auf. Das Zugmittel 38 kann ein umlaufender Zahnriemen, ein umlaufendes Seil oder eine umlaufende Kette sein. An dem umlaufenden Zugmittel 38 sind die Halteelemente 36 in vertikal voneinander beabstandeten Positionen angebracht. Die Übergabestation 10 kann einen Antrieb aufweisen, der das umlaufende Zugmittel 38 derart antreibt, dass die Halteelemente 36 in vertikaler Richtung, vorzugsweise schrittweise, nach oben oder unten innerhalb der Übergabeeinheit 34 verfahrbar sind.

Im konkreten Beispiel sind in der Übergabeeinheit 34 vier umlaufende Zugmittel 38 vorhanden, die jeweils an einer Ecke der zu haltenden Lagergutträger 12 angeordnet sind. In anderen Ausführungsformen können zwei an gegenüberliegenden Seiten der Lagergutträger angeordnete umlaufende Zugmittel 38 vorhanden sein. Auch ist es denkbar, dass mehr als zwei oder vier umlaufende Zugmittel 38 vorgesehen sind.

Jedes der umlaufenden Zugmittel 38 weist mindestens zwei, vorzugsweise mindestens fünf, weiter vorzugsweise mindestens 10, weiter vorzugsweise mindestens 100, Halteelemente 36 auf.

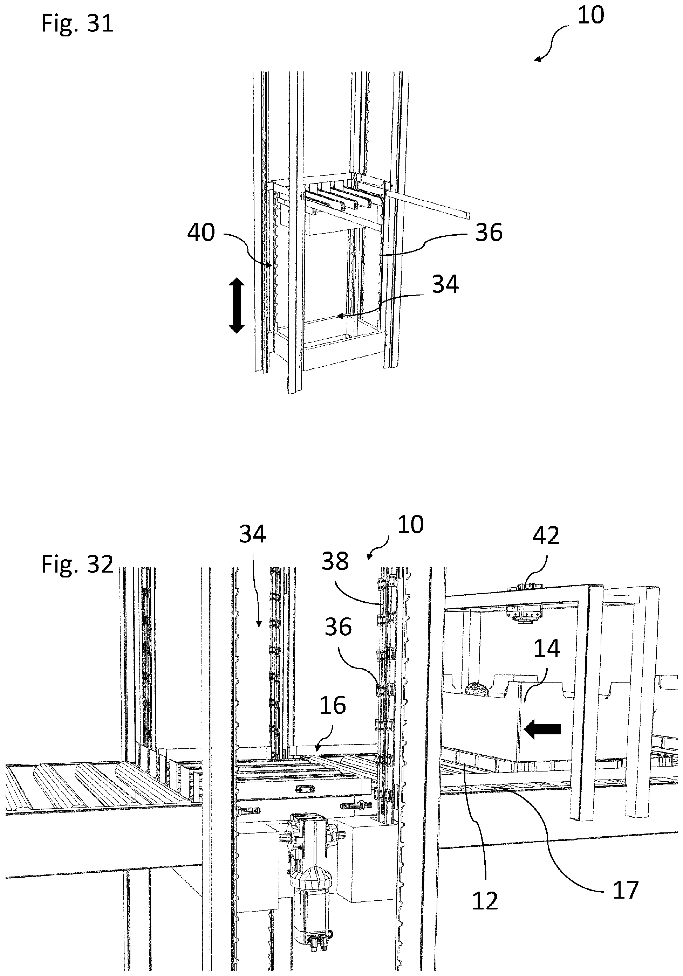

**Figur 31** zeigt eine Detailansicht einer weiteren Ausführungsform der Übergabestation 10.

In der Ausführungsform von **Figur 31** weist die Übergabeeinheit 34 der Übergabestation 10 vertikale Stangen oder Balken 40 auf. Im konkreten Beispiel sind vier sich vertikal erstreckende, Stangen oder Balken 40 an gegenüberliegenden Ecken angeordnet. In anderen Ausführungsformen können zwei an gegenüberliegenden Seiten der Lagergutträger angeordnete Stangen oder Balken 40 vorhanden sein. Auch ist es denkbar, dass mehr als zwei oder vier Stangen oder Balken 40 vorgesehen sind.

Die Stangen oder Balken 40 weisen jeweils Halteelemente 36 auf, die in vertikal voneinander beabstandeten Positionen angebracht sind. Die Stangen oder Balken 40 sind derart verfahrbar, dass die Halteelemente 36 in vertikaler Richtung, vorzugsweise schrittweise, nach oben oder unten innerhalb der Übergabeeinheit 34 verfahrbar sind. Die Übergabestation 10 kann einen Antrieb aufweisen, der die Stangen oder Balken 40 derart antreibt, dass die Halteelemente 36 in vertikaler Richtung, vorzugsweise schrittweise, nach oben oder unten innerhalb der Übergabeeinheit 34 verfahrbar sind.

Bei der Übergabestation 10 von **Figuren 30****,** **31** können die Halteelemente 36 derart verfahren werden, dass die von den Halteelementen 36 gehaltenen Lagergutträger 12 schrittweise nacheinander auf das Übergabeniveau 16 der Verarbeitungseinheit 17 oder der Weiterverarbeitungseinheit 19 verfahrbar sind.

**Figuren 32-36** zeigen schematische Ansichten, bei denen von einer vorgelagerten Verarbeitungseinheit 17 bereitgestellte Lagergutträger 12 inklusive ihrer Lagergüter 14 schrittweise von der Übergabestation 10 aufgenommen und in der Übergabestation 10 übereinander nicht-gestapelt gehalten werden.

**Figur 32** zeigt die Übergabeeinheit 34 der Übergabestation 10. In der konkreten Ausführungsform sind die Halteelemente 36 an umlaufenden Zugmitteln 38 angebracht, können in anderen Ausführungsformen aber auch an Stangen oder Balken 40 (siehe **Figur 31**) angebracht sein.

**Figur 32** zeigt ferner einen Lagergutträger 12 mit Lagergut 14. Der Lagergutträger 12 wird von einer Verarbeitungseinheit 17 auf einem Übergabeniveau 16 bereitgestellt.

Die Übergabeeinheit 10 kann eine Sensorik 42 aufweisen, welche dazu ausgebildet ist, eine Gesamthöhe des zu übergebenden Lagergutträgers 12 inklusive etwaiger darauf befindlicher Lagergüter 14 und/oder eines zuletzt übernommenen Lagergutträgers 12 inklusive etwaiger darauf befindlicher Lagergüter 14 zu erfassen.

Die Sensorik 42 kann dazu ausgebildet sein, eine Lage und/oder Orientierung der Lagergüter 14 zu erfassen, vorzugsweise in Echtzeit oder zumindest in einer Taktzeit, die an eine Fördergeschwindigkeit der Verarbeitungseinheit 17 angepasst ist. Die Sensorik 42 kann ein Positionssensor, ein optoelektronisches System und/oder ein Kamerasystem zur Ermittlung der Höhe, Lage und/oder Orientierung aufweisen.

Alternativ kann die Übergabeeinheit 10 eine Kommunikationsverbindung zu einem Datenspeicher aufweisen, in dem eine Gesamthöhe der aufzunehmenden Lagergutträger 12 inklusive etwaiger darauf befindlicher Lagergüter 14 gespeichert ist. Die Gesamthöhe wird vorzugsweise vor der Aufnahme der Lagergutträger 12 in der Übergabeeinheit 34 erfasst. Beispielsweise durch eine Wareneingangssensorik oder ein anderes Datenerfassungssystem von beispielsweise dem Warenlagersystem oder einer übergeordneten IT-Struktur.

Die Übergabestation 10 kann ferner eine Kontrolleinheit zur Kontrolle, vorzugsweise zur Konturen- und/oder Gewichtskontrolle, der aufgenommenen oder zu übergebenden Lagergüter 14 bzw. Lagergutträger 12 aufweisen. Beispielsweise ist es denkbar, dass die Gesamthöhe, Kontur etc. bereits im Datenspeicher gespeichert ist, die Übergabestation 10 aber mittels der Kontrolleinheit sicherstellen kann, ob nicht eine unvorhergesehene Abweichung von der "erwarteten" Kontur und/oder Gesamthöhe etc. besteht, die bei der Aufnahme in die Übergabeeinheit 34 problematisch wäre und möglicherweise zu einem Stillstand oder ein Blockieren der Übergabeeinheit 34 führen würde.

Die Verarbeitungseinheit 17 fördert den aufzunehmenden Lagergutträger 12 inklusiver der Lagergüter 14 seitlich in die Übergabeeinheit 34 hinein, wie durch den Pfeil in **Figur 32** angedeutet ist. Die Halteelemente 36 sind so angeordnet, dass der Lagergutträger 12 in die Übergabeeinheit 34 einfahren kann und nicht durch die Halteelemente 36 blockiert ist.

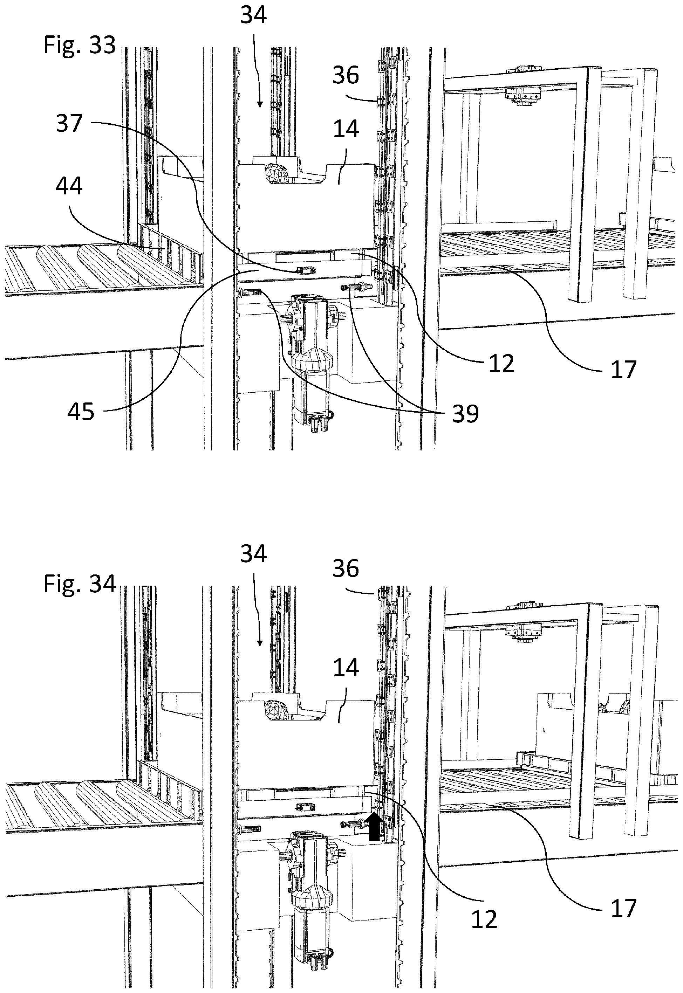

In **Figur 33** ist der in der Übergabeeinheit 34 befindliche Lagergutträger 12 inklusive Lagergut 14 gezeigt. Die Übergabestation 10 weist einen Anschlag 44 auf, der einen ankommenden Lagergutträger 12 in Einlaufrichtung (hier von rechts) an einer definierten Übergabeposition stoppt und/oder in seiner Position relativ zur Übergabeeinheit 34 ausrichtet. Zusätzlich können Seitenteilführungen 45 vorgesehen sein, die zusammen mit dem Anschlag 44 zur Ausrichtung der Lagergutträger 12 genutzt werden können. Der Anschlag 44 und die Seitenteilführungen 45 können Teil einer Ausrichteinheit zur Ausrichtung der Lagergutträger 12 in der Übergabeeinheit 34 sein.

Die Übergabestation 34 kann ferner eine Sensorik 37 aufweisen, die ermittelt, wann ein Lagergutträger 12 im Bereich des Übergabeniveaus 16 angeordnet ist. Die Sensorik 37 kann eine Lichtschranke oder eine andere, zweckmäßige Sensorik sein und vorzugsweise an den Seitenteilführungen 45 angeordnet sein.

Die Übergabestation 34 kann ferner eine weitere Sensorik 39 zur Ermittlung einer Position der Halteelemente 36 aufweisen.

Die Übergabestation 10 weist ferner eine Steuerung (nicht gezeigt) auf, die Halteelemente 36 in Abhängigkeit der ermittelten und/oder gespeicherten Gesamthöhe vertikal verfahren kann.

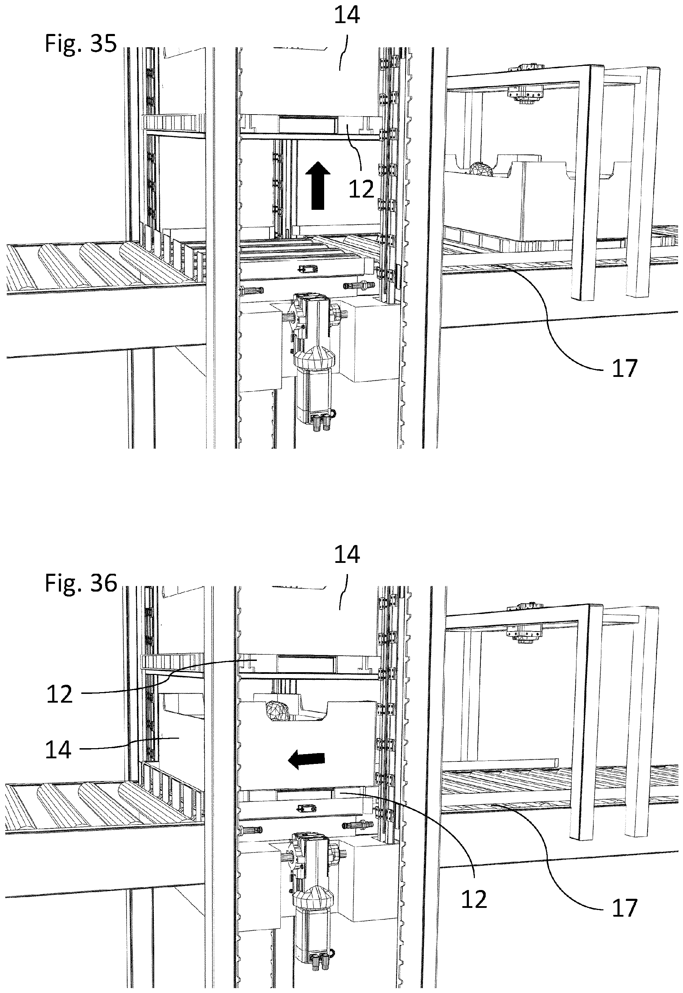

In **Figur 34** **und** **35** ist gezeigt, wie die aufnehmenden Halteelemente 36 nach oben verfahren werden. Durch das Verfahren der Halteelemente 36 nach oben greifen die aufnehmenden Halteelemente 36 in Konturen (auch erste Konturen) des Lagergutträgers 12 ein (siehe Pfeil in **Figur 34**) und wird der Lagergutträger 12 inklusive seiner Lagergüter 14 in der Übergabeeinheit 34 nach oben bewegt (siehe Pfeil in **Figur 35**), wie bei einem "Aufzug" oder "Paternoster".

Die Halteelemente 36 können Sicherungsabschnitte aufweisen, die dazu ausgebildet sind, die gehaltenen Lagergutträger 12 gegen Verdrehen und/oder Verrutschen zu sichern.

Alternativ oder zusätzlich können Konturen der Halteelemente 36 mit einer am Lagergutträger 12 ausgebildeten Haltekontur ineinandergreifen, um den Lagergutträger 12 zu sichern, vorzugsweise gegen Verschieben und/oder Verdrehen und/oder Herausfallen. Vorzugsweise ist die am Lagergutträger 12 ausgebildete Haltekontur starr und/oder einstückig mit einem Seitenrahmen und/oder mit der Grundfläche des Lagergutträgers 12 ausgebildet und/oder verbunden. Die Sicherung des Lagergutträgers 12 in der Übergabeeinheit 34 kann ohne bewegliche Elemente am Lagergutträger 12 und/oder der Übergabeeinheit 34 erreicht werden.

Die Haltekontur des Lagergutträgers 12 kann eine erste Haltekontur sein. Die erste Haltekontur kann einstückig an dem jeweiligen Lagergutträger 12 ausgebildet sein und/oder nicht beweglich sein. Eine zweite Haltekontur des Lagergutträgers 12 kann vorgesehen sein, für die Aufnahme in einer Aufnahmeeinheit des Bedienfahrzeugs, wie später näher erklärt wird.

Die Steuerung verfährt die Haltelemente 36 in Abhängigkeit der erfassten oder gespeicherten Gesamthöhe so weit nach oben, dass ausreichend Platz für den nächsten aufzunehmenden Lagergutträger 12 inklusive etwaiger darauf befindlicher Lagergüter 14 besteht, ohne dass die Lagergüter 14 des neu aufgenommene Lagergutträgers 12 den bereits aufgenommenen Lagergutträger 12 berühren.

Dadurch werden mehrere Lagergutträger 12 inklusive ihrer Lagergüter 14 sukzessive aufgenommen und anschließend gleichzeitig nicht-gestapelt in der Übergabeeinheit 34 gehalten, ohne dass sich die Lagergutträger 12 inklusive ihrer Lagergüter 14 aufeinander abstützen und/oder einander berühren und/oder Lagergüter 14 einen darüber befindlichen Lagergutträger 12 berühren.

**Figur 36** zeigt, wie der bereits aufgenommene Lagergutträger 12 ausreichend weit nach oben bewegt wurde, sodass der neu aufgenommene Lagergutträger 12 inklusive seiner Lagergüter 14 nicht-gestapelt gehalten werden kann.

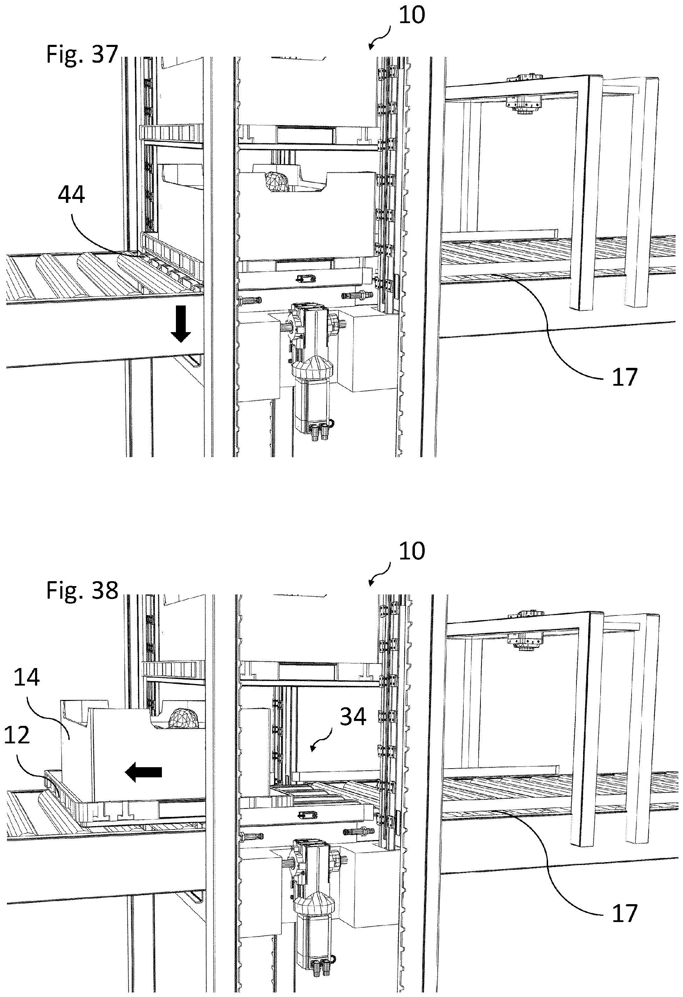

In **Figuren 37 und 38** ist gezeigt, wie der verfahrbare Anschlag 44 derart verfahren wurde, dass ankommende Lagergutträger 12 inklusive ihrer Lagergüter 14 durch die Übergabeeinheit 34 der Übergabestation 10 durchführbar sind, ohne von der Übergabeeinheit 34 aufgenommen zu werden.

**Figur 39-46** zeigen schematische Detailansichten einer gleichzeitigen Übergabe von mehreren in der Übergabestation 10 übereinander nicht-gestapelt gehaltenen Lagergutträgern 12 an ein mehraufnahmetaugliches Bedienfahrzeug (Mehrfachfahrzeug) 18 eines Warenlagersystems 20.

**Figur 39** zeigt die Übergabeeinheit 34 der Übergabestation 10 mit den zu übergebenden Lagergutträgern 12 inklusive ihrer Lagergüter 14.

In **Figuren 40** **und** **41** fährt die Aufnahmeeinheit (der Greifer) 22 des Bedienfahrzeugs 18 (vergleiche beispielsweise **Figur 10**) von oben in die Übergabeeinheit 34. Die Aufnahmeeinheit weist Aufnahmeeinheit-Haltelemente 46 auf, die voneinander vertikal beabstandet angeordnet sind. Ein vertikaler Abstand der Aufnahmeeinheit-Halteelemente 46 ist vorzugsweise identisch zu einem Abstand der Halteelemente 36 der Übergabeeinheit 34.

Die Aufnahmeeinheit 22 weist zwei gegenüberliegend angeordnete Trägerabschnitte 23 auf, die die zu übergebenden Lagergutträger 12 von gegenüberliegenden Seiten greifen können.

In **Figuren 40** **und** **41** ist die Aufnahmeeinheit 22 in einer ersten Auslager-Position (erste Übernahme-Position), in der die Aufnahmeeinheit-Halteelemente 46 der Aufnahmeeinheit 22 an Konturen der Lagergutträger 12 ohne Überlappung vorbeibewegbar sind (siehe Pfeil in **Figur 40**).

In **Figur 42** befindet sich die Aufnahmeeinheit 22 in einer zweiten Auslager-Position (zweite Übernahme-Position), in der Konturen der Aufnahmeeinheit 22 (hier starre Aufnahmeeinheit-Halteelemente 46) mit Konturen der Lagergutträger 12 (hier Aussparung 48) zumindest in Draufsicht auf die Lagergutträger 12 überlappen, ohne einander zu kontaktieren. Im konkreten Beispiel wird zumindest ein Teil der Aufnahmeeinheit 22 (hier Trägerabschnitte 23) durch seitliches Verschieben (siehe Pfeil) von der ersten Auslager-Position (**Figur 41**) in die zweite Auslager-Position (**Figur 42**) bewegt. In anderen nicht gezeigten Ausführungsformen können andere Bewegungen möglich sein, beispielsweise ein Verschwenken, ein Aufeinanderzubewegen und/oder -schwenken der Trägerabschnitte 23. Generell ist auch nur ein Verklemmen der Lagergutträger 12 ohne Überschneidung von Konturen denkbar.

In der ersten und in der zweiten Auslager-Position befinden sich die Lagergutträger 12 in der in der Übergabeeinheit 34 abgestützten Position, in der sich Konturen der Lagergutträger 12 mit Konturen der Aufnahmeeinheit 22 (hier Aufnahmeeinheit-Halteelemente 46) überlappen, ohne in Kontakt zu sein.

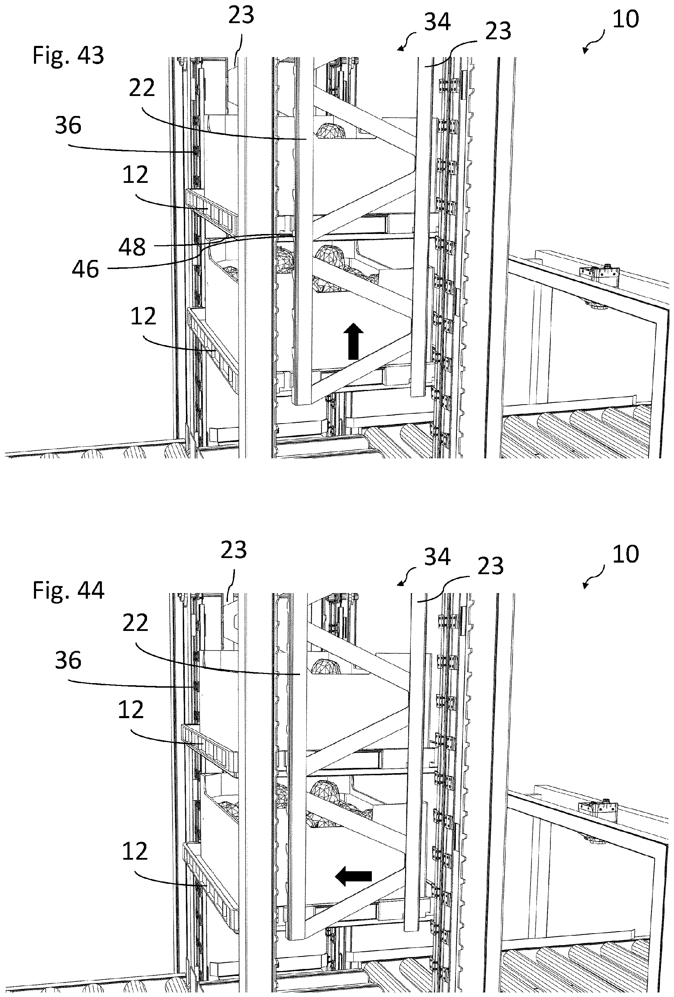

In **Figur 43** ist die Aufnahmeeinheit 22 in einer dritten Auslager-Position (dritte Übernahme-Position) gezeigt. In der dritten Auslager-Position sind die Konturen der Lagergutträger 12 (hier Aussparung 48) und die Konturen der Aufnahmeeinheit 22 (hier starre Aufnahmeeinheit-Halteelemente 46) in Kontakt, sodass die Lagergutträger 12 in der Aufnahmeeinheit 22 gehalten werden können. Die Aufnahmeeinheit 22 wird durch vertikales Bewegen nach oben (siehe Pfeil) von der zweiten in die dritte Auslager-Position bewegt. Durch die Bewegung nach oben können die Lagergutträger 12 gleichzeitig zudem aus einem Sicherungsabschnitt der Haltelemente 36 gelöst werden.

In der dritten Auslager-Position sind die Lagergutträger 12 nicht-gestapelt in der Aufnahmeeinheit 22 gehalten und von den Halteelementen 36 der Übergabeeinheit 34 gelöst (erkennbar am Spalt zwischen Lagergutträger 12 und Halteelement 36). In der dritten Auslager-Position können Konturen der Lagergutträger 12 mit Konturen der Übergabeeinheit 34 (hier Halteelemente 36) überlappen, ohne jedoch in Kontakt zu sein.

Die Aufnahmeeinheit-Halteelemente 46 können Sicherungsabschnitte aufweisen, die dazu ausgebildet sind, die gehaltenen Lagergutträger 12 gegen Verdrehen und/oder Verrutschen zu sichern. Alternativ oder zusätzlich können die Aufnahmeeinheit-Haltelemente 46 dazu ausgebildet sind, mit einer am Lagergutträger 12 ausgebildeten Haltekontur (beispielsweise Kontur 49 in **Figur 42**) ineinander zu greifen, um den Lagergutträger 12 zu sichern, vorzugsweise gegen Verschieben und/oder Verdrehen und/oder Herausfallen. Die am Lagergutträger 12 ausgebildete Haltekontur ist vorzugsweise starr und/oder einstückig mit einem Seitenrahmen und/oder mit der Grundfläche des Lagergutträgers 12 ausgebildet und/oder verbunden. Die Sicherung kann ohne bewegliche Elemente am Lagergutträger 12 und/oder der Aufnahmeeinheit 22 erreicht wird.

Die Aufnahmeeinheit-Halteelemente 46 können zur Sicherung mit einer zweiten Haltekontur (hier Aussparung 48 und/oder Kontur 49) der Lagergutträger 12 eingreifen, vorzugsweise in die zweite Haltekontur eingreifen. Die zweite Haltekontur kann einstückig an dem jeweiligen Lagergutträger 12 ausgebildet und/oder nicht beweglich sein.

**Figur 44** zeigt die Aufnahmeeinheit 22 in einer vierten Auslager-Position (vierte Übernahme-Position). In der vierten Auslager-Position überlappen Konturen der Lagergutträger 12 (hier Aussparung 48) nicht mehr mit Konturen der Übergabeeinheit 34 (hier Halteelemente 36). In der vierten Auslager-Position sind die Lagergutträger 12 gleichzeitig zusammen mit der Aufnahmeeinheit 22 an den Halteelementen 36 vorbei und aus der Übergabeeinheit 34 heraus bewegbar. Im konkreten Beispiel wurde zumindest ein Teil der Aufnahmeeinheit 22 (hier Trägerabschnitte 23) von der dritten Auslager-Position (**Figur 43**) in die vierte Auslager-Position (**Figur 44**) seitlich verschoben (siehe Pfeil). Andere Bewegungen sind denkbar, bspw. Verdrehen.

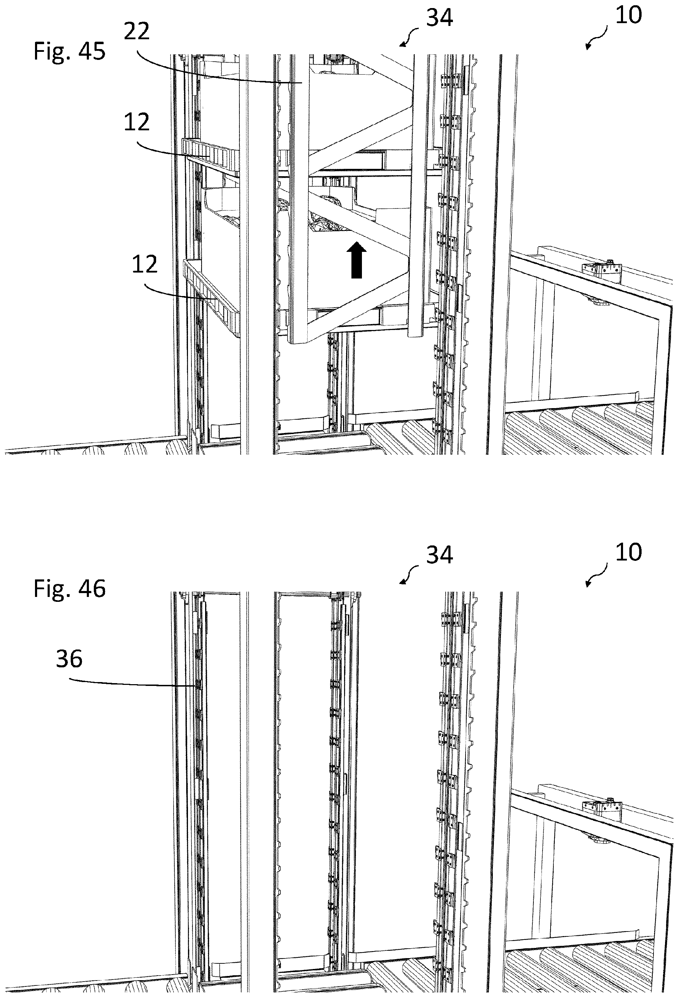

**Figuren 45 und 46** zeigen wie die Aufnahmeeinheit 22 mit den mehreren aufgenommenen Lagergutträgern 12 an den Halteelementen 36 vorbei nach oben (siehe Pfeil) aus der Übergabeeinheit 34 heraus bewegt wird.

Die mit Lagergutträgern 12 beladene Aufnahmeeinheit 22 kann in einen Aufnahmeschacht des Bedienfahrzeugs 18 einfahren und die aufgenommenen Lagergutträger 12 können außerhalb der Übergabestation 10 verfahren werden (beispielsweise zur Einlagerung in einen Schacht 32 oder zur Übergabe an eine andere Übergabestation 10 des Warenlagersystems 20).

Falls eine Übernahme der Lagergutträger 12 von unterhalb der Übergabeeinheit 34 erfolgt, würde die Aufnahmeeinheit 22 von unten nach oben in die Übergabeeinheit 34 einfahren und von oben nach unten aus der Übergabeeinheit 34 ausfahren.

Wie zur erkennen ist, erfolgt die gleichzeitige Übergabe der Lagergutträger 12 ohne Bewegung der Halteelemente 36.

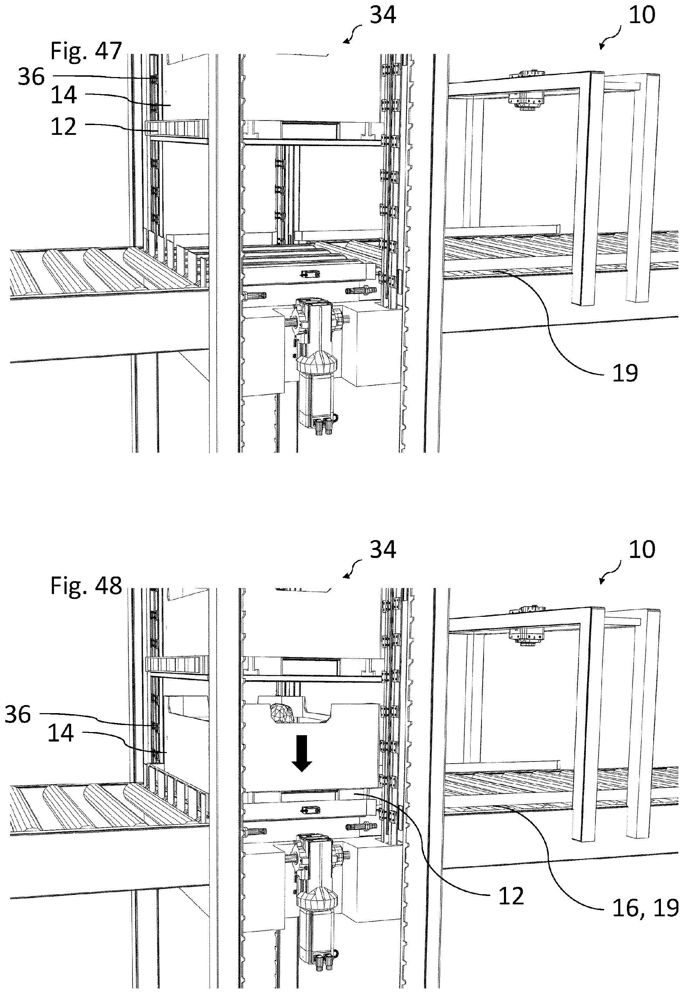

**Figuren 47-50** zeigen schematische Ansichten einer schrittweisen Übergabe von in der Übergabestation 10 übereinander nicht-gestapelt gehaltenen Lagergutträgern 12 inklusive ihrer Lagergüter 14 an eine nachgelagerte Weiterverarbeitungseinheit 19.

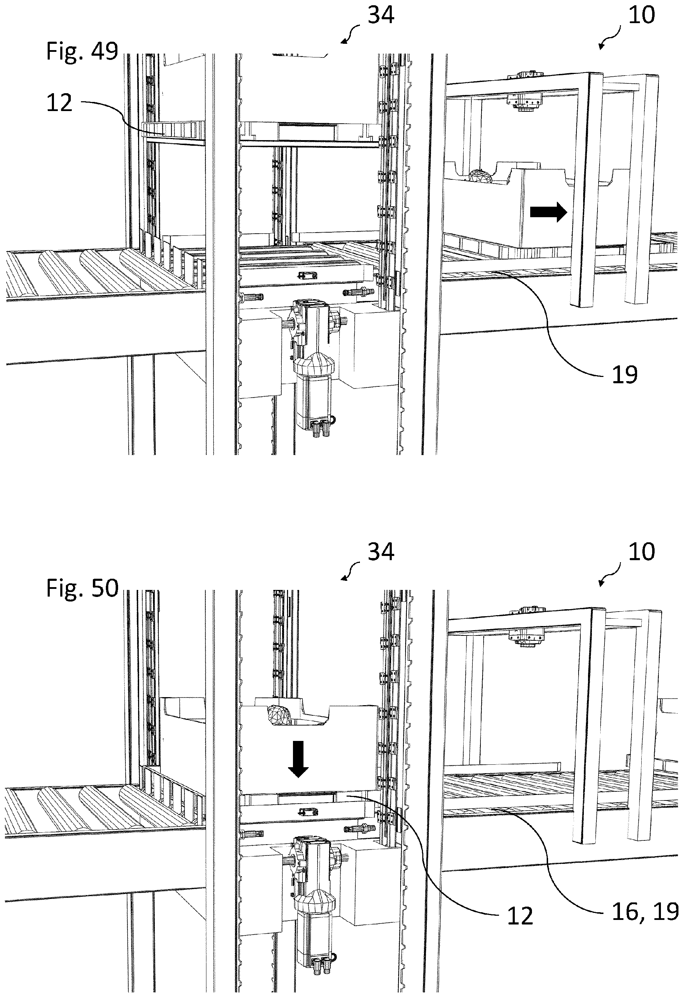

**Figur 47** zeigt die Übergabeeinheit 34 mit übereinander nicht-gestapelt gehaltenen Lagergutträgern 12 inklusive ihrer Lagergüter 14. In **Figur 48** werden die Lagergutträger 12 mit den Lagergütern 14 nach unten verfahren, angedeutet durch den Pfeil, indem die Halteelemente 36 nach unten verfahren werden. In **Figur 48** befindet sich der unterste Lagergutträger 12 im Bereich des Übergabeniveaus 16 der Weiterverarbeitungseinheit 19. Durch weiteres Verfahren der Halteelemente 36 nach unten lösen sich die Konturen der Halteelemente 36 von denen der Lagergutträger 12. Die Halteelemente 36 können sich beispielsweise auch aus Sicherungsabschnitte lösen. Die Weiterverarbeitungseinheit 19 kann die Lagergutträger 12 aufnehmen und in Vortriebsrichtung weiterbewegen, wie durch den Pfeil in **Figur 49** angedeutet.

In **Figur 50** ist der nächste Lagergutträger 12 im Bereich des Übergabeniveaus 16 angekommen und bereit von der Weiterverarbeitungseinheit 19 aufgenommen zu werden.

Durch schrittweises Verfahren der Haltelemente 36 nach unten werden die nicht-gestapelt gehaltenen Lagergutträger 12 inklusiver ihrer Lagergüter 14 sukzessive und nacheinander der Weiterverarbeitungseinheit 19 übergeben. Dadurch können die nicht-gestapelt gehaltenen Lagergutträger 12 beispielsweise vereinzelt werden.

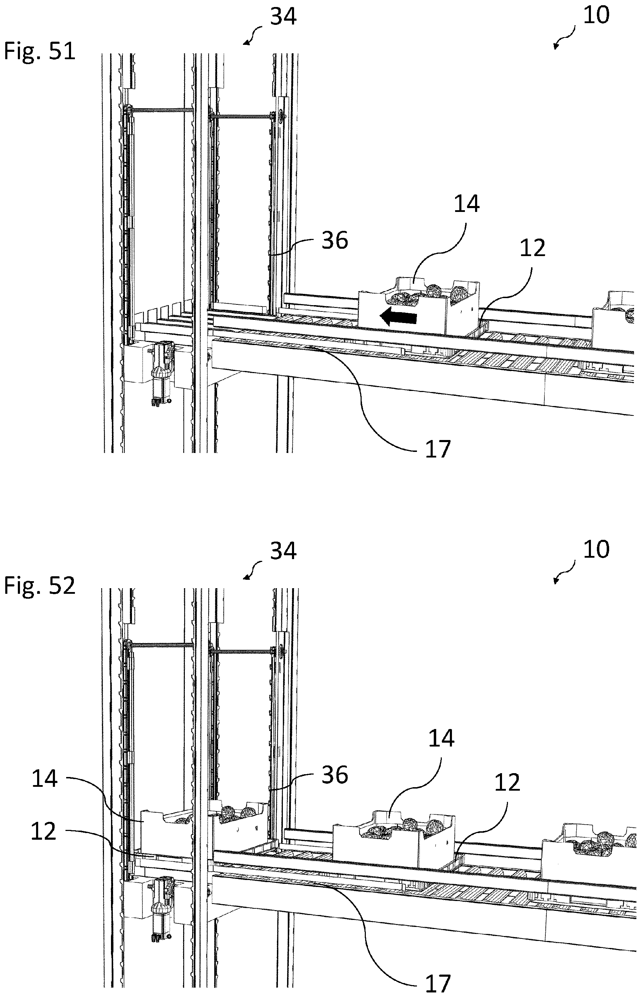

**Figuren 51-57** zeigen schematische Ansichten einer schrittweisen Übernahme (Aufnahme) von einzelnen, durch eine vorgelagerte Verarbeitungseinheit 17 bereitgestellte, Lagergutträger 12 inklusiver ihrer Lagergüter 14 in der Übergabestation 10, wobei die Lagergutträger 12 inklusiver ihrer Lagergüter 14 in der Übergabestation 10 übereinander nicht-gestapelt gehalten sind.

In **Figur 51** wird der Lagergutträger 12 mit dem Lagergut 14 in Einlaufrichtung (angedeutet durch den Pfeil) zur Übergabeeinheit 34 bewegt. Im konkreten Beispiel ist die Verarbeitungseinheit 17 ein Fördersystem. In anderen Ausführungsformen können die Lagergutträger 12 auch anderweitig der Übergabeeinheit 34 zugeführt werden, bspw. manuell durch eine Person oder automatisiert durch einen Roboter. Die Halteelemente 36 sind so angeordnet, dass der Lagergutträger 12 seitlich in die Übergabeeinheit 34 einfahren kann.

In **Figur 52** befindet sich der erste Lagergutträger 12 inklusive Lagergut 14 in der Übergabeeinheit 34. Anschließend werden die Halteelemente 36 verfahren (hier nach oben), wodurch die Haltelemente 36 in Eingriff mit dem Lagergutträger 12 gelangen, bspw. mit ersten Konturen der Lagergutträger 12, und wird der Lagergutträger 12 mit dem Lagergut 14, wie bei einem "Aufzug" oder "Paternoster" nach oben befördert bzw. vertikal nach oben verfahren.

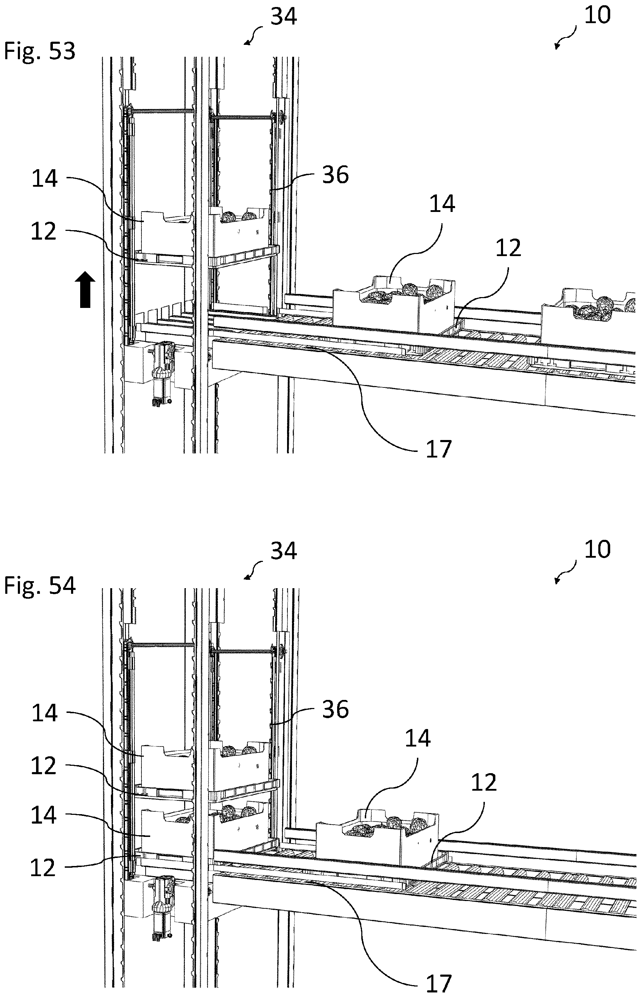

**Figur 53** zeigt den nach oben beförderten Lagergutträger 12. Die Haltelemente 36 werden schrittweise so weit nach oben bewegt, dass unter dem in der Übergabeeinheit 34 befindlichen Lagergutträger 12 ausreichend Platz für den nächsten Lagergutträger 12 inklusive etwaiger darauf befindlicher Lagergüter 14 ist. Wie bereits erwähnt, kann der Verfahrweg in Abhängigkeit einer beispielsweise mittels Sensorik erfassten oder der Übergabestation 10 übermittelten Gesamthöhe des neu aufzunehmenden Lagergutträgers 12 (inklusive dessen Lagergüter 14) und/oder des zuvor aufgenommenen Lagergutträgers 12 (inklusive dessen Lagergüter 14) erfolgen. Der Verfahrweg wird so gewählt, dass die Lagergutträger 12 inklusive ihrer Lagergüter 14 in der Übergabeeinheit 34 übereinander nicht-gestapelt gehalten werden.

**Figur 54** zeigt zwei übereinander nicht-gestapelt gehaltene Lagergutträger 12 inklusive ihrer Lagergüter 14. Wie zu erkennen ist berühren sich die Lagergutträger 12 nicht. Auch berührt das Lagergut 14 keinen darüber befindlichen Lagergutträger 12. Die Lagergutträger 12 inklusive ihrer Lagergüter 14 stützen sich nicht aufeinander ab, wie das bei einem Stapel der Fall wäre.

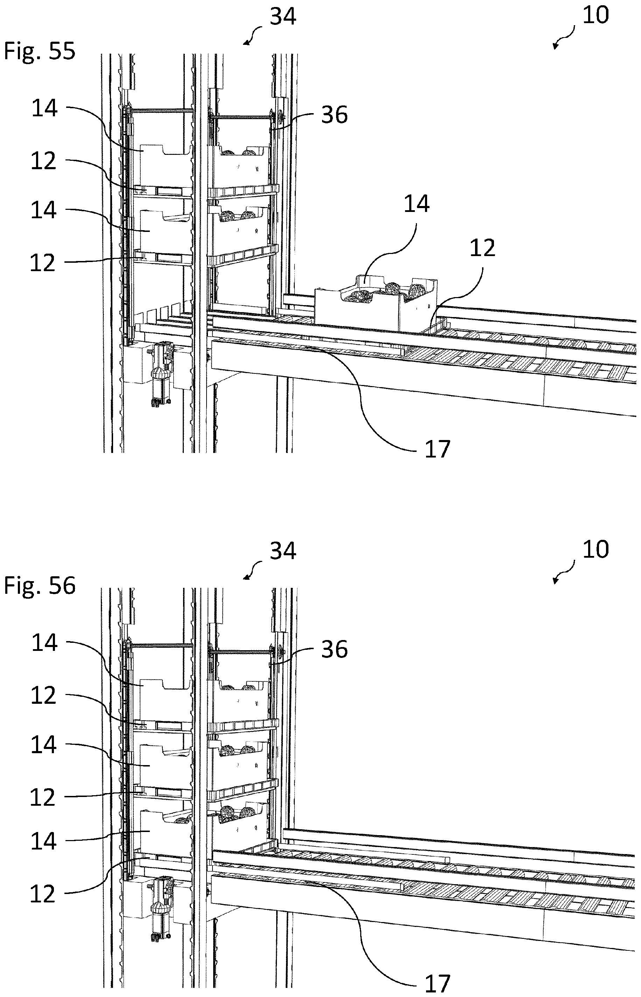

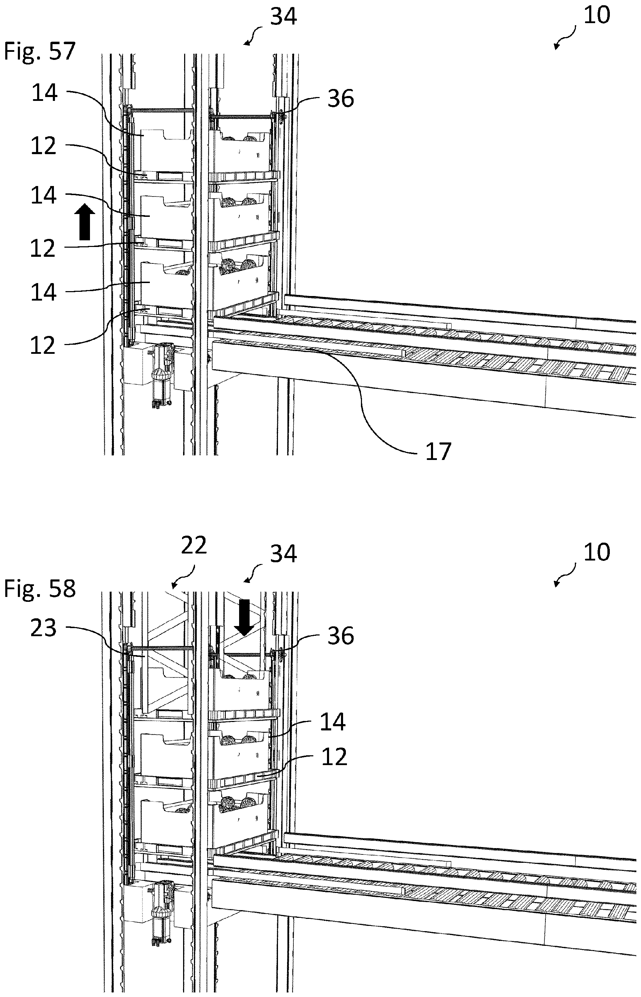

In **Figur 55** sind die Halteelemente 36 so weit nach oben verfahren, dass unter dem untersten Lagergutträger 12 ausreichend Platz für den nächsten Lagergutträger 12 (inklusive Lagergut 14) vorhanden ist. In **Figuren 56** **und** **57** sind nunmehr drei Lagergutträger 12 inklusive ihrer Lagergüter 14 nicht-gestapelt gehalten. In **Figur 57** sind die Lagergutträger 12 inklusive ihrer Lagergüter 14 nochmals ein Stück nach oben gefahren. Dies muss nicht in jedem Fall so sein.

Durch sukzessives Verfahren der Halteelemente 36 werden die Lagergutträger 12 inklusiver etwaig darauf befindlicher Lagergüter 14 nach und nach der Übergabestation 10 übergeben. Die Übergabestation 10 hält die aufgenommenen Lagergutträger 12 inklusive etwaiger Lagergüter 14 übereinander nicht-gestapelt bereit, beispielsweise zur Übergabe an ein Bedienfahrzeug, das ein Einfach- oder ein Mehrfachbedienfahrzeug sein kann, wobei bei einem Mehrfachfahrzeug ein gleichzeitige Übergabe von mehreren Lagergutträgern 12 (inklusive Lagergüter 14) möglich ist.

Die Übergabestation kann als Zwischenpuffer fungieren.

**In** **Figuren 58-64** ist schematisch gezeigt, wie die übereinander nicht-gestapelt gehaltenen Lagergutträger 12 inklusive ihrer Lagergüter 14 an ein Bedienfahrzeug 18 (das Bedienfahrzeug 18 ist bspw. in **Figur 10** gezeigt) übergeben werden. Im gezeigten Beispiel ist das Bedienfahrzeug ein Mehrfachfahrzeug, das gleichzeitig mehrere Lagergutträger 12 inklusive ihrer Lagergüter 14 aufnehmen und nicht-gestapelt halten kann. Die Übergabestation 10 ist dazu ausgebildet, die mehreren voneinander beabstandeten und übereinander nicht-gestapelt gehaltenen Lagergutträger 12 inklusive ihrer Lagergüter 14 gleichzeitig an das Bedienfahrzeug 18 zu übergeben. Dieses mehraufnahmetaugliche Bedienfahrzeug kann gleichzeitig die bereitgestellten Lagergutträger 12 inklusive ihrer Lagergüter 14 aufnehmen und weiterverarbeiten, beispielsweise indem es die Lagergutträger 12 inklusiver ihrer Lagergüter 14 gleichzeitig in einen Schacht 32 (siehe **Figur 29**) des Warenlagersystems 20 einlagert oder einer anderen Übergabestation 10 übergibt.

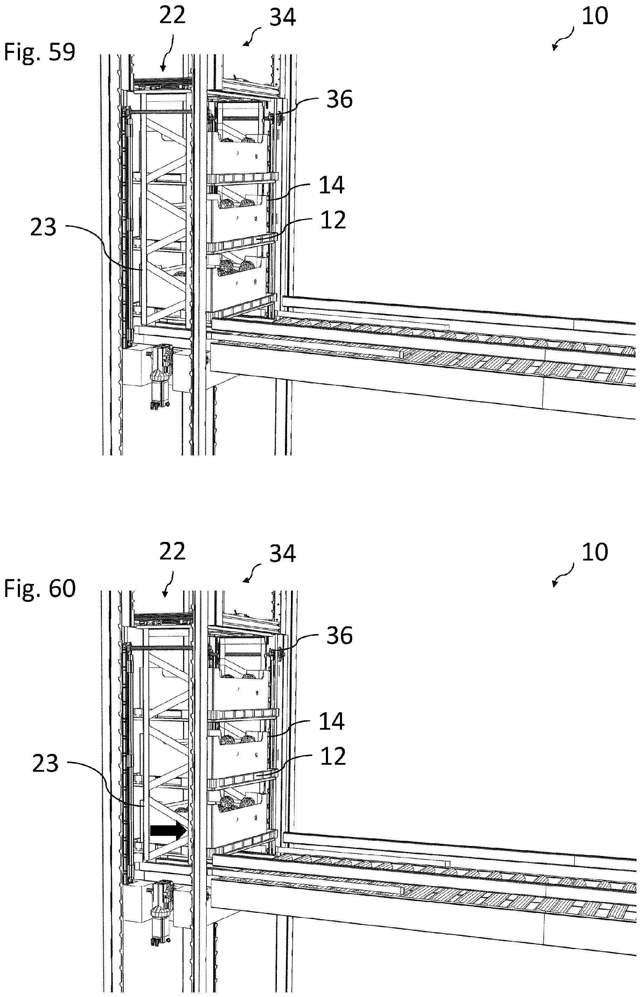

**Figuren 58** **und** **59** zeigen, wie die Aufnahmeeinheit 22 des Bedienfahrzeugs 18 von oben in die Übergabeeinheit 34 einfährt. In den Figuren sind die Trägerabschnitte 23 der Aufnahmeeinheit 22 zu erkennen, die sich nach unten bewegen. Zur leichteren Übersicht ist nur einer der Trägerabschnitte 23 mit einem Bezugszeichen versehen.

**Figuren 60 bis 64** zeigen, wie die Lagergutträger 12 inklusive ihrer Lagergüter 14 von der Aufnahmeeinheit 22 gleichzeitig aufgenommen, übereinander nicht-gestapelt gehalten und aus der Übergabeeinheit 34 nach oben herausbefördert werden. Der in den **Figuren 60 bis 64** gezeigte Bewegungsablauf wurde in Zusammenhang mit **Figuren 42 bis 46** detailliert erklärt, weshalb an dieser Stelle darauf verwiesen wird.

Die gleichzeitige Übergabe der Lagergutträger 12 (inklusive ihrer Lagergüter 14) erfolgt ohne vertikales Verfahren der Halteelemente 36.

**Figuren 65-72** zeigen schematische Detailansichten einer gleichzeitigen Übergabe von mehreren in einem Bedienfahrzeug 18 (siehe hierzu bspw. **Figur 10**) übereinander nicht-gestapelt gehaltenen Lagergutträger 12 inklusiver ihrer Lagergüter 14 an eine Übergabestation 10. Die Lagergutträger 12 inklusiver ihrer Lagergüter 14 werden in der Übergabestation 10 übereinander nicht-gestapelt gehalten.

**Figuren 65 bis 67** zeigen wie die Aufnahmeeinheit 22 des Bedienfahrzeugs 18, dass ein mehraufnahmetaugliches Bedienfahrzeug 18 (Mehrfachfahrzeug) ist, in die Übergabeeinheit 34 von oben einfährt.

**Figuren 65 bis 67** zeigen die Aufnahmeeinheit 22 in einer ersten Einlager-Position (erste Übergabe-Position). In der ersten Einlager-Position sind die Lagergutträger 12 inklusive ihrer Lagergüter 14 nicht in der Übergabeeinheit 34 gehalten und können auch nicht in der Übergabeeinheit 34 gehalten werden. In der ersten Einlager-Position sind die Lagergutträger 12 (inklusiver ihrer Lagergüter 14) in der Aufnahmeeinheit 22 gehalten und können an den Halteelementen 36 der Übergabeeinheit 34 vorbeibewegt werden. In der ersten Einlager-Position überlappen sich Konturen der Aufnahmeeinheit 22 (hier starre Aufnahmeeinheit-Haltelemente 46) mit Konturen (auch zweite Konturen) der Lagergutträger 12 (bspw. (zweite) Aussparungen) und sind die Konturen der Aufnahmeeinheit 22 mit den Konturen der Lagergutträger 12 in Kontakt, sodass die Lagergutträger 12 in der Aufnahmeeinheit 22 gehalten werden.

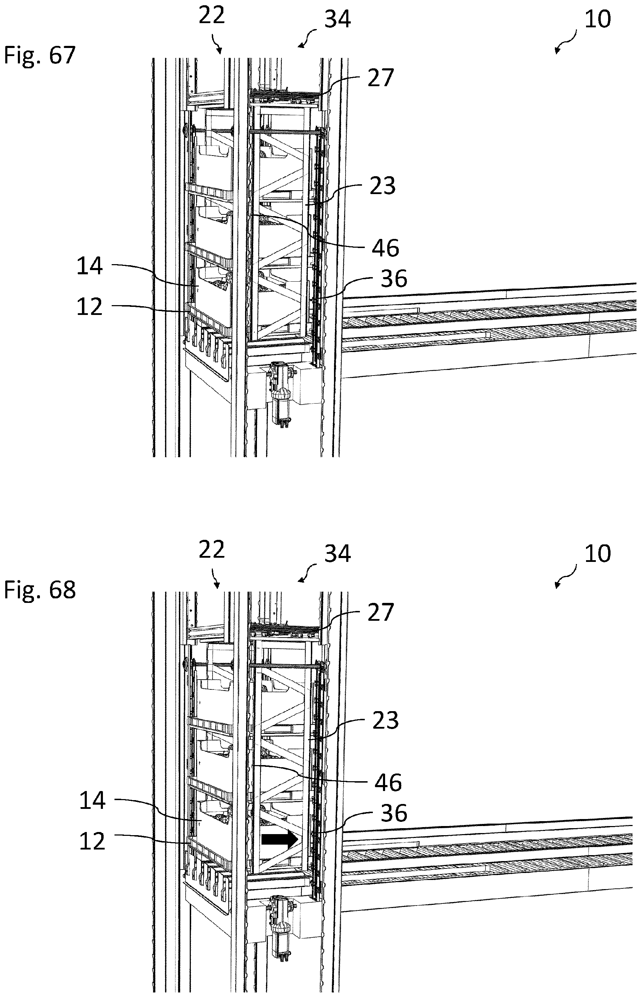

In **Figur 68** ist die Aufnahmeeinheit 22 in einer zweiten Einlager-Position (zweite Übergabe-Position) gezeigt. In der zweiten Einlager-Position sind die in der Aufnahmeeinheit 22 gehaltenen Lagergutträger 12 in einer in der Übergabeeinheit 34 abstützbaren aber noch nicht abgestützten Position. In der abstützbaren Position überlappen sich Konturen (auch erste Konturen) der Lagergutträger 12 mit Konturen der Übergabeeinheit 34 (hier Halteelemente 36), ohne jedoch in Kontakt zu sein. Im konkreten Beispiel von **Figur 68** wird zumindest ein Teil der Aufnahmeeinheit 22 von der ersten Einlager-Position (**Figuren 65-67**) in die zweite Einlager-Position (**Figur 68**) seitlich verschoben (siehe Pfeil). Das Bedienfahrzeug weist eine entsprechende Aktuatorik auf, die das seitliche Verschieben der Aufnahmeeinheit 22 ermöglicht. Im konkreten Beispiel von **Figur 68** werden die Trägerabschnitte 23 relativ zu einer Trägerplatte 27 seitlich (siehe Pfeil) verschoben.

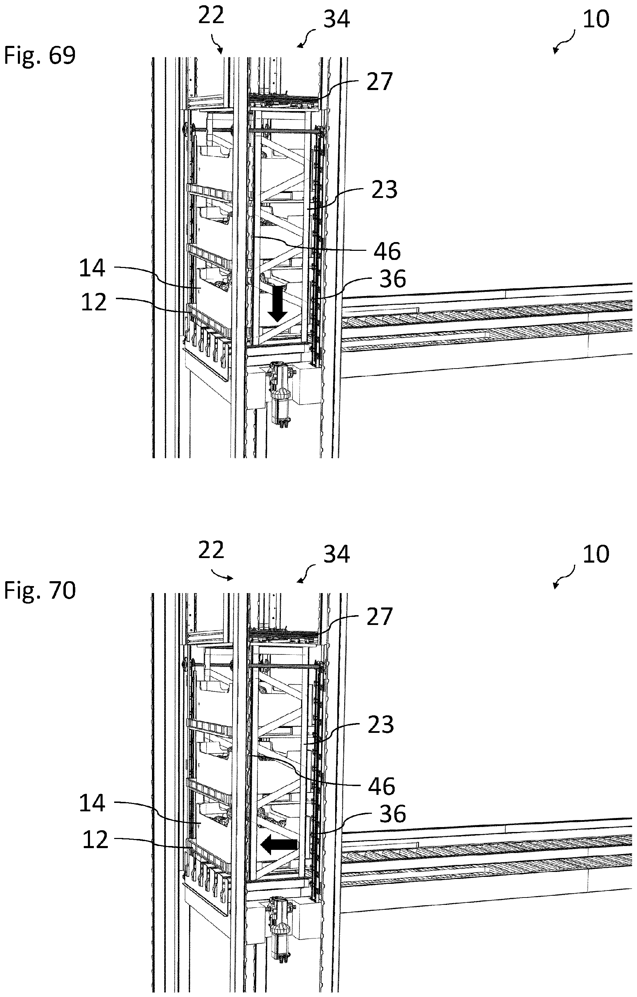

**Figur** 69 zeigt die Aufnahmeeinheit 22 in einer dritten Einlager-Position (dritte Übergabe-Position). In der dritten Einlager-Position sind die Lagergutträger 12 in einer in der Übergabeeinheit 34 abgestützten Position. Die Aufnahmeeinheit 22 wird durch eine Bewegung nach unten (siehe Pfeil) von der zweiten Einlager-Position (**Figur 68**) in die dritte Einlager-Position (**Figur 69**) bewegt. In der dritten Einlager-Position überlappen in Draufsicht auf die Lagergutträger 12 die Konturen der Aufnahmeeinheit 22 (hier starre Aufnahmeeinheit-Haltelemente 46) mit Konturen (auch zweite Konturen) der Lagergutträger 12, ohne jedoch in Kontakt zu sein. In der dritten-Einlager Position kontaktieren sich jedoch die Konturen (erste Konturen) der Lagergutträger 12 mit den Konturen der Übergabeeinheit 34 (hier Halteelemente 36), sodass sich die Lagergutträger 12 in einer abgestützten Position in der Übergabeeinheit 34 gehalten sind. Die Aufnahmeeinheit 22 kann von Sicherungsabschnitten der Lagergutträger 12 gelöst sein.

In **Figur 70** befindet sich die Aufnahmeeinheit 22 in einer seitlich verschobenen Position (siehe Pfeil). Im konkreten Beispiel von **Figur 70** wurden die Trägerabschnitte 23 relativ zur Trägerplatte 27 seitlich verschoben (siehe Pfeil). In dieser Position ist die Aufnahmeeinheit 22 an den in der Übergabeeinheit 34 gehaltenen Lagergutträgern 12 vorbeibewegbar. Die in **Figur 70** gezeigte Position kann daher auch als vierte Einlager-Position (vierte Übergabe-Position) bezeichnet werden.

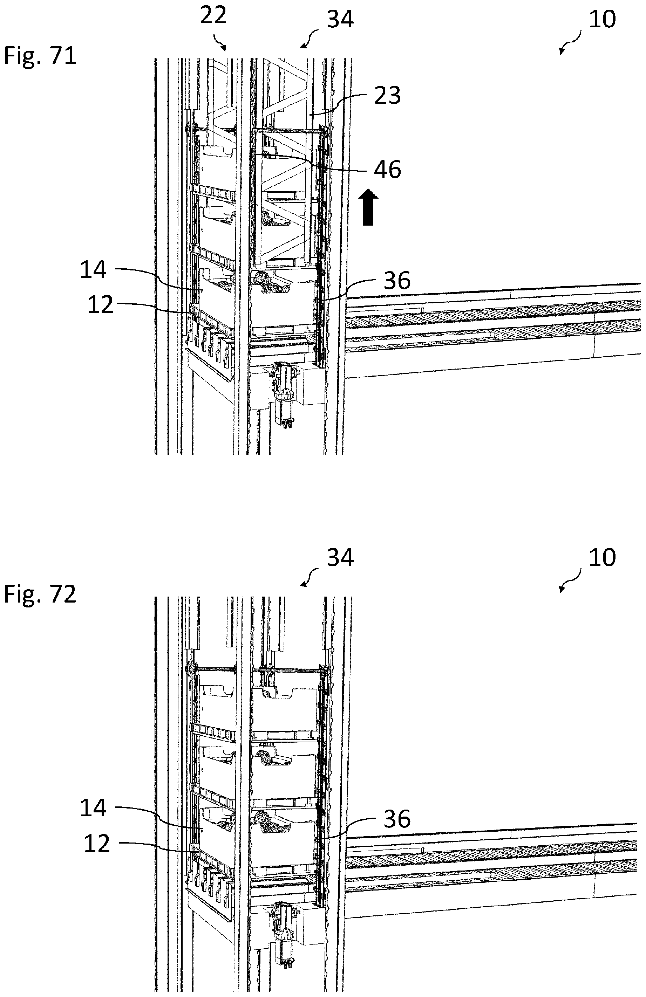

**Figuren 71 und 72** zeigen, wie die Aufnahmeeinheit 22 durch eine Bewegung nach oben aus der Übergabeeinheit 34 heraus und an Lagergutträgern 12 vorbei bewegbar ist. Die Aufnahmeeinheit 22 kann in den Aufnahmeschacht des Bedienfahrzeugs eingefahren werden und das Bedienfahrzeug ist bereit für den nächsten Einsatz.

Falls eine Einlagerung von unterhalb der Übergabeeinheit 34 erfolgt, würden die Aufnahmeeinheit 22 von unten nach oben in die Übergabeeinheit 34 einfahren und von oben nach unten aus der Übergabeeinheit 34 ausfahren.

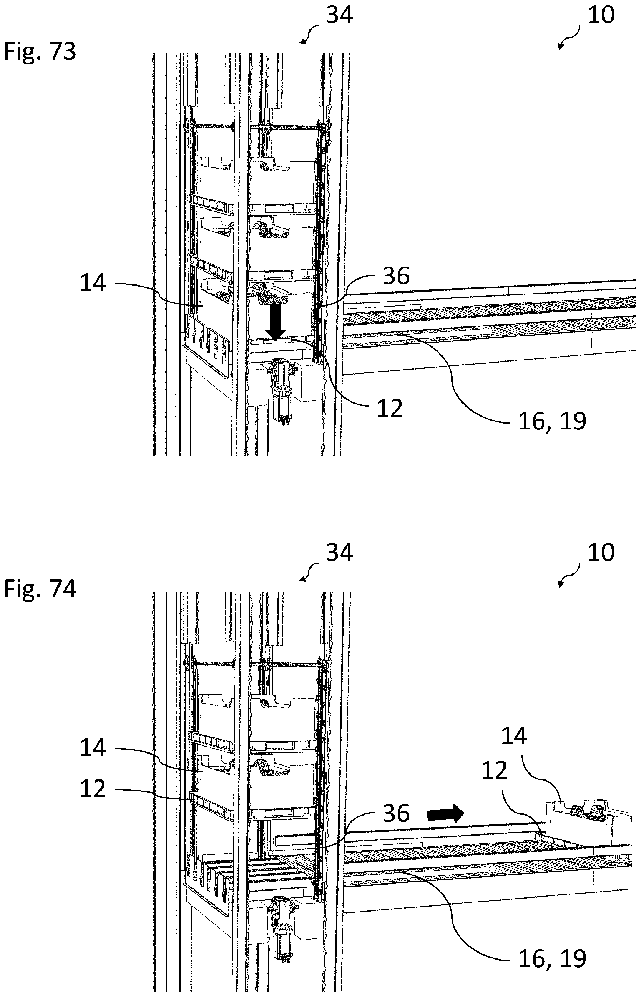

**Figuren 73-78** zeigen schematische Detailansichten einer Übergabe der von der Übergabestation 10 übereinander nicht-gestapelt gehaltenen Lagergutträger 12 inklusive ihrer Lagergüter 14 an eine nachgelagerte Weiterverarbeitungseinheit 19.

In **Figur 73** sind die Halteelemente 36 nach unten gefahren (angedeutet durch den Pfeil), bis der erste zu übergebende Lagergutträger 12 im Bereich des Übergabeniveaus der Weiterverarbeitungseinheit 19 angeordnet ist. Dies ist beispielsweise durch eine wie in Zusammenhang mit **Figur 33** beschriebene Sensorik 37 ermittelbar.

Durch weiteres Verfahren der Halteelemente 36 nach unten lösen sich die Konturen der Halteelemente 36 von denen der Lagergutträger 12. Die Weiterverarbeitungseinheit 19 kann den ersten Lagergutträger 12 aufnehmen und in Vortriebsrichtung weiterbewegen, wie durch den Pfeil in **Figur 74** angedeutet.

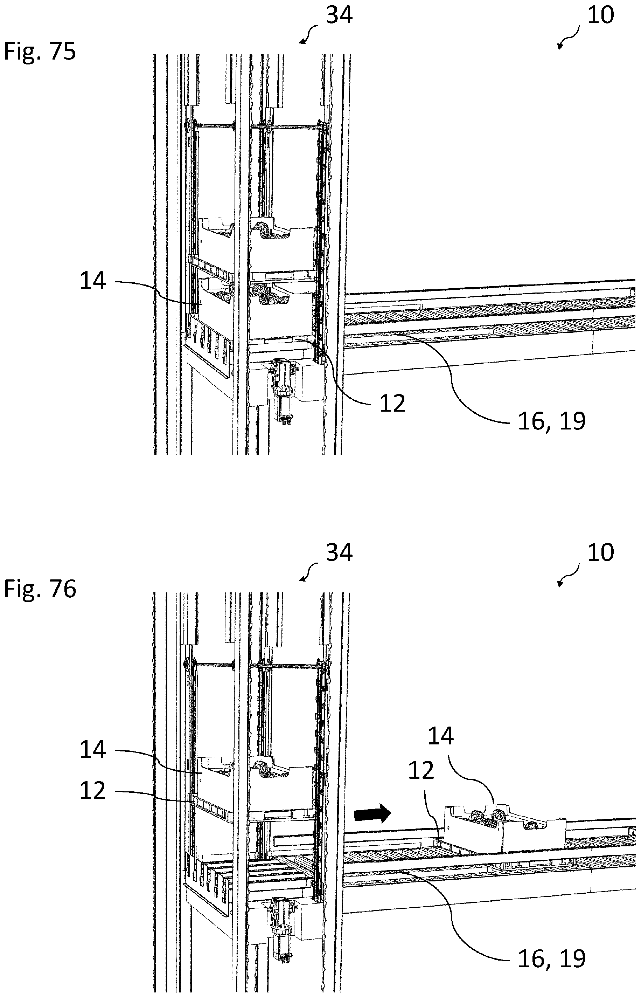

In **Figur 75** ist der nächste Lagergutträger 12 im Bereich des Übergabeniveaus angekommen und bereit von der Weiterverarbeitungseinheit 19 aufgenommen zu werden. **Figur 76** zeigt den Abtransport des zweiten Lagergutträgers 12 inklusive Lagergut 14.

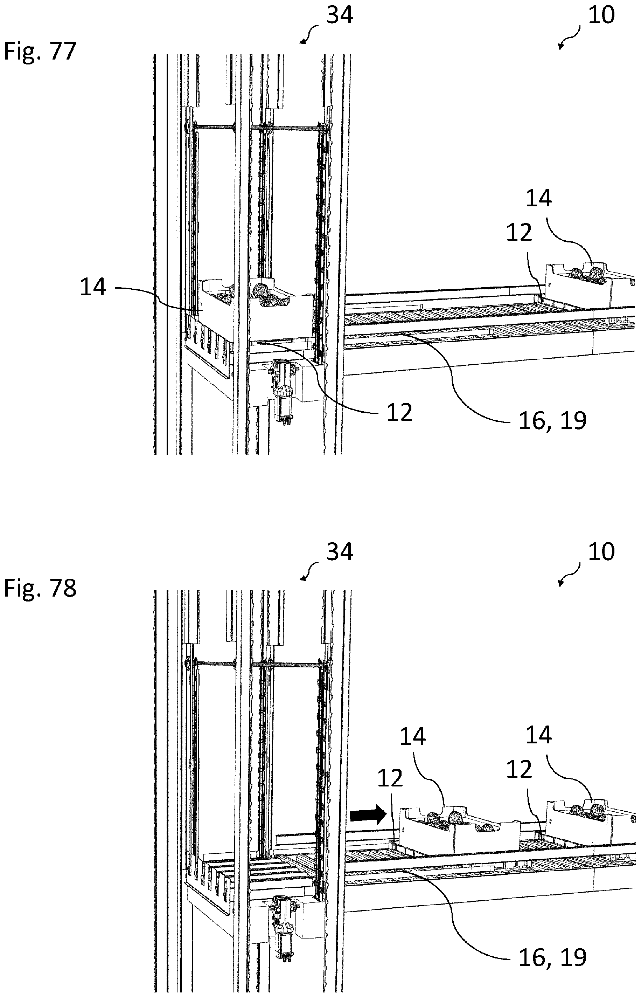

In **Figur 77** ist der nächste Lagergutträger 12 im Bereich des Übergabeniveaus angekommen und bereit von der Weiterverarbeitungseinheit 19 aufgenommen zu werden. **Figur 77** zeigt den Abtransport des dritten Lagergutträgers 12 inklusive Lagergut 14.

Durch schrittweises Verfahren der Haltelemente 36 werden die nicht-gestapelt gehaltenen Lagergutträger 12 inklusiver ihrer Lagergüter 14 sukzessive und nacheinander der Weiterverarbeitungseinheit 19 übergeben. Dadurch können die nicht-gestapelt gehaltenen Lagergutträger 12 beispielsweise vereinzelt werden.

Der Verfahrweg der Halteelemente 36 kann in Abhängigkeit der Gesamthöhe des jeweiligen Lagergutträgers 12 inklusive etwaig darauf befindlicher Lagergüter 14 bestimmt werden, wie bereits beschrieben.

Alternativ werden die Haltelemente 36 so weit nach unten gefahren, bis eine Sensorik, bspw. Sensorik 37, erkennt, dass sich der Lagergutträger 12 im Bereich des Übergabeniveaus 16 befindet. In diesem Fall wird für die Übergabe der Lagergutträgers 12 inklusive etwaig darauf befindlicher Lagergüter 14 die Information über die Gesamthöhe nicht benötig. Die Sensorik 37 ist beispielsweise in Zusammenhang mit **Figur 33** beschrieben.

Die Übergabestation 10 kann als Puffer innerhalb eines Gesamtsystems oder eines Warenlagersystems 20 fungieren. Dabei können eine bestimmte Anzahl oder sämtliche mit Lagergütern 14 bestückte Lagergutträger 12 (sortenrein oder gemischt) beispielsweise für eine Zielpalette in der Übergabeeinheit 10 zwischengespeichert werden. Die Vorpufferung kann optional bereits in der für die Zielpalette vorgesehenen Sequenz erfolgen, ist jedoch nicht zwingend sequenzgebunden. In diesem Zusammenhang werden die Lagergutträger 12 vom zugehörigen Bediengerät (bspw. Bedienfahrzeug 18) in die Übergabestation 10 eingebracht und anschließend von der Übergabestation 10 auf eine nachgelagerte Weiterverarbeitungseinheit 19 wie bspw. ein Fördersystem abgegeben.

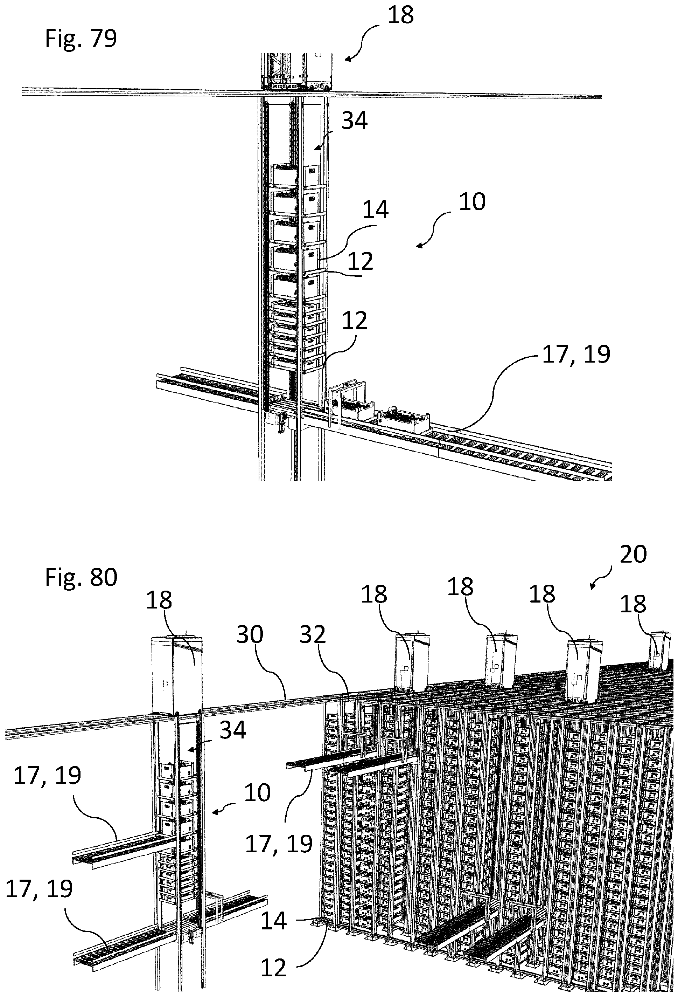

**Figur 79** zeigt eine Ausführungsform einer Übergabestation 10, bei der Lagergutträger 12 mit ihren Lagergütern 14 in Längsrichtung bzw. an ihren langen Seiten in der Übergabeeinheit 34 übereinander nicht-gestapelt gehalten werden. Diese Ausgestaltung hat den Vorteil, dass weniger Biege- oder Torsionskräfte auf die Lagergutträger 12 wirken, da die lange Seite in der Übergabeeinheit 34 durch die Halteelemente 36 gehalten wird und nicht wie bislang gezeigt die kurze Seite. Eine derartige Ausgestaltung hat ferner den Vorteil, dass bspw. beim Ausschieben der Lagergüter 14 die Lagergüter 14 in Längsrichtung bzw. entlang der langen Seite ausgeschoben werden können. Zwar sind in Figur 79 pro Lagergutträger 12 nur ein Lagergut 14 (eine Box) gezeigt, aber es kann durchaus vorkommen, dass mehrere Boxen bzw. Lagergüter 14 auf einem Lagergutträger 12 angeordnet sind, die dann in Längsrichtung bzw. entlang der langen Seite ausgeschoben werden können, bspw. mit einer wie in Zusammenhang mit **Figuren 15 bis 26** beschriebenen Entladestation 24.

**Figur 80** zeigt eine schematische Ansicht eines Warenlagersystems 20 mit einer Übergabestation 10, mehreren Bedienfahrzeugen 18 (Einzel- und/oder Mehrfachfahrzeug möglich), mehreren Verarbeitungs- oder Weiterverarbeitungseinheiten 17, 19 und mehreren vertikalen Schächten 32, in denen die Lagergutträger 12 inklusive ihrer Lagergüter 14 übereinander nicht-gestapelt gelagert sind. Die Lagergutträger 12 inklusive ihrer Lagergüter 14 können mit Hilfe der Bedienfahrzeuge 18 aus einem der Schächte 32 ausgelagert, zwischen den Schächten 32 verfahren, in einen anderen Schacht 32 eingelagert und/oder der Übergabestation 10 übergeben werden. Ebenso ist es denkbar, dass das Bedienfahrzeug 18 Lagergutträger 12 inklusive ihrer Lagergüter 14 von der Übergabestation 10 übernehmen und in einen der Schächte 32 einlagern oder einer anderen Übergabestation 10 übergeben kann. Im gezeigten Beispiel ist die Übergabestation 10 außerhalb der Schächte 32 angeordnet und kann über das Schienensystem 30 durch die Bedienfahrzeuge 18 erreicht werden. Wenn das Bedienfahrzeug 18 ein Mehrfachfahrzeug ist, können gleichzeitig mehrere übereinander nicht-gestapelte Lagergutträger 12 inklusive ihrer Lagergüter 14 aufgenommen, verfahren und/oder übergeben werden.

In dem in **Figur 80** gezeigten Beispiel sind die Lagergutträger 12 inklusive ihrer Lagergüter 14 an den langen Seite in der Übergabestation 10, den Schächten 32 oder im Bedienfahrzeug 18 gehalten bzw. abgestützt. Obwohl in Zusammenhang mit **Figuren 1 bis 78** die Lagergutträger 12 mit der kurzen Seite gehalten wurden, können die Lagergutträger 12 in anderen Ausführungsformen selbstverständlich mit der langen Seite gehalten werden. Die Übergabestation 10, die Bedienfahrzeuge 18, die Schächte 32 und alle weiteren Einheiten des Warenlagersystems 20 können sowohl für das Halten der kurzen Seite als auch für das Halten der langen Seite ausgebildet sein.

Die in Zusammenhang mit **Figuren 1 bis 80** beschriebene Übergabestation 10 kann ferner eine Waage aufweisen.

Die in Zusammenhang mit **Figuren 1 bis 80** beschriebene Übergabestation 10 kann ferner eine Erfassungsvorrichtung zur Erfassung von Warenkennzeichnungen, und/oder Artikelnummern, und/oder Lagergutträgerkennzeichnungen aufweisen, vorzugsweise wobei die Erfassungsvorrichtung zum Scannen von Barcodes oder QR-Codes, wie beispielsweise eines EAN-Codes und/oder eines GTIN-Codes, und/oder zum Auslesen eines RFID-Tags oder eines anderen eindeutigen Kennzeichens ausgebildet ist.

Die in Zusammenhang mit **Figuren 1 bis 80** beschriebene Übergabestation 10 kann ferner eine Energieübertragungseinrichtung aufweisen, die dazu ausgebildet ist, Energie zwischen der Übergabestation 10 und anderen Komponenten des Warenlagersystems 20, wie beispielsweise eines Bedienfahrzeugs 18 des Warenlagersystems 20, zu übertragen.

Die folgenden Aspekte sind bevorzugte Ausgestaltungen der Offenbarung:
1. Übergabestation (10) für ein Warenlagersystem (20) mit mehreren vertikalen Schächten (32), wobei zumindest einer der Schächte (32) zumindest abschnittsweise dazu ausgebildet ist, gleichzeitig mehrere voneinander beabstandete Lagergutträger (12), inklusiver etwaiger auf den Lagergutträgern (12) vorhandener Lagergüter (14), übereinander nicht-gestapelt zu halten, wobei die Übergabestation (10) aufweist:
   - eine Übergabeeinheit (34) zur Übergabe von Lagergutträgern (12) an ein Bedienfahrzeug (18) oder zur Aufnahme von Lagergutträgern (12) von einem Bedienfahrzeug (18) des Warenlagersystems (20) wobei die Übergabeeinheit (34) dazu ausgebildet ist
      - gleichzeitig mehrere in der Übergabeeinheit (34) aufgenommene Lagergutträger (12), inklusiver etwaiger auf den Lagergutträgern (12) vorhandener Lagergüter (14), voneinander beabstandet und übereinander nicht-gestapelt zu halten.
2. Übergabestation (10) nach Aspekt 1, wobei die Übergabeeinheit (34) ferner dazu ausgebildet ist:
   - mehrere übereinander nicht-gestapelt gehaltene Lagergutträger (12) dem Bedienfahrzeug (18) gleichzeitig zu übergeben und/oder mehrere Lagergutträger (12) vom Bedienfahrzeug (18) übereinander nicht-gestapelt gleichzeitig zu übernehmen.
3. Übergabestation (10) nach Aspekt 1 oder 2, wobei die Übergabeeinheit (34) mehrere Halteelemente (36) aufweist, die derart angeordnet sind, dass die mehreren Lagergutträger (12) voneinander beabstandet gehalten sind.
4. Übergabestation (10) nach Aspekt 3, wobei die Halteelemente (36) in vertikaler Richtung mit einem vorbestimmten Abstand und/oder mit einem vorbestimmten Rastmaß voneinander beabstandet sind, vorzugsweise wobei der Abstand und/oder das Rastmaß
   - einem Abstand und/oder einem Rastmaß von Abstützelementen (33) des Schachts (32), und/oder
   - einem Abstand und/oder einem Rastmaß von Halteelementen (46) des Bedienfahrzeugs (18)
   entsprechen oder ein ganzzahliges Vielfaches davon ist.
5. Übergabestation (10) nach Aspekt 3 oder 4, wobei die Halteelemente (36) in der Übergabeeinheit (34) verfahrbar, vorzugsweise vertikal verfahrbar, vorzugsweise bidirektional nach oben und unten verfahrbar, weiter vorzugsweise schrittweise verfahrbar sind.
6. Übergabestation (10) nach einem der Aspekte 3-5, wobei die Übergabeeinheit (34) ein umlaufendes Zugmittel (38) aufweist, an dem die Halteelemente (36) in vertikal voneinander beabstandeten Positionen angebracht sind, vorzugsweise wobei das umlaufende Zugmittel (38) als umlaufender Zahnriemen, umlaufendes Seil oder umlaufende Kette ausgebildet ist und/oder derart antreibbar ist, dass die Halteelemente (36) in vertikaler Richtung, vorzugsweise schrittweise, nach oben oder unten innerhalb der Übergabeeinheit (34) verfahrbar sind.
7. Übergabestation (10) nach Aspekt 6, wobei die Übergabeeinheit (34) mindestens zwei, vorzugsweise vier, umlaufende Zugmittel (38) aufweist, die an gegenüberliegenden Seiten und/oder Ecken der Lagergutträger (12) angeordnet sind.
8. Übergabestation (10) nach Aspekt 6 oder 7, wobei an dem Zugmittel (38) jeweils mindestens zwei, vorzugsweise mindestens fünf, weiter vorzugsweise mindestens 10, weiter vorzugsweise mindestens 100, Halteelemente (36) angebracht sind.
9. Übergabestation (10) nach einem der Aspekte 3-5, wobei die Übergabeeinheit (34) mindestens zwei, vorzugsweise vier, vorzugsweise sich vertikal erstreckende, Stangen oder Balken (40) aufweist, an denen jeweils die Halteelemente (36) in vertikal voneinander beabstandeten Positionen angebracht sind, wobei die Stangen oder Balken (40) derart verfahrbar, vorzugsweise vertikal verfahrbar, sind, dass die Halteelemente (36) in vertikaler Richtung, vorzugsweise schrittweise, nach oben oder unten innerhalb der Übergabeeinheit (34) verfahrbar sind.
10. Übergabestation (10) nach einem der Aspekte 3-9, wobei die Halteelemente (36) derart verfahrbar sind, dass die von den Halteelementen (36) gehaltenen Lagergutträger (12) schrittweise nacheinander auf ein Übergabeniveau von beispielsweise einer der Übergabestation (10) nachgelagerten Weiterverarbeitungseinheit (19) verfahrbar sind.
11. Übergabestation (10) nach einem der Aspekte 3-10, wobei die Halteelemente (36) derart verfahrbar sind, dass die von den Halteelementen (36) aufzunehmenden Lagergutträger (12) schrittweise nacheinander von einem Übergabeniveau (16) von beispielsweise einem der Übergabestation (10) vorgelagerten Verarbeitungseinheit (17) in die Übergabeeinheit (34) aufgenommen werden.
12. Übergabestation (10) nach einem der Aspekte 3-11, wobei die Übergabestation (10)
   - eine Sensorik aufweist, welche dazu ausgebildet ist, eine Gesamthöhe des zu übergebenden Lagergutträgers (12) inklusive etwaiger darauf befindlicher Lagergüter und/oder eines zuletzt übernommenen Lagergutträgers (12) inklusive etwaiger darauf befindlicher Lagergüter zu erfassen und/oder
   - eine Kommunikationsverbindung zu einem Datenspeicher aufweist, in dem eine Gesamthöhe der Lagergutträger (12) inklusive etwaiger darauf befindlicher Lagergüter gespeichert ist.
13. Übergabestation (10) nach Aspekt 12, wobei die Übergabestation (10) eine Steuerung aufweist, die dazu ausgebildet ist, die Halteelemente in Abhängigkeit der ermittelten und/oder gespeicherten Gesamthöhe vertikal zu verfahren, vorzugsweise derart, dass
   - mehrere Lagergutträger (12) inklusive ihrer Lagergüter sukzessive vom Fördersystem aufgenommen und anschließend gleichzeitig gehalten werden können, ohne dass sich die Lagergutträger (12) inklusive ihrer Lagergüter aufeinander abstützen und/oder einander berühren; und/oder
   - mehrere Lagergutträger (12) inklusive ihrer Lagergüter gleichzeitig gehalten und anschließend sukzessive auf eine Weiterverarbeitungseinheit abgegeben werden können, ohne dass sich die Lagergutträger (12) inklusive ihrer Lagergüter aufeinander abstützen und/oder einander berühren.
14. Übergabestation (10) nach Aspekt 12 oder 13, wobei die Sensorik (42) dazu ausgebildet ist, eine Lage und/oder Orientierung der Lagergutträger (12) inklusive deren Lagergüter (14) zu erfassen, vorzugsweise in Echtzeit oder zumindest in einer Taktzeit, die an eine Fördergeschwindigkeit eines der Übergabestation (10) vorgelagerten oder nachgelagerten Fördersystems angepasst ist, vorzugsweise wobei die Sensorik (42) Positionssensoren, ein optoelektronisches System und/oder ein Kamerasystem zur Ermittlung der Höhe, Lage und/oder Orientierung aufweist.
15. Übergabestation (10) nach einem der vorhergehenden Aspekte, wobei die Übergabeeinheit so ausgebildet ist, dass eine Aufnahmeeinheit (22) eines Bedienfahrzeugs (18) des Warenlagersystems (20), vorzugsweise eines Mehrfachfahrzeugs zur Handhabung mehrere Lagergutträger (12) mit einer Aufnahmeeinheit (22), die ausgebildet ist, mehrere Lagergutträger (12) gleichzeitig übereinander nicht-gestapelt zu halten, in die Übergabeeinheit (34) einfahren kann, um in der Aufnahmeeinheit (22) aufgenommene Lagergutträger (12) an die Übergabeeinheit (34) zu übergeben oder von der Übergabeeinheit (34) aufgenommene Lagergutträger (12) in die Aufnahmeeinheit (22) aufzunehmen, vorzugsweise wobei das Bedienfahrzeug (18) von oben oder unten in die Übergabeeinheit (34) einfahrbar ist.
16. Übergabestation (10) nach einem der vorhergehenden Aspekte, wobei die Übergabestation (10) derart dimensioniert ist, dass es in einen Schacht (32) des Warenlagersystems (20) integrierbar ist, vorzugsweise wobei eine Grundfläche der Übergabestation (10) an eine Grundfläche eines Schachts des Warenlagersystems angepasst ist.
17. Übergabestation (10) nach einem der vorhergehenden Aspekte, wobei die Übergabestation (10) mindestens 2, vorzugsweise mindestens 3, stärker bevorzugt mindestens 5 Lagergutträger (12) aufnehmen kann.
18. Übergabestation (10) nach einem der vorhergehenden Aspekte, wobei die Übergabestation (10) maximal 15, vorzugsweise maximal 6 Lagergutträger (12), aufnehmen kann.
19. Übergabestation (10) nach einem der Aspekte 1-16, wobei die Übergabestation (10) mindestens 15, vorzugsweise mindestens 30, stärker bevorzugt mindestens 50 Lagergutträger (12) aufnehmen kann.
20. Übergabestation (10) nach einem der vorhergehenden Aspekte, wobei die Übergabestation (10) ferner eine Waage aufweist.
21. Übergabestation (10) nach einem der vorhergehenden Aspekte, wobei die Übergabestation (10) ferner eine Erfassungsvorrichtung zur Erfassung von Warenkennzeichnungen, und/oder Artikelnummern, und/oder Lagergutträgerkennzeichnungen aufweist, vorzugsweise wobei die Erfassungsvorrichtung zum Scannen von Barcodes oder QR-Codes, wie beispielsweise eines EAN-Codes und/oder eines GTIN-Codes, und/oder zum Auslesen eines RFID-Tags oder eines anderen eindeutigen Kennzeichens ausgebildet ist.
22. Übergabestation (10) nach einem der vorhergehenden Aspekte, wobei die Übergabestation (10) ferner eine Kontrolleinheit zur Kontrolle, vorzugsweise zur Konturen- und/oder Gewichtskontrolle, der aufgenommenen oder zu übergebenden Lagergüter (14) bzw. Lagergutträger (12) aufweist.
23. Übergabestation (10) nach einem der vorhergehenden Aspekte, wobei die Übergabestation (10) ferner eine Ausrichteinheit zur Ausrichtung der Lagergutträger (12) in der Übergabeeinheit (34) aufweist, vorzugsweise wobei die Ausrichteinheit dazu ausgebildet ist, die Lagergutträger (12) in ihrer Position relativ zu Haltelementen (36) der Übergabeeinheit (34) auszurichten.
24. Übergabestation (10) nach einem der Aspekte 3 bis 23, wobei die Übergabestation (10) ferner einen Antrieb zum Verfahren der Halteelemente (36) aufweist, wobei der Antrieb ein umlaufendes Zugmittel (38) und/oder vertikale Stangen oder Balken (40) antreibt, an dem/denen die Halteelemente (36) angebracht sind.
25. Übergabestation (10) nach einem der vorhergehenden Aspekte, wobei die Übergabestation (10) ferner eine Energieübertragungseinrichtung aufweist, die dazu ausgebildet ist, Energie zwischen der Übergabestation (10) und anderen Komponenten des Warenlagersystems (20), wie beispielsweise eines Bedienfahrzeugs (18) des Warenlagersystems (20), zu übertragen.
26. Übergabestation (10) nach einem der vorhergehenden Aspekte, wobei die Übergabestation (10) einen verfahrbaren Anschlag (44) aufweist, der
   - dazu ausgebildet ist, einen ankommenden Lagergutträger (12) in einer Einlaufrichtung an einer definierten Übergabeposition zu stoppen und/oder in seiner Position relativ zur Übergabeeinheit auszurichten, und/oder
   - derart verfahrbar ist, dass ankommende Lagergutträger (12) durch die Übergabestation (10) durchführbar sind, ohne von der Übergabeeinheit (34) aufgenommen zu werden.
27. Übergabestation (10) nach einem der Aspekte 2-25, wobei
   - die Halteelemente Sicherungsabschnitte aufweisen, die dazu ausgebildet sind, die gehaltenen Lagergutträger (12) gegen Verdrehen und/oder Verrutschen zu sichern, und/oder
   - die Haltelemente (36) dazu ausgebildet sind, mit einer am Lagergutträger (12) ausgebildeten Haltekontur ineinander zu greifen, um den Lagergutträger (12) zu sichern, vorzugsweise gegen Verschieben und/oder Verdrehen, und die am Lagergutträger (12) ausgebildete Haltekontur vorzugsweise starr und/oder einstückig mit einem Seitenrahmen und/oder mit der Grundfläche des Lagergutträgers (12) ausgebildet und/oder verbunden ist, und/oder
   - die Sicherung ohne bewegliche Elemente am Lagergutträger (12) und/oder der Übergabeeinheit (34) erreicht wird.
28. Übergabestation (10) nach Aspekt 27, wobei die Halteelemente (36) zur Sicherung mit einer ersten Haltekontur der Lagergutträger (12) eingreifen, vorzugsweise in die erste Haltekontur eingreifen.
29. Übergabestation (10) nach Aspekt 28, wobei die erste Haltekontur einstückig an dem jeweiligen Lagergutträger (12) ausgebildet ist und/oder nicht beweglich ist.
30. Warenlagersystem (20) aufweisend:
   - mehrere vertikale Schächte (32), wobei zumindest einer der Schächte (32) zumindest abschnittweise dazu ausgebildet ist, gleichzeitig mehrere voneinander beabstandete Lagergutträger (12), inklusiver etwaiger auf den Lagergutträgern (12) vorhandener Lagergüter (14), übereinander nicht-gestapelt zu halten,
   - mindestens ein Bedienfahrzeug (18), das dazu ausgebildet ist, Lagergutträger (12) in einen Schacht (32) einzulagern und/oder aus einem Schacht (32) auszulagern, vorzugsweise wobei das mindestens eine Bedienfahrzeug (18) ein Mehrfachfahrzeug ist, das dazu ausgebildet ist, gleichzeitig mehrere Lagergutträger (12) in einen Schacht (32) einzulagern und/oder aus einem Schacht (32) auszulagern, und
   - eine Übergabestation (10), vorzugsweise nach einem der vorhergehenden Aspekte, mit einer Übergabeeinheit (34) zur Übergabe von mindestens einem Lagergutträger (12) an das mindestens eine Bedienfahrzeug (18) oder zur Aufnahme von mindestens einem Lagergutträger (12) von dem mindestens einen Bedienfahrzeug (18), wobei die Übergabeeinheit (34) dazu ausgebildet ist, gleichzeitig mehrere voneinander beabstandete Lagergutträger (12), inklusiver etwaiger auf den Lagergutträgern (12) vorhandener Lagergüter (14), übereinander nicht-gestapelt zu halten; wobei
      - das mindestens eine Bedienfahrzeug (18), vorzugsweise eine Aufnahmeeinheit (22) aufweist, die dazu ausgebildet ist:
         - zur Übergabe des mindestens einen Lagergutträgers (12) an die Übergabestation (10) und/oder zur Aufnahme des mindestens einen Lagergutträgers (12) von der Übergabestation (10) vorzugsweise von oben oder unten in die Übergabestation (10) einzufahren, und/oder
         - zur Einlagerung der Lagergutträger (12) in den einen der Schächte (32) und/oder zur Auslagerung der Lagergutträger (12) aus dem einen der Schächte (32) vertikal in dem einen der Schächte (32) zu verfahren,
         und/oder
      - die Übergabeeinheit (34) dazu ausgebildet ist:
         - zur Übergabe des mindestens einen Lagergutträgers (12) an die Aufnahmeeinheit (22) des Bedienfahrzeugs (18) und/oder zur Aufnahme des mindestens einen Lagergutträgers (12) von der Aufnahmeeinheit (22) des Bedienfahrzeugs (18) vorzugsweise von oben oder unten in die Aufnahmeeinheit (22) des Bedienfahrzeugs (18) einzufahren.
31. Warenlagersystem (20) nach Aspekt 30, wobei die Übergabestation (10) dazu ausgebildet ist, gleichzeitig mehrere der Lagergutträger (12) inklusiver etwaiger auf den Lagergutträger (12)n vorhandener Lagergüter übereinander nicht-gestapelt an das mindestens eine Bedienfahrzeug (18) zu übergeben oder von dem mindestens einen Bedienfahrzeug (18) zu übernehmen.
32. Warenlagersystem (20) nach Aspekt 30 oder 31, wobei die Übergabestation (10) außerhalb der Schächte (32) und/oder separat von den Schächten (32) angeordnet ist.
33. Warenlagersystem (20) nach einem der Aspekte 30-32, wobei eine Höhe der Übergabestation (10) maximal 40 %, vorzugsweise maximal 30 %, weiter vorzugsweise maximal 20 %, der Schachthöhe beträgt.
34. Warenlagersystem (20) nach Aspekt 30 oder 31, wobei die Übergabestation (10) in einen Schacht (32) integriert ist und/oder in einem Abschnitt eines Schachts angeordnet ist.
35. Warenlagersystem (20) nach Aspekt 30, 31 oder 34, wobei eine Höhe der Übergabestation (10) mindestens 50 %, vorzugsweise mindestens 80 % der Schachthöhe beträgt.
36. Warenlagersystem (20) nach einem der Aspekte 30-35, wobei ein Schienensystem (30) des Warenlagersystems (20) derart verläuft, dass die Übergabestation (10) durch ein Bedienfahrzeug (18) des Warenlagersystems (20) erreichbar ist.
37. Warenlagersystem (20) nach einem der Aspekte 30-36, wobei das Bedienfahrzeug (18) in Fahrschienen verfahrbar ist, die in Form einer 2D Matrix auf oder unter den Schächten (32) angeordnet sind.
38. Warenlagersystem (20) nach einem der Aspekte 30-37, wobei das Bedienfahrzeug (18) ein Mehrfachfahrzeug ist, das dazu ausgebildet ist, gleichzeitig mehrere voneinander beabstandete und übereinander nicht-gestapelte Lagergutträger (12) der Übergabestation (10) zu übergeben und/oder von der Übergabestation (10) aufzunehmen.
39. Warenlagersystem (20) nach einem der Aspekte 30-38, wobei das Bedienfahrzeug (18) ein Gestell (21) und eine Aufnahmeeinheit (22) aufweist, die aus dem Gestell (21) ausfahrbar und in den Schacht (32) einfahrbar ist, wobei die Aufnahmeeinheit (22) dazu ausgebildet ist, mindestens zwei in der Übergabestation (10) aufgenommene Lagergutträger (12) gleichzeitig nicht-gestapelt übereinander zu halten.
40. Warenlagersystem (20) nach Aspekt 39, wobei die Aufnahmeeinheit (22) Aufnahmeeinheit-Halteelemente (46) aufweist, die in einem Abstand angeordnet sind, der dem Abstand der Halteelemente (36) der Übergabestation (10) entspricht oder ein ganzzahliges Vielfaches davon ist.
41. Warenlagersystem (20) nach Aspekt 40, wobei
   - die Aufnahmeeinheit-Halteelemente (46) Sicherungsabschnitte aufweisen, die dazu ausgebildet sind, die gehaltenen Lagergutträger (12) gegen Verdrehen und/oder Verrutschen zu sichern, und/oder
   - die Aufnahmeeinheit-Haltelemente (46) dazu ausgebildet sind, mit einer am Lagergutträger (12) ausgebildeten Haltekontur ineinander zu greifen, um den Lagergutträger (12) zu sichern, vorzugsweise gegen Verschieben und/oder Verdrehen, und die am Lagergutträger (12) ausgebildete Haltekontur vorzugsweise starr und/oder einstückig mit einem Seitenrahmen und/oder mit der Grundfläche des Lagergutträgers (12) ausgebildet und/oder verbunden ist, und/oder
   - die Sicherung ohne bewegliche Elemente am Lagergutträger (12) und/oder der Aufnahmeeinheit (22) erreicht wird.
42. Warenlagersystem (20) nach Aspekt 41, die Aufnahmeeinheit-Halteelemente (46) zur Sicherung mit einer zweiten Haltekontur der Lagergutträger (12) eingreifen, vorzugsweise in die zweite Haltekontur eingreifen.
43. Warenlagersystem (20) nach Aspekt 42, wobei die zweite Haltekontur einstückig an dem jeweiligen Lagergutträger (12) ausgebildet ist und/oder nicht beweglich ist.
44. Warenlagersystem (20) nach einem der Aspekte 39-43, wobei die Aufnahmeeinheit (22) in die Übergabeeinheit (34) einfahrbar ist, vorzugsweise von oberhalb und/oder unterhalb der Übergabeeinheit (34).
45. Warenlagersystem (20) nach einem der Aspekte 30-44, wobei der Schacht (32) Schacht-Abstützelemente (33) aufweist, wobei ein Abstand der Schacht-Abstützelemente (33) dem Abstand der Halteelemente (36) der Übergabestation (10) und/oder einem Abstand der Aufnahmeeinheit-Halteelemente (46) entspricht oder ein ganzzahliges Vielfaches davon ist.
46. Warenlagersystem (20) nach Aspekt 45, wobei die Schacht-Abstützelemente (33) Sicherungsabschnitte aufweisen, die dazu ausgebildet sind, die gehaltenen Lagergutträger (12) gegen Verdrehen und/oder Verrutschen zu sichern, und/oder
   - die Schacht-Abstützelemente (33) dazu ausgebildet sind, mit einer am Lagergutträger (12) ausgebildeten Haltekontur ineinander zu greifen, um den Lagergutträger (12) zu sichern, vorzugsweise gegen Verschieben und/oder Verdrehen, und die am Lagergutträger (12) ausgebildete Haltekontur vorzugsweise starr und/oder einstückig mit einem Seitenrahmen und/oder mit der Grundfläche des Lagergutträgers (12) ausgebildet und/oder verbunden ist, und/oder
   - die Sicherung ohne bewegliche Elemente am Lagergutträger (12) und/oder Schacht (32) erreicht wird.
47. Warenlagersystem (20) nach Aspekt 46, wobei die Schacht-Abstützelemente (33) zur Sicherung mit der ersten Haltekontur der Lagergutträger (12) oder einer dritten Haltekontur der Lagergutträger (12) eingreifen, vorzugsweise in die erste bzw. dritte Haltekontur eingreifen.
48. Warenlagersystem (20) nach einem der Aspekte38-47, wobei zur gleichzeitigen Übergabe der mehreren Lagergutträger (12) zwischen der Übergabestation (10) und dem Mehrfachfahrzeug keine vertikale Bewegung von den Lagergutträger (12) in der Übergabestation (10) haltenden Halteelementen erfolgt.
49. Warenlagersystem (20) nach einem der Aspekte38-48, wobei die Übergabe der Lagergutträger (12) zwischen dem Bedienfahrzeug (18) und der Übergabestation (10) durch Verdrehen und/oder Verschieben der Lagergutträger (12) erfolgt.
50. Warenlagersystem (20) nach Aspekt 49,
   - wobei die Übergabe der Lagergutträger (12) an das Bedienfahrzeug erfolgt durch (i) Anheben der Lagergutträger (12), vorzugsweise gleichzeitiges Anheben der zur übergebenden Lagergutträger (12), (ii) Verdrehen und/oder Verschieben der Lagergutträger (12), vorzugsweise gleichzeitiges Verdrehen und/oder Verschieben der zu übergebenden Lagergutträger (12), und (iii) vertikales Ausheben oder Ablassen der Lagergutträger (12) aus der Übergabeeinheit, vorzugsweise gleichzeitiges Ausheben oder Ablassen der zur übergebenden Lagergutträger (12) ; und/oder
   - wobei die Übergabe der Lagergutträger (12) von dem Bedienfahrzeug erfolgt durch (i) Einfahren der Lagergutträger (12) in die Übergabeeinheit (34), vorzugsweise gleichzeitiges Einfahren der zur übergebenden Lagergutträger (12), (ii) Verdrehen und/oder Verschieben der Lagergutträger (12), vorzugsweise gleichzeitiges Verdrehen und/oder Verschieben der zu übergebenden Lagergutträger (12), und (iii) Absenken der Lagergutträger (12), vorzugsweise gleichzeitiges Absenken der zur übergebenden Lagergutträger (12).
51. Warenlagersystem (20) nach einem der Aspekte 30 bis 50, wobei der mindestens eine Schacht (32), die Aufnahmeeinheit (22) des mindestens einen Bedienfahrzeugs (18) und die Übergabeeinheit (34) jeweils dazu ausgebildet sind, vorzugsweise gleichzeitig, mehrere voneinander beabstandete und übereinander nicht-gestapelte Lagergutträger (12), deren jeweilige Gesamthöhe inklusive etwaiger darauf beladener Lagergüter (14) verschieden sein kann, zu halten.

## Patentansprüche

1. Warenlagersystem (20) aufweisend:
- mehrere vertikale Schächte (32), wobei zumindest einer der Schächte zumindest abschnittweise dazu ausgebildet ist, gleichzeitig mehrere voneinander beabstandete Lagergutträger (12), inklusiver etwaiger auf den Lagergutträgern (12) vorhandener Lagergüter (14), übereinander nicht-gestapelt zu halten,
- mindestens ein Bedienfahrzeug (18), das dazu ausgebildet ist, Lagergutträger (12) in einen Schacht (32) einzulagern und/oder aus einem Schacht (32) auszulagern, vorzugsweise wobei das mindestens eine Bedienfahrzeug (18) ein Mehrfachbedienfahrzeug ist, das dazu ausgebildet ist, gleichzeitig mehrere voneinander beabstandete und übereinander nicht-gestapelte Lagergutträger (12), inklusiver etwaiger auf den Lagergutträgern (12) vorhandener Lagergüter (14), in einen Schacht (32) einzulagern und/oder aus einem Schacht (32) auszulagern, und
- eine Übergabestation (10) mit einer Übergabeeinheit (34) zur Übergabe von mindestens einem Lagergutträger (12) an das mindestens eine Bedienfahrzeug (18) oder zur Aufnahme von mindestens einem Lagergutträger (12) von dem mindestens einen Bedienfahrzeug (18), wobei die Übergabeeinheit (34) dazu ausgebildet ist, gleichzeitig mehrere voneinander beabstandete Lagergutträger (12), inklusive etwaiger auf den Lagergutträgern (12) vorhandener Lagergüter (14), übereinander nicht-gestapelt zu halten;
- wobei das mindestens eine Bedienfahrzeug (18) eine Aufnahmeeinheit (22) aufweist, die dazu ausgebildet ist, mindestens einen Lagergutträger (12), inklusive etwaiger auf den Lagergutträgern (12) vorhandener Lagergüter (14) an die Übergabestation (10) zu übergeben und/oder mindestens einen Lagergutträger (12), inklusive etwaiger auf den Lagergutträgern (12) vorhandener Lagergüter (14) von der Übergabestation (10) zu übernehmen.

2. Warenlagersystem (20) nach Anspruch 1, wobei die Aufnahmeeinheit (22) dazu ausgebildet ist, zur Übergabe des mindestens einen Lagergutträgers (12) an die Übergabestation (10) und/oder zur Aufnahme des mindestens einen Lagergutträgers (12) von der Übergabestation (10) in die Übergabestation (10) einzufahren.

3. Warenlagersystem (20) nach Anspruch 2, wobei die Aufnahmeeinheit (22) dazu ausgebildet ist, von oben oder von unten in die Übergabestation (10) einzufahren.

4. Warenlagersystem (20) nach einem der vorhergehenden Ansprüche, wobei die Übergabestation (10) dazu ausgebildet ist, gleichzeitig mehrere der Lagergutträger (12) inklusiver etwaiger auf den Lagergutträgern (12) vorhandener Lagergüter (14) übereinander nicht-gestapelt an das mindestens eine Bedienfahrzeug (18) zu übergeben oder von dem mindestens einen Bedienfahrzeug (18) zu übernehmen.

5. Warenlagersystem (20) nach einem der vorhergehenden Ansprüche, wobei die Übergabestation (10) in einen der mehreren Schächte (32) integriert ist und/oder in einem Abschnitt von einem der mehreren Schächte (32) angeordnet ist.

6. Warenlagersystem (20) nach einem der vorhergehenden Ansprüche, wobei die Übergabestation (10) außerhalb und/oder separat von den Schächten (32) angeordnet ist und ein Schienensystem (30) des Warenlagersystems derart verläuft, dass die Übergabestation (10) durch das mindestens eine Bedienfahrzeug (18) erreichbar ist, vorzugsweise wobei das mindestens eine Bedienfahrzeug (18) in Fahrschienen des Schienensystems (30) verfahrbar ist, die in Form einer 2D Matrix auf oder unter den Schächten (32) angeordnet sind.

7. Warenlagersystem (20) nach einem der vorhergehenden Ansprüche, wobei die Übergabeeinheit (34) mehrere Halteelemente (36) aufweist, die in vertikaler Richtung beabstandet angeordnet sind und dazu ausgebildet sind, aufgenommene Lagergutträger (12) voneinander beabstandet und übereinander nicht-gestapelt zu halten.

8. Warenlagersystem (20) nach Anspruch 7, wobei die Halteelemente (36) mit einem vorbestimmten Abstand und/oder mit einem vorbestimmten Rastmaß voneinander beabstandet sind, vorzugsweise wobei der Abstand und/oder das Rastmaß
- einem Abstand und/oder einem Rastmaß von Abstützelementen (33) des Schachts (32), und/oder
- einem Abstand und/oder einem Rastmaß von Halteelementen (46) des Bedienfahrzeugs (18)
entsprechen oder ein ganzzahliges Vielfaches davon ist.

9. Warenlagersystem (20) nach Anspruch 7 oder 8, wobei die Halteelemente (36) in der Übergabeeinheit (34) verfahrbar, vorzugsweise vertikal verfahrbar, vorzugsweise bidirektional nach oben und unten verfahrbar, weiter vorzugsweise schrittweise verfahrbar sind.

10. Warenlagersystem (20) nach einem der Ansprüche 7-9, wobei die Übergabeeinheit (34) ein umlaufendes Zugmittel (38) aufweist, an dem die Halteelemente (36) in vertikal voneinander beabstandeten Positionen angebracht sind, vorzugsweise wobei das umlaufende Zugmittel (38) als umlaufender Zahnriemen, umlaufendes Seil, umlaufende Kette oder umlaufendes Band ausgebildet ist und/oder derart antreibbar ist, dass die Halteelemente (36) in vertikaler Richtung, vorzugsweise schrittweise, nach oben oder unten innerhalb der Übergabeeinheit (34) verfahrbar sind.

11. Warenlagersystem (20) nach einem der Ansprüche 7-9, wobei die Übergabeeinheit (34) mindestens zwei, vorzugsweise vier, vorzugsweise sich vertikal erstreckende, Stangen oder Balken (40) aufweist, an denen jeweils die Halteelemente (36) in vertikal voneinander beabstandeten Positionen angebracht sind, wobei die Stangen oder Balken (40) derart verfahrbar, vorzugsweise vertikal verfahrbar, sind, dass die Halteelemente (36) in vertikaler Richtung, vorzugsweise schrittweise, nach oben oder unten innerhalb der Übergabeeinheit (34) verfahrbar sind.

12. Warenlagersystem (20) nach einem der vorhergehenden Ansprüche, wobei die Übergabe der Lagergutträger (12) zwischen dem mindestens einen Bedienfahrzeug (18) und der Übergabestation (10) durch Verdrehen und/oder Verschieben der Lagergutträger (12) erfolgt.

13. Warenlagersystem (20) nach Anspruch 12,
- wobei die Übergabe der Lagergutträger (12) an das mindestens eine Bedienfahrzeug (18) erfolgt durch (i) Anheben der Lagergutträger (12), vorzugsweise gleichzeitiges Anheben der zur übergebenden Lagergutträger (12), (ii) Verdrehen und/oder Verschieben der Lagergutträger (12), vorzugsweise gleichzeitiges Verdrehen und/oder Verschieben der zu übergebenden Lagergutträger (12), und (iii) vertikales Ausheben oder Ablassen der Lagergutträger (12) aus der Übergabeeinheit (34), vorzugsweise gleichzeitiges Ausheben oder Ablassen der zur übergebenden Lagergutträger (12); und/oder
- wobei die Übergabe der Lagergutträger (12) von dem Bedienfahrzeug (18) erfolgt durch (i) Einfahren der Lagergutträger (12) in die Übergabeeinheit (34), vorzugsweise gleichzeitiges Einfahren der zu übergebenden Lagergutträger (12), (ii) Verdrehen und/oder Verschieben der Lagergutträger (12), vorzugsweise gleichzeitiges Verdrehen und/oder Verschieben der zu übergebenden Lagergutträger (12), und (iii) Absenken der Lagergutträger (12), vorzugsweise gleichzeitiges Absenken der zur übergebenden Lagergutträger (12).

14. Warenlagersystem (20) nach einem der Ansprüche 7-13, wobei die Übergabe des mindestens einen Lagergutträgers (12), vorzugsweise die gleichzeitige Übergabe von mehreren Lagergutträgern (12), ohne vertikale Bewegung der Halteelemente (36) der Übergabestation (10) erfolgt.

15. Warenlagersystem (20) nach einem der Ansprüche 7-14, wobei das mindestens eine Bedienfahrzeug (18) ein Mehrfachfahrzeug ist, das dazu ausgebildet ist, gleichzeitig mehrere voneinander beabstandete und übereinander nicht-gestapelte Lagergutträger (12) der Übergabestation (10) zu übergeben und/oder von der Übergabestation (10) aufzunehmen und wobei die Aufnahmeeinheit (22) des Mehrfachfahrzeugs Aufnahmeeinheit-Halteelemente (46) aufweist, die in einem vertikalen Abstand angeordnet sind, der einem vertikalen Abstand der Halteelemente (36) der Übergabestation (10) und vorzugsweise einem vertikalen Abstand von Abstützelementen (33) der Schächte (32) entspricht oder ein ganzzahliges Vielfaches davon ist.

16. Warenlagersystem (20) nach einem der Ansprüche 7-15, wobei
- Aufnahmeeinheit-Halteelemente (46) des mindestens einen Bedienfahrzeugs (18), und/oder Abstützelemente (33) der mehreren Schächte (32) und/oder die Halteelemente (36) der Übergabeeinheit (34) dazu ausgebildet sind, in eine an einem jeweiligen Lagergutträger (12) ausgebildete Haltekontur zu greifen, um den Lagergutträger (12) zu sichern, vorzugsweise gegen Verschieben und/oder Verdrehen, vorzugsweise wobei
- die am Lagergutträger (12) ausgebildete Haltekontur starr und/oder einstückig mit einem Seitenrahmen und/oder mit der Grundfläche des Lagergutträgers (12) ausgebildet und/oder verbunden ist, und/oder
- die Sicherung ohne bewegliche Elemente am Lagergutträger (12) und/oder der Aufnahmeeinheit (22) und/oder der Schächte (32) erreicht wird.

17. Warenlagersystem (20) nach einem der Ansprüche 7-16, wobei die Übergabestation (10)
- eine Sensorik (42) aufweist, welche dazu ausgebildet ist, eine Gesamthöhe des zu übernehmenden Lagergutträgers (12) inklusive etwaiger darauf befindlicher Lagergüter (14) und/oder eines zuletzt übernommenen Lagergutträgers (12) inklusive etwaiger darauf befindlicher Lagergüter (14) zu erfassen und/oder
- eine Kommunikationsverbindung zu einem Datenspeicher aufweist, in dem eine Gesamthöhe der Lagergutträger (12) inklusive etwaiger darauf befindlicher Lagergüter (14) gespeichert ist, und
die Übergabestation (10) eine Steuerung aufweist, die dazu ausgebildet ist, die Halteelemente (36) in Abhängigkeit der ermittelten und/oder gespeicherten Gesamthöhe vertikal zu verfahren, vorzugsweise derart, dass
- mehrere Lagergutträger (12) inklusive ihrer Lagergüter (14) sukzessive von einer Verarbeitungseinheit (17) aufgenommen und anschließend gleichzeitig gehalten werden können, ohne dass sich die Lagergutträger (12) inklusive ihrer Lagergüter (14) aufeinander abstützen und/oder einander berühren; und/oder
- mehrere Lagergutträger (12) inklusive ihrer Lagergüter (14) gleichzeitig gehalten und anschließend sukzessive auf eine Übergabeeinheit (34) abgegeben werden können, ohne dass sich die Lagergutträger (12) inklusive ihrer Lagergüter (14) aufeinander abstützen und/oder einander berühren.
